(19) Europäisches Patentamt
European Patent Office
Office européen des brevets

(11) EP 4 501 441 A1

(12) **EUROPEAN PATENT APPLICATION**
published in accordance with Art. 153(4) EPC

(43) Date of publication:
**05.02.2025 Bulletin 2025/06**

(21) Application number: **23775124.3**

(22) Date of filing: **27.03.2023**

(51) International Patent Classification (IPC):
***B01D 67/00*** (2006.01) ***B01D 69/00*** (2006.01)
***B01D 69/02*** (2006.01) ***B01D 69/10*** (2006.01)
***B01D 69/12*** (2006.01) ***B01D 71/02*** (2006.01)
***B01D 71/06*** (2006.01) ***B32B 5/18*** (2006.01)
***B32B 27/20*** (2006.01) ***C01B 39/40*** (2006.01)
***C01B 39/46*** (2006.01) ***C01B 39/48*** (2006.01)
***C08J 5/22*** (2006.01) ***B01D 53/22*** (2006.01)

(52) Cooperative Patent Classification (CPC):
**B01D 53/22; B01D 67/00; B01D 69/00; B01D 69/02; B01D 69/10; B01D 69/12; B01D 71/02; B01D 71/06; B32B 5/18; B32B 27/20; C01B 39/40; C01B 39/46; C01B 39/48; C08J 5/22**

(86) International application number:
**PCT/JP2023/012193**

(87) International publication number:
**WO 2023/182531 (28.09.2023 Gazette 2023/39)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority:
**25.03.2022 JP 2022050840**
**25.03.2022 JP 2022050841**
**25.03.2022 JP 2022050842**
**22.09.2022 JP 2022151714**
**22.09.2022 JP 2022151715**
**22.09.2022 JP 2022151716**

(71) Applicant: **Mitsubishi Chemical Corporation**
**Tokyo 100-8251 (JP)**

(72) Inventors:
- **YAMADA, Miki**
**Tokyo 100-8251 (JP)**
- **TAKEWAKI, Takahiko**
**Tokyo 100-8251 (JP)**
- **ITO, Kanako**
**Tokyo 100-8251 (JP)**
- **NAKANO MATSUNAGA, Chie**
**Tokyo 100-8251 (JP)**
- **MORIYA, Saki**
**Tokyo 100-8251 (JP)**
- **TAKATANI, Kouhei**
**Tokyo 100-8251 (JP)**
- **KOZAI, Hiroe**
**Tokyo 100-8251 (JP)**
- **NISHIYAMA, Takaharu**
**Tokyo 100-8251 (JP)**

(74) Representative: **Hoffmann Eitle**
**Patent- und Rechtsanwälte PartmbB**
**Arabellastraße 30**
**81925 München (DE)**

(54) **ORGANIC-INORGANIC HYBRID MEMBRANE, ORGANIC-INORGANIC HYBRID MEMBRANE COMPOSITE, GAS SEPARATION AND CONCENTRATION METHOD, GAS SEPARATION MEMBRANE MODULE, METHOD FOR PRODUCING ORGANIC-INORGANIC HYBRID MEMBRANE, AND METHOD FOR PRODUCING ORGANIC-INORGANIC HYBRID MEMBRANE COMPOSITE**

(57) An object of an aspect of the present invention is to provide a new organic-inorganic hybrid membrane composite excellent in permeance and a relevant technique thereof. An organic-inorganic hybrid membrane composite in an aspect of the present invention includes a porous support layer and an organic-inorganic hybrid membrane formed on the porous support layer, an air permeation amount is 10000 L/($m^2$·h) or less, the organic-inorganic hybrid membrane contains a matrix polymer and a gas-selective inorganic filler, a contained amount of the gas-selective inorganic filler relative to the organic-inorganic hybrid membrane is 35% by mass or more, the gas-selective inorganic filler contains zeolite, a framework density in a case where all T elements of the zeolite are silicon is 16.0 T/1000 Å$^3$ or less, and a membrane thickness of the organic-inorganic hybrid membrane is 0.05 pm or more and 50 pm or less.

FIG. 1

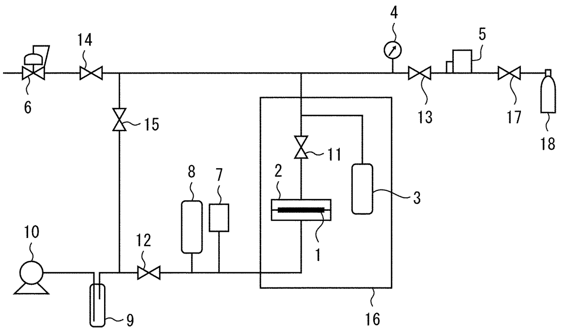

**Description**

Technical Field

The present invention relates to an organic-inorganic hybrid membrane, an organic-inorganic hybrid membrane composite, a gas separation-concentration method, a gas separation membrane module, a method for producing an organic-inorganic hybrid membrane, and a method for producing an organic-inorganic hybrid membrane composite.

Background Art

Gas separation and purification methods include a membrane separation method, an adsorption separation method, an absorption separation method, and a cryogenic separation method. The membrane separation method is a method in which pressure is used as driving force and separation is carried out based on a velocity difference between gases which permeate the membrane. Gas separation is hardly accompanied by a phase change midway through separation. Therefore, energy expenditure is smaller than that of other gas separation and purification methods. Recently, global climate change calls for reduction of greenhouse gases. Under the circumstances, the membrane separation method taking less energy expenditure is gaining attention as an alternative to a conventional separation method and as a means for separation-recovery of greenhouse gases.

As a membrane for gas separation, there are a polymeric membrane that has been proposed since the 1970s, a zeolite membrane that is prepared on a ceramic support, and an organic-inorganic hybrid membrane called a mixed matrix membrane (hereinafter referred to as MMM) in which an inorganic filler is introduced into a polymeric membrane.

For example, as a membrane that resolves shortcomings of a polymeric membrane and an inorganic membrane and that has advantages in combination, attention has been paid to MMM, i.e., an organic-inorganic hybrid membrane which is formed by introducing an inorganic filler (such as zeolite) having gas separation ability into a matrix polymer (Non-patent Literature 1).

In the organic-inorganic hybrid membrane, it seems that, as a mixing amount of an inorganic filler which has higher separation and permeation performance than the matrix polymer increases, gas separation performance closer to the inorganic filler is exhibited. However, in practice, many of cases as follows have been reported. That is, in a case where a proportion of an inorganic filler (such as zeolite) is equal to or greater than a predetermined proportion, voids are generated between a matrix polymer and the inorganic filler. A gas passes through the voids and separation performance of the inorganic filler is no longer used, and thus performance is reduced on the contrary (Non-patent Literature 1). In order to inhibit void generation between the inorganic filler and the matrix polymer, many attempts have been carried out in which the inorganic filler is modified so as to improve affinity for the matrix polymer. However, an effect thereof is limited.

Meanwhile, stress applied to an interface during membrane formation is considered as a cause of voids which are generated between a matrix polymer and an inorganic filler in an organic-inorganic hybrid membrane (Non-patent Literature 2).

Citation List

[Non-patent Literature]

[Non-patent Literature 1]
Progress in Materials Science 102 (2019) 222-295.
[Non-patent Literature 2]
Journal of Molecular Structure 739 (2005) 87-98.

Summary of Invention

Technical Problem

However, from the viewpoint of further improving gas permeance, there is room for improvement in the conventional organic-inorganic hybrid membrane. An aspect of the present invention is accomplished in view of such circumstances, and an object thereof is to provide a new organic-inorganic hybrid membrane composite which is excellent in permeance and a relevant technique thereof.

Moreover, from the viewpoint of further improving gas permeation performance and gas separation performance, there is room for improvement in the conventional organic-inorganic hybrid membrane. An aspect of the present invention

is accomplished in view of such circumstances, and an object thereof is to provide a new organic-inorganic hybrid membrane having satisfactory gas permeation performance and gas separation performance, and a relevant technique thereof.

Moreover, from the viewpoint of further improving separation performance and permeation performance, there is room for improvement in the conventional organic-inorganic hybrid membrane. An aspect of the present invention is accomplished in view of such circumstances, and an object thereof is to provide a new method for producing an organic-inorganic hybrid membrane and an organic-inorganic hybrid membrane composite each having an excellent filling factor of an inorganic filler.

Solution to Problem

The inventors of the present invention have diligently studied in order to attain the above objects. As a result, the inventors have found that, in a case where an organic-inorganic hybrid membrane containing a predetermined proportion or more of a certain type of inorganic filler relative to a polymer having certain physical properties is formed into a thin membrane, and an air permeation amount of an organic-inorganic hybrid composite is set to a specific value, it is possible to obtain an organic-inorganic hybrid composite having excellent permeance. Based on this finding, the present invention has been accomplished.

That is, a gist of an aspect of the present invention resides in <1> through <8> below.

<1> An organic-inorganic hybrid membrane composite including a porous support layer and an organic-inorganic hybrid membrane which is formed on the porous support layer, the organic-inorganic hybrid membrane composite having an air permeation amount of 10000 L/($m^2 \cdot h$) or less, the organic-inorganic hybrid membrane containing a matrix polymer and a gas-selective inorganic filler, a contained amount of the gas-selective inorganic filler relative to the organic-inorganic hybrid membrane being 35% by mass or more, the gas-selective inorganic filler containing zeolite, a framework density in a case where all T elements of the zeolite are silicon being 16.0 T/1000 $Å^3$ or less, and a membrane thickness of the organic-inorganic hybrid membrane being 0.05 pm or more and 50 pm or less.

<2> The organic-inorganic hybrid membrane composite described in < 1>, in which: an $SiO_2/Al_2O_3$ molar ratio of the zeolite is 7 or more.

<3> An organic-inorganic hybrid membrane composite including a porous support layer and an organic-inorganic hybrid membrane which is formed on the porous support layer, the organic-inorganic hybrid membrane composite having an air permeation amount of 10000 L/ ($m^2 \cdot h$) or less, the organic-inorganic hybrid membrane containing a matrix polymer and a gas-selective inorganic filler, a contained amount of the gas-selective inorganic filler relative to the organic-inorganic hybrid membrane being 35% by mass or more, the gas-selective inorganic filler containing zeolite, an $SiO_2/Al_2O_3$ molar ratio of the zeolite being 7 or more, and a membrane thickness of the organic-inorganic hybrid membrane being 0.05 pm or more and 50 pm or less.

<4> The organic-inorganic hybrid membrane composite described in any one of <1> through <3>, further including: a gutter layer which is disposed between the organic-inorganic hybrid membrane and the porous support layer.

<5> A gas separation-concentration method which uses the organic-inorganic hybrid membrane composite described in any one of <1> through <4>.

<6> A gas separation membrane module which uses the organic-inorganic hybrid membrane composite described in any one of <1> through <4>.

<7> A method for producing an organic-inorganic hybrid membrane composite described in any one of < 1> through <4>, the method including: a casting step of applying, to the porous support layer, a dispersion liquid containing the matrix polymer and the gas-selective inorganic filler; and a curing step of curing the matrix polymer to form the organic-inorganic hybrid membrane on the porous support layer.

<8> The method described in <7>, further including: a gutter layer forming step of forming a gutter layer on the porous support layer prior to the curing step.

<9> The method described in <7> or <8>, further including: a kneading step of combining the matrix polymer and the gas-selective inorganic filler in a viscous condition prior to the curing step.

Moreover, the inventors of the present invention have diligently studied in order to attain the above objects. As a result, the inventors have found that an organic-inorganic hybrid membrane that contains a predetermined proportion or more of zeolite particles having a specific shape relative to a polymer having certain physical properties has satisfactory gas permeation performance and gas separation performance. Based on this finding, the present invention has been accomplished.

That is, a gist of an aspect of the present invention resides in <10> through <25> below.

<10> An organic-inorganic hybrid membrane containing a matrix polymer and a gas-selective inorganic filler, the inorganic filler containing zeolite, the zeolite including zeolite particles having an average circularity coefficient of 0.80 or

more, a contained amount of the zeolite particles being 35% by mass or more, and an air permeation amount of the organic-inorganic hybrid membrane being 10000 [$L/m^2/h$] or less.

<11> The organic-inorganic hybrid membrane described in <10>, in which: the inorganic filler has a particle size distribution having at least two peaks; and an average circularity coefficient of zeolite particles which constitute a peak of a greater particle diameter among the two peaks is 0.80 or more.

<12> The organic-inorganic hybrid membrane described in <11>, in which: the peak of the greater particle diameter among the two peaks is between particle diameters of 1.5 pm or more and 20 pm or less; and a peak of a smaller particle diameter among the two peaks is between particle diameters of 0.1 pm or more and 1 pm or less.

<13> The organic-inorganic hybrid membrane described in < 11> or < 12>, in which: in a case where a mass of zeolite particles constituting a peak of a smaller particle diameter is set to 1, a mass of zeolite particles constituting the peak of the greater particle diameter among the two peaks is 3 or more.

<14> The organic-inorganic hybrid membrane described in claim any one of <11> through <13>, in which: in a case where a particle diameter of a peak of a smaller particle diameter is set to 1, a particle diameter of the peak of the greater particle diameter is 1.5 or more.

<15> The organic-inorganic hybrid membrane described in any one of < 10> through < 14>, in which: the matrix polymer has a glass transition temperature of 15°C or less and has a $CO_2$ permeability of 200 Barrer or more at 35°C.

<16> An organic-inorganic hybrid membrane composite including a porous support layer and an organic-inorganic hybrid membrane formed on the porous support layer, the organic-inorganic hybrid membrane composite having an air permeation amount of 10000 [$L/m^2/h$] or less, the organic-inorganic hybrid membrane containing a matrix polymer and a gas-selective inorganic filler, the inorganic filler containing zeolite, the zeolite including zeolite particles having an average circularity coefficient of 0.80 or more, and a contained amount of the zeolite particles in the organic-inorganic hybrid membrane being 35% by mass or more.

<17> The organic-inorganic hybrid membrane composite described in <16>, in which: the inorganic filler has a particle size distribution having at least two peaks; and an average circularity coefficient of zeolite particles which constitute a peak of a greater particle diameter among the two peaks is 0.80 or more.

<18> A gas separation-concentration method which uses an organic-inorganic hybrid membrane described in any one of < 10> through < 15> or an organic-inorganic hybrid membrane composite described in claim < 16> or <17>.

<19> A gas separation membrane module which uses an organic-inorganic hybrid membrane described in any one of <10> through <15> or an organic-inorganic hybrid membrane composite described in claim <16> or <17>.

<20> A method for producing an organic-inorganic hybrid membrane described in any one of <10> through <15>, the method including: a curing step of curing the matrix polymer while pressurizing a dispersion liquid containing the matrix polymer and the inorganic filler.

<21> The method described in <20>, in which: in the curing step, pressurization is carried out while warming.

<22> The method described in <20> or <21>, in which: as the inorganic filler, two types of zeolite particles having different average particle diameters are used; and an average circularity coefficient of zeolite particles having a greater average particle diameter among the two types of zeolite particles is 0.80 or more.

<23> The method described in <22>, in which: in a case where a mass of zeolite particles having a smaller average particle diameter is set to 1, a mass of the zeolite particles having the greater average particle diameter among the two types of zeolite particles is 3 or more.

<24> The method described in <22> or <23>, in which: in a case where a smaller average particle diameter is set to 1, the greater average particle diameter is 1.5 or more.

<25> The method described in any one of <20> through <24>, further including: a kneading step of combining the matrix polymer and the inorganic filler in a viscous condition.

Moreover, the inventors of the present invention have diligently studied to attain the above objects. As a result, the inventors have found that, by combining a certain type of inorganic filler with a polymer in a viscous condition, it is possible to realize a new method for producing an organic-inorganic hybrid membrane having an excellent filling factor of the inorganic filler. Based on this finding, the present invention has been accomplished.

That is, a gist of an aspect of the present invention resides in <26> through <33> below.

<26> A method for producing an organic-inorganic hybrid membrane, the method including: a kneading step of combining a matrix polymer and a gas-selective inorganic filler in a viscous condition.

<27> The method described in <26>, further including: a curing step of curing the matrix polymer under pressurization.

<28> The method described in <27>, in which: the pressurization in the curing step is carried out while heating.

<29> The method described in any one of <26> through <28>, in which: by the kneading step, a mixture is obtained which has a viscosity of 30 Pa·s or more and 500 Pa·s or less.

<30> The method described in any one of <26> through <29>, in which: the matrix polymer has a glass transition temperature of 15°C or less and has a $CO_2$ permeability of 200 Barrer or more at 35°C.

<31> The method described in any one of <26> through <30>, in which: the inorganic filler contains at least

zeolite.

<32> The method described in <31>, in which: an $SiO_2/Al_2O_3$ molar ratio of the zeolite is 7 or more.

Advantageous Effects of Invention

According to an aspect of the present invention, it is possible to provide a new organic-inorganic hybrid membrane composite which is excellent in permeance and a relevant technique thereof.

According to an aspect of the present invention, it is possible to provide an organic-inorganic hybrid gas separation membrane having both a high gas permeability and a high gas separation factor, and a relevant technique thereof.

According to an aspect of the present invention, it is possible to provide a new method for producing an organic-inorganic hybrid membrane having an excellent filling factor of an inorganic filler.

Brief Description of Drawings

Fig. 1 is a schematic diagram illustrating a device used in gas separation in Examples.
Fig. 2 is a schematic diagram illustrating a device used in a mixed gas permeation-separation test in Examples.

Description of Embodiments

Hereinafter, an embodiment of the present invention will be described in further detail. Descriptions of constituent features described below are an example of an aspect of the present invention. The present invention is not limited to the content thereof, and can be implemented in various alterations within the scope of the gist thereof. In this specification, a rubber and a rubber are synonymous. For a measurement device, a detector, and software described in this specification, other models and/or versions that are capable of equivalent measurement and processing may be used instead.

<First aspect>

As a first aspect of the present invention, a new organic-inorganic hybrid membrane composite which is excellent in permeance and a relevant technique thereof are described below.

<Organic-inorganic hybrid membrane composite>

An organic-inorganic hybrid membrane composite in accordance with an aspect of the present invention includes a porous support layer and an organic-inorganic hybrid membrane which is formed on the porous support layer, the organic-inorganic hybrid membrane composite has an air permeation amount of 10000 L/($m^2$·h) or less, the organic-inorganic hybrid membrane contains a matrix polymer and a gas-selective inorganic filler, a contained amount of the gas-selective inorganic filler relative to the organic-inorganic hybrid membrane is 35% by mass or more, the gas-selective inorganic filler contains zeolite, a framework density in a case where all T elements of the zeolite are silicon is 16.0 T/1000 $Å^3$ or less, and a membrane thickness of the organic-inorganic hybrid membrane is 0.05 pm or more and 50 pm or less.

An organic-inorganic hybrid membrane composite in accordance with another aspect of the present invention includes a porous support layer and an organic-inorganic hybrid membrane which is formed on the porous support layer, the organic-inorganic hybrid membrane composite has an air permeation amount of 10000 L/($m^2$·h) or less, the organic-inorganic hybrid membrane contains a matrix polymer and a gas-selective inorganic filler, a contained amount of the gas-selective inorganic filler relative to the organic-inorganic hybrid membrane is 35% by mass or more, the gas-selective inorganic filler contains zeolite, an $SiO_2/Al_2O_3$ molar ratio of the zeolite is 7 or more, and a membrane thickness of the organic-inorganic hybrid membrane is 0.05 pm or more and 50 pm or less.

According to these configurations, the organic-inorganic hybrid membrane composite in accordance with an aspect of the present invention is excellent in permeance. The organic-inorganic hybrid membrane composite in accordance with an aspect of the present invention includes an organic-inorganic hybrid membrane having a smaller membrane thickness. The organic-inorganic hybrid membrane has no defects or reduced defects, and therefore an air permeation amount is not excessively large. Thus, the organic-inorganic hybrid membrane can be suitably used as a separation membrane. Such an organic-inorganic hybrid membrane having a smaller membrane thickness and having no defects or reduced defects can be realized by an inorganic filler, a matrix polymer, a porous support layer, and the like as specified by the above described configurations.

In an aspect of the present invention, the organic-inorganic hybrid membrane refers to a gas separation layer and

does not include a support layer, a gutter layer, a protective layer, and the like.

A gutter layer may be provided between the porous support layer and the organic-inorganic hybrid membrane. A protective layer may be provided on a surface of the organic-inorganic hybrid membrane. A composite including a porous support layer and an organic-inorganic hybrid membrane formed on the porous support layer, and a composite further including, if any, a gutter layer and a protective layer are collectively referred to as an organic-inorganic hybrid membrane composite.

Performance of the organic-inorganic hybrid membrane composite is expressed by permeation performance of the composite and separation performance of the composite.

The permeation performance of the organic-inorganic hybrid membrane composite is expressed by a gas permeability (hereinafter sometimes referred to as a permeability) or gas permeance (hereinafter sometimes referred to as permeance) of the organic-inorganic hybrid membrane composite.

[Permeability]

A permeability $P_A$ [Barrer] = $P_A \times$ 10-10 [$cm^3 \cdot cm/(cm^2 \cdot s \cdot cmHg)$] of a gas A is obtained by (i) dividing a permeation amount per unit area at the time when the gas A permeates a composite by a difference between a supply pressure and a permeation pressure, and (ii) multiplying a membrane thickness of a part obtained by removing a porous support layer from an organic-inorganic hybrid membrane composite (hereinafter, the part obtained by removing the porous support layer from the organic-inorganic hybrid membrane composite is sometimes referred to as a separation relevant layer). The gas permeability $P_A$ is expressed by a formula (1) below.

$$(1):\ P_A \times 10^{-10} = N_A l/(p_2 - p_1)$$

where

$N_A$ is a permeation flux (obtained by dividing a permeation amount per unit time by a membrane area of a composite) [$cm^3$ (STP)/($cm^2 \cdot s$)] in a steady state at the time when the gas A permeates the composite,
1 is a membrane thickness [cm] of a part (i.e., a separation relevant layer) obtained by removing the porous support layer from the organic-inorganic hybrid membrane composite,
$p_1$ is a partial pressure [cmHg] of the gas A on the permeation side, and
$p_2$ is a partial pressure [cmHg] of the gas A on the supply side.

A preferable range of the $CO_2$ permeability exhibited by the organic-inorganic hybrid membrane composite in accordance with an aspect of the present invention is typically 1000 Barrer or more, preferably 3000 Barrer or more, further preferably 5000 Barrer or more, particularly preferably 7000 Barrer or more, most preferably 10000 Barrer or more. An upper limit thereof is not particularly limited and is typically 100000000 Barrer or less. In a case where the gas permeability is within the above range, a gas processing amount by the organic-inorganic hybrid membrane composite is sufficiently achieved, and such an organic-inorganic hybrid membrane composite is usable in an actual process.

[Permeance]

Gas permeance $R_A$ [$mol/(m^2 \cdot s \cdot Pa)$] of a gas A is obtained by dividing a permeation amount per unit area at the time when the gas A permeates a composite by a difference between a supply pressure and a permeation pressure. The permeance $R_A$ is expressed by a formula (2) below.

$$(2):\ R_A = n_A/(p_2' - p_1')$$

where

$n_A$ is a permeation flux (obtained by dividing a permeation amount per unit time by a membrane area of a composite) [$mol/(m^2 \cdot s)$] in a steady state at the time when the gas A permeates the composite,
$p_1'$ is a partial pressure [Pa] of the gas A on the permeation side, and
$p_2'$ is a partial pressure [Pa] of the gas A on the supply side.

The permeance can also be expressed with the unit [GPU]. In this specification, 1 GPU is $3.35 \times 10^{-10}$ $mol/(m^2 \cdot s \cdot Pa)$.

A preferable range of the $CO_2$ permeance exhibited by the organic-inorganic hybrid membrane composite in

accordance with an aspect of the present invention is typically 50 GPU or more, preferably 100 GPU or more, more preferably 200 GPU or more, further preferably 300 GPU or more, particularly preferably 400 GPU or more. An upper limit thereof is not particularly limited and is typically 100000 GPU or less, preferably 50000 GPU or less, more preferably 10000 GPU or less, further preferably 6000 GPU or less. In a case where the $CO_2$ permeance is within the above range, a gas processing amount by the organic-inorganic hybrid membrane composite is sufficiently achieved, and such an organic-inorganic hybrid membrane composite is usable in an actual process.

[Separation factor]

A separation factor $\alpha_{AB}$ of a gas A to a gas B is expressed by a formula (3) below while using a permeability $P_A$ of the gas A and a permeability $P_B$ of the gas B or permeance $R_A$ of the gas A and permeance $R_B$ of the gas B.

$$(3):\ \alpha_{AB} = P_A/P_B = R_A/R_B$$

A preferable range of the separation factor exhibited by the organic-inorganic hybrid membrane composite in accordance with an aspect of the present invention is, for a $CO_2/CH_4$ separation factor, for example, typically 5 or more, preferably 7 or more, more preferably 10 or more, further preferably 14 or more, particularly preferably 17 or more, most preferably 20 or more. An upper limit thereof is not particularly limited and is typically 1000 or less. In a case where the separation factor is within the above range, a gas that has not been separated and enters the permeation side is reduced in gas separation using the organic-inorganic hybrid membrane composite, and it is possible to efficiently carry out separation.

A preferable range of the separation factor exhibited by the organic-inorganic hybrid membrane composite in accordance with an aspect of the present invention is, for a $CO_2/N_2$ separation factor, for example, typically 11 or more, preferably 13 or more, more preferably 15 or more, further preferably 20 or more, particularly preferably 25 or more, most preferably 30 or more. An upper limit thereof is not particularly limited and is typically 300 or less, preferably 100 or less, more preferably 70 or less. In a case where the separation factor is within the above range, a gas that has not been separated and enters the permeation side is reduced in gas separation using the organic-inorganic hybrid membrane composite, and it is possible to efficiently carry out separation.

The permeability, the permeance, and the separation factor are calculated by measuring a steady-state gas permeation flux of a composite by a constant volume/valuable pressure method (Journal of Polymer Science: Part B: Polymer Physics, Vol. 38, 2051-2062 (2000)) using a single-component gas or a mixed gas.

[Air permeation amount]

An air permeation amount of the organic-inorganic hybrid membrane composite in accordance with an aspect of the present invention is 10000 L/($m^2$·h) or less. In a case where the air permeation amount is within the above range, the organic-inorganic hybrid membrane composite has no defects or reduced defects, and therefore can be suitably used as a separation membrane. From a similar viewpoint, an air permeation amount of the organic-inorganic hybrid membrane composite is preferably 5000 L/($m^2$·h) or less, more preferably 2000 L/($m^2$·h) or less, further preferably 1000 L/($m^2$·h) or less, particularly preferably 800 L/($m^2$·h) or less, further preferably 650 L/($m^2$·h) or less, most preferably 350 L/($m^2$·h) or less. The permeation amount is preferably 0.0 L/($m^2$·h) or more, and may be, for example, 20 L/($m^2$·h) or more, for example, 50 L/($m^2$·h) or more. In a case where the air permeation amount is within the above range, a defect or a through hole is not present or influence thereof is sufficiently small. Therefore, it is possible to exhibit high separation performance.

Here, the air permeation amount is a permeation amount of air [unit: L/($m^2$·h)] (0°C, equivalent to 1 atmospheric pressure) obtained in a case where, as detailed in Examples, the organic-inorganic hybrid membrane composite set in a module is placed under atmospheric pressure, and one side of the organic-inorganic hybrid membrane composite is connected to a vacuum line at 5 kPa.

The air permeation amount can be adjusted by adjusting, for example, a type of the matrix polymer, a membrane thickness of the organic-inorganic hybrid membrane, a contained amount of the inorganic filler in the organic-inorganic hybrid membrane, and the like.

[Bending-unbending test]

For the organic-inorganic hybrid membrane composite in accordance with an aspect of the present invention, in a case where at least one of values of a permeability and permeance after a bending-unbending test (in which the composite is bent at 180° once along a curved surface having a bending radius (radius of curvature) of 3 mm and is then unbent (returned) substantially to its original shape) is compared with a value before bending, an absolute value of a rate of change

(which is an absolute value obtained as follows: (value before bending - value after bending-unbending test)/value before bending) is preferably 30% or less, more preferably 25% or less, preferably 20% or less, more preferably 10% or less, further preferably 5% or less, particularly preferably 3% or less, most preferably 2% or less. In a case where a value of a separation factor after the bending-unbending test is compared with a value before bending, a rate of change ((value before bending - value after bending-unbending test)/value before bending) is preferably 20% or less, further preferably 10% or less, particularly preferably 5% or less, most preferably 3% or less. In the bending-unbending test, the temperature is room temperature (15°C or more and 35°C or less). The organic-inorganic hybrid membrane may be kept at a state of being bent at 180° (where two regions of the organic-inorganic hybrid membrane composite obtained by division by the bending extend in parallel with each other) for 5 seconds or more and 10 seconds or less. In the bending-unbending test, a time taken from the start of bending to the completion of bending at 180° is within 10 seconds, and a time taken to unbend (return) the composite substantially to its original shape is within 10 seconds. In the bending-unbending test, the bending at 180° along the aspect having a bending radius of 3 mm may be achieved by, for example, winding the organic-inorganic hybrid membrane composite 180° around a cylindrical tube having a diameter of 6 mm. In the bending-unbending test, a part of the organic-inorganic hybrid membrane composite where a gas permeates in a permeation test is bent along the curved surface. The substantially original shape refers to a state in which the composite has visually returned to the original shape. In a case where the organic-inorganic hybrid membrane composite in accordance with an aspect of the present invention satisfies the foregoing performance, the organic-inorganic hybrid membrane composite can be used while being bent if necessary. As such, the organic-inorganic hybrid membrane composite has excellent processability, and can be processed into a spiral type module or a pleats type module without generating a crack or a pinhole in the membrane. In a case where the foregoing performance is satisfied, it means that a crack or a pinhole is not generated in the membrane even if the organic-inorganic hybrid membrane composite is bent at a high curvature. Therefore, membrane formation in the form of hollow fiber can be carried out without generating a crack or a pinhole in the composite.

[Membrane thickness]

In the organic-inorganic hybrid membrane composite in accordance with an aspect of the present invention, a membrane thickness of the organic-inorganic hybrid membrane is typically 0.05 pm or more, preferably 0.1 pm or more, more preferably 1 pm or more, further preferably 2 pm or more, typically 100 pm or less, preferably 50 pm or less, more preferably 30 pm or less, further preferably 10 pm or less, particularly preferably 5 pm or less. In a case where a gutter layer and/or a protective layer is provided in the organic-inorganic hybrid membrane composite, it is sometimes difficult to obtain a thickness of each of the organic-inorganic hybrid membrane, the gutter layer, and the protective layer because the organic-inorganic hybrid membrane, the gutter layer, and the protective layer are integrally formed. In a case where the organic-inorganic hybrid membrane and a gutter layer and/or a protective layer are integrally formed, the gutter layer and the protective layer also contribute to gas permeation property and gas separation property. Therefore, a membrane thickness of a part (hereinafter, this part is sometimes referred to as a separation relevant layer) excluding the porous support layer in the organic-inorganic hybrid membrane composite is sometimes important. In the organic-inorganic hybrid membrane composite, a thickness of the separation relevant layer is typically 0.05 pm or more, preferably 0.1 pm or more, more preferably 1 pm or more, further preferably 2 pm or more, typically 100 pm or less, preferably 50 pm or less, more preferably 30 pm or less, further preferably 10 pm or less, particularly preferably 5 pm or less.

In a case where the membrane thickness of the separation relevant layer is within the above range, it is possible to easily form a defect-free membrane in which no defect or through hole is present, and it is possible to achieve both high separation performance and high permeance. In addition, the organic-inorganic hybrid membrane composite including the organic-inorganic hybrid membrane and the porous support layer is a composite having high permeation performance and durability. It is possible to obtain a composite that is resistant to bending and the like and has excellent processability and sufficient flexibility, and the organic-inorganic hybrid membrane can be formed into a module without generating a crack or a pinhole in the membrane.

[Measurement of membrane thickness]

In a case where the organic-inorganic hybrid membrane is a self-supported membrane, a membrane thickness thereof is calculated from an arithmetic mean of a total of four locations using a digimatic standard outer micrometer (MDC-25M available from Mitsutoyo Corporation), or the like. The four locations include a center of the membrane to be measured and three locations that are slightly inner from an edge of the membrane and that have been selected at even intervals on a circumference.

A cross section of the organic-inorganic hybrid membrane composite obtained by freeze fracture is imaged using a scanning electron microscope. Then, a thickness which is calculated as an arithmetic mean of thicknesses at a plurality of locations of the separation relevant layer, which is a part other than the porous support layer, is regarded as a thickness of the organic-inorganic hybrid membrane composite.

[Matrix polymer]

A glass transition temperature (Tg) of the matrix polymer in accordance with an aspect of the present invention is not particularly limited and is, for example, typically 15°C or less, preferably 0°C or less, more preferably -20°C or less, further preferably -50°C or less, particularly preferably -70°C or less, most preferably -100°C or less. In a case where Tg is equal to or less than the upper limit value and the organic-inorganic hybrid membrane composite including the organic-inorganic hybrid membrane containing the matrix polymer is used in gas separation, even if a contained amount of the inorganic filler in the organic-inorganic hybrid membrane is large, gaps are not generated between the inorganic filler and the matrix polymer because the matrix polymer has flexibility at the service temperature. Thus, sufficient gas separation performance tends to be exhibited. Furthermore, in a case where Tg is equal to or less than the upper limit value, it is possible to highly charge the inorganic filler without generating gaps between the matrix polymer and the inorganic filler, and it is possible to obtain a membrane exhibiting sufficient permeation-separation performance. In a case where Tg is equal to or less than the upper limit value, strain at the interface between the matrix polymer and the inorganic filler can be absorbed by the flexibility of the matrix polymer, even in use under high pressure condition or in use for a long time, and gaps tend to be hardly generated. In addition, because of the flexibility, gaps are not generated between the matrix polymer and the inorganic filler when the membrane is processed into a module in a shape such as a spiral, and membrane performance tends to be satisfactory. A lower limit of Tg is not particularly limited, and is preferably -250°C or more and more preferably -200°C or more. A method for measuring the glass transition temperature conforms to the method described in Examples.

Gas permeation property of the matrix polymer in accordance with an aspect of the present invention is not particularly limited. For example, a $CO_2$ permeability at 35°C is preferably 200 Barrer or more, more preferably 500 Barrer or more, further preferably 1000 Barrer or more, particularly preferably 1500 Barrer or more, most preferably 2000 Barrer or more.

In a case where the lower limit value is within the above range, a membrane constituted by the matrix polymer alone has a sufficiently large permeability. Thus, it is possible to increase the permeability of a resultant organic-inorganic hybrid membrane composite including the organic-inorganic hybrid membrane. The $CO_2$ permeability at 35°C is obtained by measuring, at a differential pressure of 0.1 MPa, a membrane (hereinafter sometimes referred to as a polymer membrane) constituted by a matrix polymer alone.

A separation factor, a permeability, and permeance of the matrix polymer are measured as follows. A membrane (hereinafter sometimes referred to as a polymer membrane) is prepared using the matrix polymer alone, and the values are measured with methods identical to those for the organic-inorganic hybrid membrane in accordance with an aspect of the present invention under conditions of 35°C and a differential pressure of 0.1 MPa.

The matrix polymer is a macromolecular compound (polymer), and is preferably a rubbery polymer such as a silicone rubber constituted by polyorganosiloxane (such as polydimethylsiloxane (hereinafter sometimes referred to as PDMS)), a styrene-butadiene rubber, a butadiene rubber, an isoprene rubber, an ethylene-propylene rubber, a natural rubber, an acrylic rubber, or an ethylene-vinyl oxide rubber, or polyolefin such as poly(4-methyl-1-pentyne); more preferably a rubbery polymer such as a silicone rubber constituted by polyorganosiloxane such as PDMS, a styrene-butadiene rubber, a butadiene rubber, an isoprene rubber, an ethylene-propylene rubber, a natural rubber, an acrylic rubber, or an ethylene-vinyl oxide rubber; particularly preferably a silicone rubber constituted by polyorganosiloxane such as PDMS. In a case where an organic-inorganic hybrid membrane is formed on a porous support layer while using any of those polymers as a matrix polymer, it is possible to obtain an organic-inorganic hybrid membrane composite having excellent gas permeation performance and gas separation performance.

A preferable silicone rubber as the matrix polymer is not particularly limited, and it is preferable to employ polyorganosiloxane having a siloxane backbone expressed by a formula (1) below or a silicone rubber which is obtained by curing a commercially available silicone rubber precursor by cross-linking reaction. Examples of the commercially available silicone rubber precursor include SILPOT™ 184 Silicone Elastomer Base (available from Dow Toray Co., Ltd.) and the like.

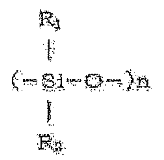
(1)

In the formula (1), n is an integer of 2 or more, $R_1$ and $R_2$ are each a hydrogen atom, an alkyl group such as a methyl group or an ethyl group, a cycloalkyl group such as a cyclohexyl group, a polyether group, an alkenyl group such as a vinyl group or an allyl group, an aryl group such as a phenyl group or a fluorenyl group, a heteroalkyl group such as a fluoroalkyl group, a saturated or unsaturated alicyclic group containing a heteroelement such as an oxiranyl group or an

oxetanyl group, a condensation reaction substituent such as an alkosi group, a ketoxime group, an acetoxy group or an aminoxy group, or may have a substituent such as an amino group, a carboxy group, a carbinol group, or an epoxy group. As a form of substitution, $R_1$ or $R_2$ of the side chain may be substituted. Alternatively, both ends may be substituted. Alternatively, both ends and the side chain may be substituted. $R_1$ and $R_2$ may be identical to each other or different from each other. Only $R_1$ and/or $R_2$ of a part of polyorganosiloxane may be substituted.

In order that polyorganosiloxane according to the formula (1) is polymerized or condensed by cross-linking reaction to obtain a silicone rubber, polyorganosiloxane according to the formula (1) preferably has a cross-linking group such as an alkenyl group (such as a vinyl group), a silicon-hydrogen bond, an oxetanyl group, or a condensation reaction substituent (such as an alkosi group, a ketoxime group, an acetoxy group, or an aminoxy group). In view of utilizing addition reaction, polyorganosiloxane according to the formula (1) particularly preferably has an alkenyl group.

In an aspect of the present invention, a mechanism of cross-linking reaction in obtaining a silicone rubber by curing polyorganosiloxane by cross-linking is not particularly limited, and it is possible to use curing reaction or condensation reaction using a conventionally known organic peroxide, addition reaction, or curing reaction by irradiation with ultraviolet rays, radial rays, or an electron beam. From the viewpoint of productivity, a method is preferable in which mixing of the inorganic filler and storage after mixing with the inorganic filler can be stably carried out in atmospheric air. In view of this, a type of curing by addition reaction or irradiation with ultraviolet rays, radial rays, or an electron beam is preferable. In view of easiness and the fact that it is not necessary to control the atmosphere in curing, it is particularly preferable to employ addition reaction.

A weight-average molecular weight of main polyorganosiloxane before curing, which is mixed with the inorganic filler used in an aspect of the present invention, is typically 5000 or more, preferably 10000 or more, more preferably 20000 or more, further preferably 25000 or more, typically 100000 or less, in terms of polystyrene equivalent measured by GPC. In a case where the molecular weight of polyorganosiloxane which is the main agent before curing is within the above range, it is easy to mix zeolite and the polymer, and further membrane formation property is high. Therefore, it is possible to improve a filling proportion of the inorganic filler in the organic-inorganic hybrid membrane.

Examples of polyorganosiloxane that may be suitably used in an aspect of the present invention include SILPOT™ 184 available from Dow Toray Co., Ltd. and ELASTOSIL RT601 available from Wacker Asahikasei Silicone Co., Ltd.

A GPC measuring method is not particularly limited. As a solvent used as a mobile phase, it is possible to arbitrarily select a solvent in which polyorganosiloxane before curing is soluble. Examples of the solvent include toluene and chloroform. A column temperature is typically kept at 40°C. A detector is also not particularly limited, and for example, it is possible to use an RI.

In an aspect of the present invention, in a case where viscosity is increased and dispersion of a filler and membrane formation are difficult because an inorganic filler is added when the inorganic filler and the matrix polymer are mixed, a dispersion agent can be used. The dispersion agent improves dispersibility and reduces viscosity. In addition, the dispersion agent may be effective to improve handleability and leveling property.

The term "dispersion agent" means a compound for uniformly dispersing an inorganic filler in a matrix polymer. Examples of the dispersion agent include: polysiloxane compounds such as tilhydrogenpolysiloxane, polymethoxysilane, dimethylpolysiloxane, and dimethicone PEG-7 succinate, and salts thereof; organic silicon compounds such as silane compounds (such as methyldimethoxysilane, dimethyldimethoxysilane, methyltrimethoxysilane, phenyltrimethoxysilane, dichlorophenylsilane, chlorotrimethylsilane, hexyl trimethoxysilane, octyl trimethoxysilane, decyl trimethoxysilane, dodecyl trimethoxysilane, dodecyltrichlorosilane, octadecyltrimethoxysilane, octadecyltrichlorosilane, trifluoropropyltrimethoxysilane, vinyltrimethoxysilane, 3-acryloxypropyltrimethoxysilane, 3-mercaptopropyltrimethoxysilane, 3-aminopropyltriethoxysilane, 3-(2-aminoethyl)aminopropyltrimethoxysilane, hexamethyldisiloxane, 1,1,1,3,3,3-hexamethyldisilazane, and 3-carboxypropyltrimethyltrimethoxysilane); carboxylic compounds such as formic acid, acetic acid, butyric acid, lauric acid, stearic acid, oleic acid, and 6-hydroxyhexanoic acid; organophosphate compounds such as lauryl ether phosphate and trioctylphosphine; amine compounds such as dimethylamine, tributylamine, trimethylamine, cyclohexylamine, ethylenediamine, and polyethylenimine; amine carboxylate compounds; amine phosphate compounds; and the like. In addition, examples of the dispersion agent include organic modified silicone polymers and organic modified silicone oils as described in Japanese Patent Application Publication, Tokukai, No. 2017-66364. The term "amine carboxylate compound" means a compound having functional groups of both a carboxyl group and an amino group. The term "amine phosphate compound" means a compound having functional groups of both a phosphate group and an amino group.

Among those, the organic modified silicone polymers and/or the organic modified silicone oils are preferable in terms of having affinity for both an inorganic filler and a matrix polymer (particularly a silicone polymer). Examples of organic groups of the organic modified silicone polymers and/or the organic modified silicone oils include: an epoxy group, an alcohol group, a carboxy group, an acrylic group, an allyl group, a vinyl group, a methacrylic group, a thiol group, an amino group, an ether group, an aralkyl group, an alkyl group, and the like. Among those, it is preferable to use at least one selected from the group consisting of organic modified silicone polymers and/or organic modified silicone oils which are modified with an epoxy group, an alcohol group, a vinyl group, or a carboxy group. In particular, it is more preferable to

contain an organic modified silicone polymer and/or an organic modified silicone oil which is modified at least with an epoxy group or a vinyl group.

The organic modified silicone polymers and/or the organic modified silicone oils described above are easily adsorbed on the inorganic filler because the polymers and/or oils each have an organic group with a moderate polarity. Therefore, by containing the organic modified silicone polymer and/or the organic modified silicone oil described above in the composition, such a polymer and/or an oil is more likely to exist on the inorganic filler surface, and it is possible to break structural viscosity caused by the inorganic filler. Specifically, a silicone part (-Si-O-Si- bound part) of the organic group-modified silicone polymer and/or the organic modified silicone oil makes contact with a low-polarity site of the inorganic filler, and an organic group part makes contact with a polarity site of the inorganic filler. Thereby, the polymer and/or the oil may function as a surfactant that cancels a phaseseparated structure in the polymer composition. Thus, dispersibility of the inorganic filler is improved, and it is thereby possible to improve a filling factor of the inorganic filler in the organic-inorganic hybrid membrane.

A proportion of presence of the organic modified silicone polymer and/or the organic modified silicone oil relative to a mass of the organic-inorganic hybrid membrane is typically 1% or more, preferably 3% or more, more preferably 5% or more, typically 50% or less, preferably 30% or less, more preferably 10% or less. In a case where the proportion of presence of the organic group-modified silicone polymer and/or the organic modified silicone oil is within the above range, it is possible to reduce viscosity of the organic-inorganic hybrid membrane in membrane formation. Moreover, it is possible to improve dispersibility of the inorganic filler, and to ensure long-term stability of the organic-inorganic hybrid membrane. In a case where the proportion of presence of the organic modified silicone polymer and/or the organic modified silicone oil is equal to or less than the above upper limit value, a proportion of the matrix polymer tends to be increased, a resultant organic-inorganic hybrid membrane tends to be stronger, and a defect is less likely to be caused.

[Inorganic filler]

The gas-selective inorganic filler used in an aspect of the present invention is an inorganic compound that has gas selectivity achieved by a molecular sieve effect and/or adsorption selectivity, with which a certain type of gas is allowed to pass through but another type of gas is not allowed to pass through or permeates at a remarkably low permeability rate. One type of those inorganic fillers may be used alone, or two or more types of such inorganic fillers may be used in combination. Alternatively, the inorganic filler may be used in combination with an inorganic compound having no gas selectivity.

Specific examples of the gas-selective inorganic filler include zeolite, metal organic frameworks (hereinafter sometimes referred to as MOF), and porous coordination polymers (hereinafter sometimes referred to as PCP). The gas-selective inorganic filler used in an aspect of the present invention preferably contains at least one selected from the group consisting of zeolite, MOF, and PCP, and desirably contains at least zeolite.

Examples of MOF used in an aspect of the present invention include a metal organic framework containing zinc ions which are coordinately bound to triazolate and/or oxalate, and a zeolitic imidazolate framework-8 (ZIF-8).

As an inorganic compound other than the gas-selective inorganic filler, it is possible to contain silica, $\alpha$-alumina, $\gamma$-alumina, zirconia, titania, yttria, silicon nitride, boron nitride, silicon carbide, and the like. By adding such inorganic compounds in addition to the gas-selective inorganic filler, membrane formation may be carried out more easily and physical properties of the organic-inorganic hybrid membrane other than the gas permeation property may be improved.

The inorganic filler used in an aspect of the present invention contains zeolite, and the zeolite has, in a case where elements (T elements) which constitute a framework and are not oxygen are all Si, a framework density (hereinafter sometimes referred to as $FD_{Si}$) of typically 16.0 T/1000 Å$^3$ or less, preferably 15.8 T/1000 Å$^3$ or less, more preferably 15.5 T/1000 Å$^3$ or less, further preferably 15.3 T/1000 Å$^3$ or less, particularly preferably 15.2 T/1000 Å$^3$ or less, most preferably 15.1 T/1000 Å$^3$ or less, and typically 10 T/1000 Å$^3$ or more, preferably 11 T/1000 Å$^3$ or more, more preferably 12 T/1000 Å$^3$ or more.

Here, the framework density (T/1000 Å$^3$) in a case where T elements are all Si means the number of elements which constitute the framework and are not oxygen, i.e., the number of Si per 1000 Å$^3$ of zeolite. This value is determined according to a structure of zeolite. A relation between the framework density and the structure of zeolite is indicated in a zeolite structure database (https://asia.iza-structure.org/IZA-SC/ftc_table.php). As such, smaller $FD_{Si}$ indicates that more spaces exist in the structure of zeolite.

In a case where zeolite is used in the organic-inorganic hybrid membrane, the matrix polymer sometimes blocks surfaces of small pores of zeolite or the inside of small pores. In a case where $FD_{Si}$ is within the above range, there are many spaces inside zeolite. Therefore, even if some of the spaces are blocked, it is possible to ensure a gas flow path, and an effect of mixing with zeolite is more likely to be exerted effectively. Thus, the organic-inorganic hybrid membrane composite tends to exhibit a high permeability and high separation performance. Moreover, in a case where $FD_{Si}$ is within the above range, a framework of zeolite has sufficient strength, and therefore zeolite tends to be hardly broken and to be stable. Therefore, $FD_{Si}$ is preferably within the above range.

In an aspect of the present invention, a preferable structure of zeolite is typically AEI, AFR, AFS, AFT, AFV, AFX, AFY, AST, AVL, *BEA, BEC, BOZ, BPH, CHA, -CLO, CON, DFO, EAB, EMT, ETR, *-EWT, FAU, GME, -IFT, -IFU, IFW, IRN, IRR, -IRY, ISV, ITE, *-ITN, ITT, -ITV, IWR, IWS, IWV, JSR, JST, KFI, LEV, LTA, MEI, MWW, NPO, NPT, OBW, OSO, PAU, POS, PUN, PWN, RHO, RWY, SAO, SAS, SAV, SBE, SBS, SBT, SFO, SFW, SOV, *-SVY, -SYT, THO, TSC, UFI, USI, UTL, VFI, preferably AEI, AFR, AFS, AFT, AFV, AFX, AFY, AST, AVL, *BEA, BEC, BOZ, BPH, CHA, -CLO, CON, DFO, EMT, ETR, *-EWT, FAU, GME, -IFT, -IFU, IFW, IRN, IRR, -IRY, ISV, ITE, ITT, -ITV, IWR, IWS, IWV, JSR, JST, KFI, LTA, MEI, NPT, OBW, OSO, POS, PUN, PWN, RHO, RWY, SAO, SAS, SAV, SBE, SBS, SBT, SFO, SFW, SOV, *-SVY, -SYT, THO, TSC, UFI, UTL, VFI, more preferably AEI, AFR, AFS, AFT, AFX, AFY, *BEA, BEC, BOZ, BPH, CHA, -CLO, DFO, EMT, ETR, *-EWT, FAU, GME, -IFT, - IFU, IRN, IRR, -IRY, ISV, ITT, -ITV, IWS, IWV, JSR, JST, KFI, LTA, MEI, NPT, OBW, OSO, POS, PUN, RHO, RWY, SAO, SAS, SAV, SBE, SBS, SBT, SFO, SFW, SOV, -SYT, TSC, UFI, VFI, further preferably AEI, AFS, AFT, AFX, AFY, BEC, BOZ, BPH, CHA, -CLO, DFO, EMT, *-EWT, FAU, GME, -IFT, -IFU, IRR, - IRY, ISV, ITT, IWS, IWV, JSR, JST, KFI, LTA, MEI, NPT, OBW, OSO, PUN, RHO, RWY, SAO, SAS, SAV, SBE, SBS, SBT, SFW, SOV, -SYT, TSC, VFI, further preferably AEI, AFX, CHA, EMT, FAU, GME, KFI, LTA, MEI, NPT, RHO, VFI, particularly preferably AEI, AFX, CHA, FAU, most preferably CHA. In a case where the structure of zeolite is the above structure, there are many spaces inside zeolite. Therefore, the matrix polymer does not completely block the small pores, and it is possible to obtain an organic-inorganic hybrid membrane composite including an organic-inorganic hybrid membrane which exhibits high permeation-separation performance.

Zeolite that is mainly used in an aspect of the present invention is not particularly limited, and is preferably zeolite having a 12 or less-membered oxygen ring, more preferably zeolite having a 10 or less-membered oxygen ring, most preferably zeolite having an 8 or less-membered oxygen ring. Typically, zeolite having a 6 or more-membered oxygen ring is preferable, and zeolite having an 8 or more-membered oxygen ring is more preferable.

Here, a value of n of zeolite having an n-membered oxygen ring indicates a value with which the oxygen number is greatest among small pores constituted by oxygen and T elements (which are not oxygen among elements constituting the framework) that form the zeolite framework. For example, in a case where there are small pores having a 12-membered oxygen ring and an 8-membered oxygen ring as in MOR-type zeolite, such zeolite is regarded as zeolite having a 12-membered oxygen ring.

Examples of zeolite having a 12 or less-membered oxygen ring include AEI, AFR, AFS, AFT, AFV, AFX, AFY, AST, AVL, *BEA, BEC, BOZ, BPH, CHA, CON, DFO, EAB, EMT, FAU, GME, IFW, IRN, ISV, ITE, *-ITN, IWR, IWS, IWV, JSR, JST, KFI, LEV, LTA, MEI, MWW, NPO, NPT, OBW, PAU, POS, PUN, PWN, RHO, RWY, SAO, SAS, SAV, SBE, SBS, SBT, SFO, SFW, SOV, THO, TSC, UFI, and USI. Examples of zeolite having a 10 or less-membered oxygen ring include AEI, AFT, AFV, AFX, AST, AVL, BOZ, CHA, EAB, IFW, IRN, ITE, JST, KFI, LEV, LTA, MWW, NPT, OBW, PAU, PWN, RHO, SAS, SAV, SFW, THO, TSC, and UFI. Examples of zeolite having an 8 or less-membered oxygen ring include AEI, AFT, AFV, AFX, AST, AVL, CHA, EAB, IRN, ITE, KFI, LEV, LTA, NPT, PAU, PWN, RHO, SAS, SAV, SFW, THO, TSC, and UFI.

The n-membered oxygen ring structure determines a size of small pores in zeolite. In a case where the n-membered oxygen ring structure is within the above range, zeolite is more likely to exert high gas separation performance. Furthermore, in a case where such zeolite is used in an organic-inorganic hybrid membrane, it is possible to easily bring about an effect of achieving gas separation performance which is higher than that of the matrix polymer.

Examples of zeolite mainly used in an aspect of the present invention include aluminosilicate, aluminophosphate (AlPO), silicoaluminophosphate (SAPO), metalloaluminophosphate (MeAPO), metallo-silicoaluminophosphate (MeAPSO). Aluminosilicate and silicoaluminophosphate (SAPO) are preferable. Aluminosilicate is particularly preferable in terms of durability of zeolite.

An $SiO_2/Al_2O_3$ molar ratio of aluminosilicate is typically 7 or more, preferably 8 or more, more preferably 10 or more, further preferably 12 or more, particularly preferably 15 or more, most preferably 20 or more. An upper limit is typically 2000 or less, preferably 1000 or less, more preferably 500 or less, further preferably 100 or less, particularly preferably 50 or less. In a case where $FD_{Si}$ is within the foregoing range, a lower limit of the $SiO_2/Al_2O_3$ molar ratio of aluminosilicate may be lower, and is typically 0.5 or more, preferably 1 or more, more preferably 3 or more, further preferably 8 or more, further preferably 10 or more, further preferably 12 or more, particularly preferably 15 or more, most preferably 20 or more. An upper limit is typically 2000 or less, preferably 1000 or less, more preferably 500 or less, further preferably 100 or less, particularly preferably 50 or less. In a case where the $SiO_2/Al_2O_3$ molar ratio is within the above range, durability of zeolite is high, and durability of gas separation-permeation performance of the organic-inorganic hybrid membrane composite tends to be satisfactory. In a case where the $SiO_2/Al_2O_3$ molar ratio is within the above range, hygroscopicity of zeolite is not excessively high. Therefore, such an $SiO_2/Al_2O_3$ molar ratio is preferable because it is not necessary to carry out pretreatment before using the organic-inorganic hybrid membrane composite or it is only necessary to carry out heating at a low temperature for a short time. Furthermore, an actual gas separation process would hardly be influenced by moisture in an actual gas. Therefore, merely brief pretreatment would be needed for a gas that is introduced into the organic-inorganic hybrid membrane composite in the gas separation process. Therefore, it is economical that the $SiO_2/Al_2O_3$ molar ratio is within the above range.

The $SiO_2/Al_2O_3$ molar ratio is obtained by X-ray fluorescence analysis (XRF) after a calibration curve is prepared

in advance by ICP analysis and XRF. Specifically, the following process is carried out.

A zeolite sample is dissolved in a hydrochloric acid aqueous solution by heating, and then contained amounts (% by mass) of silicon atoms and aluminum atoms are obtained by ICP analysis. Then, a calibration curve of fluorescent X-ray intensity of the analyzed element and an atomic concentration of the analyzed element in the reference sample is prepared. From this calibration curve, contained amounts (% by mass) of silicon atoms and aluminum atoms in the zeolite sample are obtained by XRF.

An average particle diameter of the inorganic filler used in an aspect of the present invention is typically 0.05 pm or more, preferably 0.1 pm or more, more preferably 0.5 pm or more, further preferably 1 pm or more, further preferably 5 pm or more, particularly preferably 7 pm or more, typically 100 pm or less, preferably 50 pm or less, more preferably 20 pm or less, further preferably 15 pm or less, particularly preferably 10 pm or less. In a case where the average particle diameter of the inorganic filler is within this range, dispersibility of the inorganic filler is satisfactory, it is easy to mix the inorganic filler with the matrix polymer at an arbitrary proportion, and a path is easily formed through which the gas permeates the inorganic filler. Therefore, an effect of improving separation performance and permeation performance by the inorganic filler is more likely to be brought about, and it tends to be easy to obtain an organic-inorganic hybrid membrane composite that is excellent in both separation performance and permeation performance.

A specific method for measuring the average particle diameter here is as follows.

[Method for measuring average particle diameter]

A particle diameter of the inorganic filler used in the organic-inorganic hybrid membrane is an average particle diameter that is obtained as follows. A sample in which synthesized powder is well dispersed is prepared and, in an image taken by a scanning electron microscope, particle diameters of 30 particles which have been arbitrarily selected are measured, and an arithmetic mean thereof is regarded as the average particle diameter. For secondary particles formed by aggregation of small crystal particles, the particle diameter is a secondary particle diameter.

A particle diameter of the inorganic filler used in the obtained organic-inorganic hybrid membrane is an average particle diameter that is obtained as follows. A cross section of an organic-inorganic hybrid membrane which has been obtained by freeze-fracturing the organic-inorganic hybrid membrane composite is imaged using a scanning electron microscope, particle diameters of 30 particles which have been arbitrarily selected for the inorganic filler observed in the obtained cross-sectional image are measured, and an arithmetic mean thereof is regarded as the average particle diameter.

In any of the methods, the particle diameter is a diameter of a circle (circle equivalent diameter) having an area equal to a projected area of a particle.

In a case where the inorganic filler used in an aspect of the present invention has the particle diameter falling within the foregoing range, the inorganic filler may be secondary particles formed by aggregation of small crystal particles or may be primary particles that are crystal particles existing alone. The primary particles are particularly preferable because a gap called a grain boundary is hardly generated between crystals, and therefore a defect (called a void) is hardly caused between a polymer and particles when an organic-inorganic hybrid membrane is formed, and thus the organic-inorganic hybrid membrane composite tends to exhibit a high separation factor.

In a case where two types of inorganic fillers having different average particle diameters are used in an aspect of the present invention, a ratio of average particle diameter, which is expressed as a value of [average particle diameter of larger particles/average particle diameter of smaller particles] is typically 1.5 or more, preferably 3 or more, more preferably 5 or more, typically 100 or less, preferably 50 or less, further preferably 20 or less, particularly preferably 15 or less. In a case where the particle diameter ratio is within the above range, spaces in the inorganic filler are least when the inorganic filler is mixed with the matrix polymer, and it is possible to improve a filling proportion of the inorganic filler. In a case where inorganic fillers with three or more types of average particle diameters are used, two of those average particle diameters preferably satisfy the above described particle diameter ratio.

Here, the larger particles refer to inorganic filler particles having a larger average particle diameter among the two types of inorganic fillers having different average particle diameters, and the smaller particles refer to inorganic filler particles having a smaller average particle diameter. The same applies hereinafter.

[Particle size distribution]

The particle size distribution in an aspect of the present invention is a volume-based particle size distribution. A method for obtaining the volume-based particle size distribution is not particularly limited. For an inorganic filler in the form of powder before membrane formation, a laser diffraction-scattering method is suitable. In the organic-inorganic hybrid membrane after membrane formation or the organic-inorganic hybrid membrane composite, a particle size distribution of an inorganic filler contained in the organic-inorganic hybrid membrane and the separation relevant layer can be obtained by image analysis. That is, a cross section prepared by freeze fracture is observed with a scanning electron microscope,

particles seen by the observation are selected, and image analysis is carried out. Thus, it is possible to obtain a volume-based particle size distribution. The average particle diameters of larger particles and smaller particles can be obtained by a method for measuring an average particle diameter described below, for the respective two types of inorganic fillers. In a case where larger particles and smaller particles are mixed, inorganic filler powder used is well dispersed to prepare a sample. In an image taken by a scanning electron microscope, particle diameters of 30 or more particles arbitrarily selected are measured, and the obtained volume-based particle size distribution is converted into a number-based particle size distribution. A number-based arithmetic mean of particle diameters is obtained for each of (i) particles larger than a local minimum value in the volume-based particle size distribution and (ii) particles smaller than the local minimum value. Thus, it is possible to calculate average particle diameters. An average particle diameter of larger particles and an average particle diameter of smaller particles contained in the inorganic filler in the obtained organic-inorganic hybrid membrane can each be calculated as follows. A cross section of the organic-inorganic hybrid membrane which has been obtained by freeze fracture is imaged using a scanning electron microscope, particle diameters of 30 or more particles which have been arbitrarily selected for the inorganic filler observed in the obtained cross-sectional image are measured, and the obtained volume-based particle size distribution is converted into a number-based particle size distribution. A number-based arithmetic mean of particle diameters is obtained for each of (i) particles larger than the local minimum value and (ii) particles smaller than the local minimum value, and thus the average particle diameter is calculated. In a case where there are three or more peaks, a number-based arithmetic mean of particle diameters is obtained for particles between the local minimum value and another local minimum value as appropriate, and thus an average particle diameter is calculated.

In this specification, for secondary particles formed by aggregation of small crystal particles, the term "particle diameter" refers to a secondary particle diameter. In any of methods, the particle diameter is defined to be a diameter of a circle (circle equivalent diameter) having an area equal to a projected area of a particle. For an average particle diameter measured in a method for measuring an average particle diameter described later, an average particle diameter based on the particle diameters described here is measured.

In a case where two types of inorganic fillers having different average particle diameters are used in an aspect of the present invention, the inorganic filler contained in the organic-inorganic hybrid membrane has a particle size distribution having at least two peaks. In a case where the particle size distribution of the inorganic filler contained in the organic-inorganic hybrid membrane in an aspect of the present invention has at least two peaks, a peak of a greater particle diameter is more preferably in a particle diameter between (i) typically 1.5 pm or more, preferably 4 pm or more and (ii) typically 20 pm or less, preferably 15 pm or less, more preferably 10 pm or less, and a peak of a smaller particle diameter is more preferably in a particle diameter between (i) typically 0.1 pm or more, preferably 0.2 pm or more and (ii) typically 1 pm or less. By having particle size distributions within those ranges, it is possible to improve a filling factor of the inorganic filler in the organic-inorganic hybrid membrane. Therefore, an organic-inorganic hybrid membrane can be obtained in which performance of the inorganic filler is sufficiently exerted and which has higher separation performance and permeation performance. In a case where the particle size distribution of the inorganic filler contained in the organic-inorganic hybrid membrane composite in an aspect of the present invention has at least two peaks and a particle diameter of a peak of a smaller particle diameter is set to 1, a particle diameter of a peak of a greater particle diameter is typically 1.5 or more, preferably 2.0 or more, more preferably 5.0 or more, further preferably 7.0 or more, typically 100 or less, preferably 50 or less, further preferably 20 or less, particularly preferably 15 or less. In a case where the particle diameter ratio is within the above range, spaces in the inorganic filler are least when the inorganic filler is mixed with the matrix polymer, and it is possible to improve a filling proportion of the inorganic filler. In an aspect in which the particle size distribution of the inorganic filler has two or more peaks, two peaks among the two or more peaks preferably satisfy the above described relation of the particle diameter ratio.

In an aspect in which two types of inorganic fillers having different average particle diameters are used in an aspect of the present invention, a preferable range of particle diameter is as follows. That is, an average particle diameter of larger particles is preferably 1 pm or more, further preferably 4 pm or more, particularly preferably 5 pm or more, typically 100 pm or less, preferably 50 pm or less, more preferably 20 pm or less, further preferably 15 pm or less, particularly preferably 10 pm or less. An average particle diameter of smaller particles is preferably 0.05 pm or more, preferably 0.1 pm or more, more preferably 0.5 pm or more. In a case where the average particle diameters of the larger particles and the smaller particles of the inorganic filler are within those ranges, dispersibility of the inorganic filler is satisfactory, it is easy to mix the inorganic filler with the matrix polymer at an arbitrary proportion, and a path is easily formed through which the gas permeates the inorganic filler. Therefore, an effect of improving separation performance and permeation performance by the inorganic filler is more likely to be brought about, and it tends to be easy to obtain an organic-inorganic hybrid membrane that is excellent in both separation performance and permeation performance.

In an aspect in which two types of inorganic fillers having different average particle diameters are used in an aspect of the present invention, in a case where a smaller average particle diameter is set to 1, a greater average particle diameter is typically 1.5 or more, preferably 2.0 or more, more preferably 5.0 or more, further preferably 7.0 or more, typically 100 or less, preferably 50 or less, further preferably 20 or less, particularly preferably 15 or less. In a case where two types of inorganic fillers having different average particle diameters are used and the greater average particle diameter

with respect to the smaller average particle diameter is within the above range, the inorganic filler having the smaller average particle diameter can efficiently fill gaps between the inorganic filler particles having the larger average particle diameter, and it is possible to improve a filling factor of the inorganic filler in the organic-inorganic hybrid membrane. Therefore, an organic-inorganic hybrid membrane can be obtained in which performance of the inorganic filler is sufficiently exerted and which has higher separation performance and permeation performance.

In an aspect in which two or more types of inorganic fillers having different average particle diameters are used, average particle diameters of two of the two or more types of inorganic fillers preferably satisfy the above described relation of the particle diameter ratio.

In an aspect in which two types of inorganic fillers having different average particle diameters are used in an aspect of the present invention, in a case where a mass of small-large particles is set to 1, a mass of large-small particles is not particularly limited and is, for example, preferably 3 or more, more preferably 4 or more, further preferably 4.5 or more. Typically, 10 or less is preferable, and 8 or less is preferable, and 6 or less is more preferable.

Note that a mass ratio between larger particles and smaller particles can be calculated from areas of peaks in the volume-based particle size distribution of the inorganic filler.

In an aspect of the present invention, a mass proportion of a gas-selective inorganic filler relative to a total mass of the organic-inorganic hybrid membrane is typically 35% by mass or more, preferably 37% by mass or more, more preferably 42% by mass or more, further preferably 48% by mass or more, further preferably 52% by mass or more, further preferably 57% by mass or more, particularly preferably 62% by mass or more, further preferably 65% by mass or more, more preferably 70% by mass or more, further preferably 75% by mass or more, most preferably 80% by mass or more. The proportion is typically 99% by mass or less, preferably 95% by mass or less, more preferably 90% by mass or less. In a case where the mass proportion of the inorganic filler is within the above range, the organic-inorganic hybrid membrane composite is a composite having excellent processability while maintaining flexible property, and tends to be a composite exhibiting high separation performance and permeation performance.

A proportion of the inorganic filler in the organic-inorganic hybrid membrane can be obtained by selecting a typical analysis method according to physical properties of the polymer and the inorganic filler.

For example, the proportion of the inorganic filler relative to the total mass of the organic-inorganic hybrid membrane can be obtained by burning all polymer portions by thermogravimetry (TG).

In the organic-inorganic hybrid membrane containing the silicone polymer and the inorganic filler, for example, a proportion of the inorganic filler relative to a total mass of the organic-inorganic hybrid membrane can be obtained by obtaining a mass of the inorganic filler by decomposing the silicone polymer in the organic-inorganic hybrid membrane using a silicone polymer decomposing agent, and separating solid contents by filtration or centrifugal separation. As the silicone polymer decomposing agent, it is possible to use methyl orthoformate, a commercially available silicone polymer decomposing agent such as DIGESIL NC available from ECOSEARCH, or a silicone dissolving agent such as a silicon cleaner available from NISSIN KAGAKU KENKYUSHO CO., LTD.

In an aspect of the present invention, in a case where the organic-inorganic hybrid membrane contains also an inorganic filler having no gas selectivity, a proportion of a mass (i.e., a total mass of the gas-selective inorganic filler and the inorganic filler having no gas selectivity) of the inorganic filler relative to the total mass of the organic-inorganic hybrid membrane is not particularly limited and is, for example, 35% by mass or more, preferably 37% by mass or more, more preferably 42% by mass or more, further preferably 48% by mass or more, further preferably 52% by mass or more, further preferably 57% by mass or more, particularly preferably 62% by mass or more, further preferably 65% by mass or more, more preferably 70% by mass or more, further preferably 75% by mass or more, most preferably 80% by mass or more. The proportion is typically 99% by mass or less, preferably 95% by mass or less, more preferably 90% by mass or less. In a case where the mass proportion of the inorganic filler is within the above range, the organic-inorganic hybrid membrane composite is a composite having excellent processability while maintaining flexible property, and tends to be a composite exhibiting high separation performance and permeation performance.

In an aspect of the present invention, a filling proportion of zeolite with respect to the organic-inorganic hybrid membrane is, in terms of volume fraction, typically 20 vol% or more, more preferably 30 vol% or more, further preferably 40 vol% or more, further preferably 50 vol% or more, further preferably 60 vol% or more, particularly preferably 65 vol% or more, most preferably 70 vol% or more. The proportion is typically 99 vol% or less, preferably 95 vol% or less, more preferably 90 vol% or less, further preferably 85 vol% or less, particularly preferably 80 vol% or less. In a case where the volume fraction of zeolite with respect to the volume of the organic-inorganic hybrid membrane is within the above range, the organic-inorganic hybrid membrane composite is a composite having excellent processability while maintaining flexible property, and tends to be a composite exhibiting high separation performance and permeation performance.

A volume fraction of zeolite relative to the organic-inorganic hybrid membrane can be determined as follows. A cross section of the organic-inorganic hybrid membrane composite is observed with SEM. From the cross-sectional part of the organic-inorganic hybrid membrane which is not a support layer, a gutter layer, and a protective layer and which corresponds to a separation layer, area fractions of the inorganic filler, the gas-selective inorganic filler, and zeolite are calculated for 5 or more fields of view. An arithmetic mean of these area fractions is regarded as volume fractions of the

inorganic filler, the gas-selective inorganic filler, and zeolite in the organic-inorganic hybrid membrane. The inorganic filler, the gas-selective inorganic filler, and zeolite may be considered to be, on average, uniformly dispersed in the organic-inorganic hybrid membrane. Therefore, for the depth direction of the cross section also, an area fraction equal to a part of the cross section is considered to be maintained on average. From this, the area fraction can be regarded as equal to the volume fraction.

The inorganic filler, the gas-selective inorganic filler, and zeolite can be distinguished based on shapes and composition analysis by SEM-EDX in SEM observation of the cross section.

In an aspect of the present invention, in a case where zeolite and an inorganic filler other than zeolite are used in combination, a proportion of a mass of the inorganic filler other than zeolite relative to a mass of zeolite is typically 30% or less, preferably 20% or less, more preferably 10% or less, further preferably 5% or less. A lower limit thereof is not particularly limited and is typically 0.1% or more. In a case where the mass percentage of the inorganic filler other than zeolite is within the above range, the obtained organic-inorganic hybrid membrane composite is a composite having excellent processability while maintaining flexible property, and tends to be a composite exhibiting high separation performance and permeation performance.

A shape of the inorganic filler used in an aspect of the present invention is not particularly limited, and is a particle shape of preferably a spherical shape, a cubic shape, a rectangular parallelepiped shape, a hexagonal prism shape, particularly preferably a spherical shape or a cubic shape, most preferably a spherical shape. In a case where the shape of the inorganic filler is any of those shapes, it is possible to increase a filling amount of the inorganic filler, and it is possible to obtain an organic-inorganic hybrid membrane having high separation property and permeation property.

The inorganic filler having the above shape can be obtained by controlling a synthesis method or can be obtained by physically grinding synthesized powder.

In a case where the inorganic filler has a spherical shape, fluidity of particles is high. Therefore, it is possible to improve a filling factor of particles when, in particular, membrane formation and curing are carried out under pressurization. In a case where the inorganic filler has a cubic shape, gaps between particles can be reduced by arranging the particles well. Therefore, it is possible to improve a filling factor of the inorganic filler in the organic-inorganic hybrid membrane.

The inorganic filler used in an aspect of the present invention has an average circularity coefficient of preferably 0.80 or more, particularly preferably 0.90 or more. The average circularity coefficient is typically 1.0 or less. In a case where the average circularity coefficient is within the above range, fluidity of particles is high. This makes it possible to improve a filling factor of particles, and it is particularly possible to improve the filling factor when membrane formation and curing are carried out under pressurization.

The circularity coefficient here is expressed by $4\pi S/L^2$, where S represents an area of two-dimensional projection image of a particle of an inorganic filler used, and L represents a circumferential length of the particle. In a case where the particle is a true sphere, the circularity coefficient is 1.0, and the value is larger as the shape is closer to a true sphere.

A specific method for calculating the average circularity coefficient here is as follows.

[Method for calculating average circularity coefficient]

An average circularity coefficient of the inorganic filler used in the organic-inorganic hybrid membrane is obtained as follows. A sample in which synthesized powder is well dispersed is prepared and is imaged using a scanning electron microscope. Then, circularity coefficients of 30 particles which have been arbitrarily selected are calculated, and an arithmetic mean thereof is regarded as the average circularity coefficient. For secondary particles formed by aggregation of small crystal particles, circularity coefficients of the secondary particles are calculated, and an average value thereof is used.

An average circularity coefficient of the inorganic filler in the obtained organic-inorganic hybrid membrane and organic-inorganic hybrid membrane composite is obtained as follows. A cross section of the organic-inorganic hybrid membrane which has been obtained by freeze fracture is imaged using a scanning electron microscope, circularity coefficients of 30 particles which are seen in the cross section and have been arbitrarily selected are calculated for the inorganic filler, and an arithmetic mean thereof is regarded as the average circularity coefficient.

In an aspect in which a particle size distribution of the inorganic filler contained in the organic-inorganic hybrid membrane and organic-inorganic hybrid membrane composite has at least two peaks, an average circularity coefficient is similarly calculated for particles larger than a local minimum value of the particle size distribution and for particles smaller than the local minimum value.

In an aspect in which the particle size distribution of the inorganic filler contained in the organic-inorganic hybrid membrane has at least two peaks, an average circularity coefficient of particularly particles having a greater mass is preferably 0.80 or more, particularly preferably 0.90 or more, and typically 1.0 or less.

A surface of the inorganic filler used in an aspect of the present invention may be modified. Here, surface modification refers to a process in which a compound (hereinafter sometimes referred to as a surface modifier) that can

react with an OH group on the surface of the inorganic filler is caused to react so that the surface modifier binds to the inorganic filler surface.

The surface modifier used here is not particularly limited, provided that the surface modifier is one which is generally used. From the viewpoint of reactivity with an OH group, it is possible to preferably use silazanes, siloxanes, alkoxysilanes, chlorosilanes, titanate coupling agents, silicate oligomers, and the like.

Examples of the silazanes include hexamethyldisilazane, hexaethyldisilazane, and the like.

Examples of siloxanes include hexamethyldisiloxane, hexaethoxydisiloxane, 1,3-butyltetramethyldisiloxane, 1,3-diphenyltetramethyldisiloxane, 1,3-divinyltetramethyldisiloxane, hexaethyldisiloxane, 3-glycidoxypropylpentamethyldisiloxane, methylhydrogenpolysiloxane, and 1,3-dichloro-1,1,3,3,-tetra-i-propyldisiloxane.

Examples of the alkoxysilanes include vinyl trimethoxysilane, vinyl triethoxysilane, propenyltrimethoxysilane, propenyltriethoxysilane, butenyltrimethoxysilane, butenyltriethoxysilane, pentenyltrimethoxysilane, pentenyltriethoxysilane, hexenyltrimethoxysilane, hexenyltriethoxysilane, heptenyl trimethoxysilane, heptenyl triethoxysilane, octenyltrimethoxysilane, octenyltriethoxysilane, nonenyltrimethoxysilane, nonenyl triethoxysilane, decenyltrimethoxysilane, decenyl triethoxy silane, undecenyltrimethoxysilane, undecenyltriethoxysilane, dodecenyltrimethoxysilane, and dodecenyltriethoxysilane each having an alkenyl group, and β-(3,4-epoxycyclohexyl) ethyltrimethoxysilane, γ-glycidoxypropyltrimethoxysilane, γ-glycidoxypropylmethyldiethoxysilane, γ-glycidoxypropyltriethoxysilane, γ-methacryloxypropylmethyldimethoxysilane, γ-methacryloxypropyltrimethoxysilane, γ-methacryloxypropylmethyldiethoxysilane, γ-methacryloxypropyltriethoxysilane, γ-acryloxypropyltrimethoxysilane, N-(β-aminoethyl)-γ-aminopropylmethyldimethoxysilane, N-(β-aminoethyl)-γ-aminopropyltrimethoxysilane, γ-aminopropyltrimethoxysilane, γ-aminopropyltriethoxysilane, N-phenyl-γ-aminopropyltrimethoxysilane, γ-mercaptopropyltrimethoxysilane, γ-chloropropyltrimethoxysilane, γ-ureidepropyltriethoxysilane, tetraethoxysilane, tetramethoxysilane, tetrapropoxysilane, tetrabutoxysilane, methyltriethoxysilane, trimethylmethoxysilane, trimethylethoxysilane, trimethylpropoxysilane, phenyldimethylmethoxysilane, dimethyldimethoxysilane, ethyltrimethoxysilane, dimethyldiethoxysilane, propyltriethoxysilane, n-butyltrimethoxysilane, n-hexyltrimethoxysilane, n-octyltriethoxysilane, n-octylmethyldiethoxysilane, n-decyl trimethoxysilane, n-octadecyltrimethoxysilane, phenyltrimethoxysilane, phenylmethyldimethoxysilane, phenethyltrimethoxysilane, dodecyl trimethoxysilane, n-octadecyl triethoxysilane, diphenyldimethoxysilane, vinyltris(βmethoxyethoxy)silane, 3-iso cyan ate propyltriethoxy silane, trifluoropropyltrimethoxysilane, heptadecatrifluoropropyltrimethoxysilane, n-decyl trimethoxysilane, dimethoxydiethoxysilane, bis(triethoxysilyl)ethane, 3-aminopropyltriethoxysilane, 3-aminopropyldiethoxymethylsilane, 3-aminopropyldimethylethoxysilane, and the like.

As alkoxysilane, among those, alkoxysilane having an alkenyl group is preferable, and alkoxysilane having a vinyl group is particularly preferable. In alkoxysilane having a vinyl group, a carbon number in a chain having a vinyl group is typically two or more, preferably five or more, more preferably seven or more, typically 20 or less, preferably 15 or less, more preferably 12 or less. In a case where the carbon number is within the above range, the chain having a vinyl group has satisfactory affinity for the matrix polymer, and a case is reduced where gas entry into or gas adsorption on the inorganic filler is hindered by the chain having a vinyl group. Therefore, it is possible to disperse the inorganic filler well in the matrix polymer while maintaining performance of the inorganic filler. The alkosixylans may be commercially available ones and may be, for example, KBM-1083 or X-12-1290 (both available from Shin-Etsu Chemical Co., Ltd.)

Examples of the chlorosilanes include vinyltrichlorosilane, trimethylsilyl chloride, triethylsilyl chloride, t-butyldimethylsilyl chloride, tri-i-propylsilyl chloride, 3-isocyanopropyldimethylchlorosilane, and the like.

Examples of silicate oligomers include methyl silicate oligomers such as MS51, MS56, MS57, and MS56S available from Mitsubishi Chemical Corporation.

Among those surface modifiers, a surface modifier of which end reacts with the matrix polymer is particularly suitably used. That is, in a case where the matrix polymer is a silicone polymer of addition reaction type, a surface modifier having a vinyl end is suitably used. Among surface modifiers having a vinyl end, from the viewpoint of reactivity and handleability, vinyl end alkoxysilanes are preferable, and vinyl end trimethoxysilanes are preferable.

Among those surface modifiers, a surface modifier having satisfactory affinity for a polymer of a group that does not react with the inorganic filler can cause the inorganic filler to more effectively disperse in the matrix polymer. Meanwhile, it is preferable that a surface modifier is difficult to hinder gas adsorption property and gas permeation property of the inorganic filler such as zeolite, which exerts a molecular sieve effect by small pores. In view of this, for the group that does not react with the inorganic filler, a carbon number is typically two or more, preferably five or more, more preferably seven or more, typically 20 or less, preferably 15 or less, more preferably 12 or less.

By modifying the surface with those surface modifiers, affinity between the organic solvent and the inorganic filler used in membrane formation is enhanced, and dispersibility of the inorganic filler is increased in a mixture of the matrix polymer, the inorganic filler, and the solvent used in membrane formation. This makes it easy to obtain an organic-inorganic hybrid membrane having a high filling factor of the inorganic filler.

By modifying the surface of the inorganic filler with those surface modifiers, affinity between the inorganic filler and the matrix polymer is improved, and voids are hardly generated in an interface between the inorganic filler and the matrix polymer. Thus, it is possible to easily obtain an organic-inorganic hybrid membrane composite including an organic-inorganic hybrid membrane which has high separation performance and high permeation performance and in which performance of the inorganic filler is sufficiently exerted.

Meanwhile, small pores in the inorganic filler (such as zeolite) having a molecular sieve effect brought about by the small pores may be blocked by a surface modifier. Therefore, modification of the inorganic filler with the surface modifier is preferably minimized.

Examples of a method for modifying a surface with those surface modifiers include: a method in which an inorganic filler and a surface modifier are introduced into an appropriate solvent and caused to reacted while being heated and stirred as necessary; a method in which a surface modifier is supplied to an inorganic filler with vapor and caused to react; and a method in which an inorganic filler and a surface modifier are caused to react with each other by kneading. In reacting, it is preferable that the inorganic filler is sufficiently dried to remove moisture in the small pores and only the surface is modified. From the viewpoint of promoting reaction, reaction can be carried out after the inorganic filler is caused to absorb moisture at an appropriate vapor pressure.

The above described surface modifier is added in mixing the matrix polymer with the inorganic filler and, optionally, a solvent. This makes it possible to use a part of the surface modifier as a modifier for the inorganic filler, a part of the surface modifier as a dispersion agent, and as a material for improving leveling property and handleability. The surface modifier has a functional group capable of reacting with the inorganic filler. Therefore, the surface modifier is easily adsorbed by or is easy to react with the inorganic filler. Therefore, by mixing such a surface modifier as described above, the surface modifier is more likely to exist on the inorganic filler surface, and it is possible to break structural viscosity caused by the inorganic filler. In the surface modifier as described above, in a case where an organic group part makes contact with a polarity site of the inorganic filler, the organic group part may function as a surfactant that cancels a phase-separated structure in the polymer composition. Thus, dispersibility of the inorganic filler is improved, and it is thereby possible to improve a filling factor of the inorganic filler in the organic-inorganic hybrid membrane. That is, the surface modifier as described above may function as a dispersion agent in mixing the inorganic filler with the matrix polymer, and in addition, the surface modifier may bring about an effect of improving handleability and leveling property.

A proportion of presence in mixing a surface modifier relative to a mass of the organic-inorganic hybrid membrane is typically 1% or more, preferably 3% or more, more preferably 5% or more, typically 50% or less, preferably 30% or less, more preferably 10% or less. In a case where the proportion of presence of the surface modifier is within the above range, it is possible to reduce viscosity of the organic-inorganic hybrid membrane in membrane formation. Moreover, it is possible to improve dispersibility of the inorganic filler, and to ensure long-term stability of the organic-inorganic hybrid membrane. In a case where the proportion of presence of the surface modifier is equal to or less than the above upper limit value, a proportion of the matrix polymer tends to be increased, a resultant organic-inorganic hybrid membrane tends to be stronger, and a defect is less likely to be caused.

The zeolite used in an aspect of the present invention may be optionally subjected to ion exchange. In a case of zeolite which is synthesized using a template, ion exchange is typically carried out after the template is removed. Ions for ion exchange include protons, alkali metal ions such as $Na^+$, $K^+$, $Cs^+$, and $Li^+$, group 2 element ions such as $Ca^{2+}$, $Mg^{2+}$, $Sr^{2+}$, and $Ba^{2+}$, ions of transition metal elements such as Fe, Cu, Zn, and Ag, and the like. Ion exchange makes it possible to change a small pore diameter of zeolite and affinity for a gas molecule. Therefore, although preferable ions vary according to a type of gas to be separated, it is possible to improve permeation performance by using ions having high affinity for a gas that is intended to permeate. In an organic-inorganic hybrid membrane for $CO_2$ separation, $Ca^{2+}$, $K^+$, and $Ag^+$ are preferable from the viewpoint of affinity for $CO_2$. Using those ions improves $CO_2$ permeation performance, and tends to improve a separation factor.

Ion exchange of zeolite can be carried out in a typical manner. In order to avoid blockage of small pores in zeolite, it is preferable to remove counter anions such as $NO_3^-$ by pyrolysis by carrying out calcination after ion exchange.

[Porous support layer]

The organic-inorganic hybrid membrane in an aspect of the present invention is formed on a porous support layer. In a case where the organic-inorganic hybrid membrane is formed on the porous support layer, durability and resistance to external force of the entire organic-inorganic hybrid membrane composite are increased, as compared with a case where the organic-inorganic hybrid membrane is a self-supported membrane alone. In addition, a membrane thickness of the organic-inorganic hybrid membrane can be reduced, which is preferable.

A shape of the porous support layer is not particularly limited. Examples of the shape include a porous flat membrane, a porous hollow fiber membrane, a nonwoven fabric, and the like. The porous hollow fiber membrane is preferable because it is possible to increase a membrane area per unit volume.

A small pore diameter of the porous support layer is typically 100 pm or less, preferably 50 pm or less, more preferably 10 pm or less, further preferably 5 pm or less, further preferably 1 pm or less, particularly preferably 0.5 pm or less, typically 0.01 pm or more, preferably 0.1 pm or more, more preferably 0.2 pm or more.

In a case where the small pore diameter of the porous support layer is within the above range, the support layer

does not prevent gas permeation and can impart necessary strength to the organic-inorganic hybrid membrane composite.

The porous support layer may have a symmetric structure or an asymmetric structure having a rough support layer beneath a surface dense layer. The asymmetric structure is preferable because resistance derived from the porous support layer at the time of gas permeation is reduced.

A thickness of the porous support layer is typically 10 pm or more, preferably 30 pm or more, more preferably 50 pm or more, further preferably 70 pm or more, particularly preferably 100 pm or more, typically 2 mm or less, preferably 1 mm or less, more preferably 500 pm or less, further preferably 200 pm or less, particularly preferably 150 pm or less. In a case where the thickness of the porous support layer is within the above range, it is possible to impart sufficient strength to the organic-inorganic hybrid membrane composite.

A material of the porous support layer is not particularly limited and is typically a polymer. Preferably, the material is polyvinylidene fluoride (PVDF), polytetrafluoroethylene (PTFE), polyether sulfone (PES), polysulfone (PSU), cellulose acetate (CA), polyethylene (PE), polypropylene (PP), polycarbonate (PC), polyimide (PI), or polyamide. More preferably, the material is polyvinylidene fluoride (PVDF), polytetrafluoroethylene (PTFE), polyether sulfone (PES), or cellulose acetate (CA). Particularly preferably, the material is polyvinylidene fluoride (PVDF) or polytetrafluoroethylene (PTFE). In a case where the material of the porous support layer is the above preferable polymer, the porous support layer has sufficient flexibility and strength. In addition, a membrane formation method for the organic-inorganic hybrid membrane is not restricted. Therefore, it is possible to impart sufficient strength to the organic-inorganic hybrid membrane composite and provide excellent processability.

In the organic-inorganic hybrid membrane composite in accordance with an aspect of the present invention, the organic-inorganic hybrid membrane may be formed directly on the porous support layer. That is, the porous support layer and the organic-inorganic hybrid membrane may be in contact with each other. Alternatively, the organic-inorganic hybrid membrane may be formed indirectly on the porous support layer. That is, another layer such as a gutter layer may be provided between the porous support layer and the organic-inorganic hybrid membrane.

[Penetration of matrix polymer into porous support layer and measurement thereof]

A part of the matrix polymer constituting the organic-inorganic hybrid membrane may penetrate into the porous support layer.

A degree of penetration can be expressed, for example, using an occupation proportion of the matrix polymer which has penetrated into the porous support layer in a cross section of the organic-inorganic hybrid membrane composite. The occupation proportion is a value with respect to a region having a thickness of 30 pm toward the porous support layer from an interface between the organic-inorganic hybrid membrane and the porous support layer. The occupation proportion is typically 60% or less, preferably 50% or less, more preferably 40% or less, further preferably 30% or less, particularly preferably 25% or less, typically 0% or more, preferably 2% or more, more preferably 5% or more, further preferably 10% or more. In a case where the occupation proportion is within the above range, it is possible to realize higher permeance, and it is possible to provide a membrane which has satisfactory adhesion property between the porous support layer and the organic-inorganic hybrid membrane, and has excellent durability. In a case where the thickness of the porous support layer is less than 30 pm, a region from the interface between the organic-inorganic hybrid membrane and the porous support layer to the lower edge of the porous support layer is used for calculating the occupation proportion. For example, in a case where the thickness of the porous support layer is 20 pm, an occupation proportion of the matrix polymer is calculated in a region of the porous support layer having a thickness of 20 pm in the cross section of the organic-inorganic hybrid membrane composite.

The occupation proportion can be calculated by taking and analyzing an image (e.g., element mapping) in a cross section obtained by cutting the organic-inorganic hybrid membrane composite along a stacking direction of the organic-inorganic hybrid membrane and the porous support layer. The element mapping can be mapping of an element that is contained in the matrix polymer and is not contained in the porous support layer. The element mapping may be, for example, Si mapping. A specific calculation method conforms to the method described in Examples.

[Gutter layer]

The organic-inorganic hybrid membrane in an aspect of the present invention may be formed on the porous support layer. Alternatively, in a case of being formed above the porous support layer, the organic-inorganic hybrid membrane may be formed on a gutter layer that is formed on the porous support layer. In a case where the organic-inorganic hybrid membrane composite further includes a gutter layer between the organic-inorganic hybrid membrane and the porous support layer, it is possible to avoid or reduce defects in the organic-inorganic hybrid membrane which are caused because, when the organic-inorganic hybrid membrane is formed, the matrix polymer and a solvent used in membrane formation excessively penetrate into the porous support layer. Furthermore, the matrix polymer and the solvent

used in membrane formation do not excessively penetrate into the porous support membrane, and it is therefore possible to form a thinner organic-inorganic hybrid membrane without defect.

A substance that forms the gutter layer is not particularly limited. The substance is typically a silicone polymer, polytrimethylsilylpropyne (PTMSP), polyether sulfone (PES), polysulfone (PSU), or polyethylene oxide (PEO), preferably a silicone polymer, polytrimethylsilylpropyne (PTMSP), or polyethylene oxide (PEO), particularly preferably a silicone polymer. Those substances are used because there are few restrictions on a membrane formation method in membrane formation on a gutter layer (e.g., high solvent resistance), and the substances are easy to handle.

A thickness of the gutter layer is preferably as thin as possible in order to reduce permeation resistance of a layer that is not related to separation. The thickness of the gutter layer is typically 1 nm or more, preferably 10 nm or more, typically 3 pm or less, preferably 1.5 pm or less, more preferably 500 nm or less. By solubilizing the gutter layer in a solvent used in membrane formation of the organic-inorganic hybrid membrane, the gutter layer may be at least partially integrated with the organic-inorganic hybrid membrane in the resultant organic-inorganic hybrid membrane composite.

[Protective layer]

In an aspect of the present invention, a protective layer may be formed on the opposite side of the organic-inorganic hybrid membrane, which is a separation layer, from the porous support layer for use in separation.

A substance that forms the protective layer is not particularly limited. The substance is typically a silicone polymer, polytrimethylsilylpropyne (PTMSP), polyether sulfone (PES), polysulfone (PSU), or polyethylene oxide (PEO), preferably a silicone polymer, polytrimethylsilylpropyne (PTMSP), or polyethylene oxide (PEO), particularly preferably a silicone polymer. Those substances are suitably used in view of having high gas permeation property and having little influence on performance of the organic-inorganic hybrid membrane, which is a separation layer.

The protective layer is preferably not provided, in terms of not preventing permeation through the separation layer. In a case where the protective layer is necessary to protect the separation layer, it is preferable to employ a minimum thickness that is enough to protect the separation layer, in terms of not preventing permeation through the separation layer. A thickness of the protective layer is typically 1 nm or more, preferably 10 nm or more, more preferably 100 nm or more, typically 100 pm or less, preferably 10 pm or less, more preferably 1 pm or less.

<Gas separation membrane module>

In a case where the organic-inorganic hybrid membrane composite in accordance with an aspect of the present invention is used in industrial gas separation, the organic-inorganic hybrid membrane composite is preferably used in a form of module. Examples of the module include a spiral type, a hollow fiber type, a pleats type, a tubular type, a plate-and-frame type, and the like, and the spiral type (spiral wound type or SW type) or the hollow fiber type is preferable.

<Method for producing organic-inorganic hybrid membrane composite>

A method for producing an organic-inorganic hybrid membrane in accordance with an aspect of the present invention includes: a dispersing step of dispersing an inorganic filler in a matrix polymer and optionally in a solvent; a casting step of supporting, on a flat surface or curved surface, a dispersion liquid in which the inorganic filler has been dispersed in the matrix polymer and optionally in the solvent; and a curing step of removing the solvent in the cast dispersion liquid and curing the polymer. As a pre-step of the dispersing step, it is possible to further include a kneading step of combining a matrix polymer and a gas-selective inorganic filler in a viscous condition, and a diluting step of diluting, with a solvent, a mixture obtained in the kneading step. The curing step of curing the polymer may further include a step of curing the matrix polymer under pressurization. In the step of curing the matrix polymer under pressurization, it is preferable to carry out warming in order to promote curing of the polymer.

In the casting step of the method for producing an organic-inorganic hybrid membrane in accordance with an aspect of the present invention, the dispersion liquid is cast by being applied to or supported on the porous support layer (on which a gutter layer may be formed) by a die coater, a blade coater, a bar coater, a spin coater, immersion, immersion and suction, or the like. The method for producing an organic-inorganic hybrid membrane in accordance with an aspect of the present invention may further include a gutter layer forming step of forming a gutter layer on the porous support layer prior to the casting step.

[Kneading step]

The method for producing an organic-inorganic hybrid membrane in accordance with an aspect of the present invention may include a kneading step. The kneading step is a step of combining a matrix polymer and a gas-selective inorganic filler in a viscous condition. In the viscous mixing step, in order to improve dispersibility, leveling property, and

handleability, at least one selected from the group consisting of a surface modifier and a dispersion agent may be added and kneaded with the matrix polymer and the inorganic filler. In this specification, the term "viscous mixing" has a meaning that is generally understood by a person skilled in the art. For example, the term "viscous mixing" means, but not limited to, operation to knead a matrix polymer and an inorganic filler under a condition in which at least a part of the matrix polymer is not dissolved in a solvent.

In a case where viscous mixing is carried out in the kneading step, high shearing force is applied to the inorganic filler, and aggregated secondary particles are dispersed as primary particles. Therefore, it is possible to improve dispersibility of the inorganic filler. Conventionally, in a case where a composition containing a polymer and particles is produced by viscous mixing, a large amount of the polymer is adsorbed on the particle surface, and thus the particles are coated. Therefore, properties (e.g., electrical conductivity, heat transfer property, and the like) which are derived from the particles are sometimes not exerted in the composition. However, in an aspect of the present invention, the matrix polymer has a certain degree of gas permeation performance. Therefore, even in a state in which the inorganic filler particles are coated in the organic-inorganic hybrid membrane, the gas permeation performance and gas separation performance derived from the inorganic filler are sufficiently exerted.

In the kneading step, a mixing ratio of the matrix polymer and the inorganic filler can be adjusted as appropriate, and is preferably adjusted to achieve the foregoing preferable contained amount of the inorganic filler.

In the kneading step, the mixing ratio of the matrix polymer and the inorganic filler may be adjusted such that a viscosity of a resultant mixture falls within an intended numerical value range. By adjusting the viscosity of the resultant mixture, it is possible to adjust shearing force applied to the inorganic filler in the kneading step, and dispersibility of the inorganic filler can be further improved. For example, by the kneading step, a mixture may be obtained which has a viscosity of preferably 30 Pa·s or more, more preferably 40 Pa·s or more, further preferably 50 Pa·s or more. Note that an upper limit value of the viscosity of the resultant mixture is not particularly limited from the viewpoint of applying high shearing force to the inorganic filler. For example, from the viewpoint of reducing a load applied to a device that is used in the kneading step, a mixture having a viscosity of preferably 500 Pa·s or less, more preferably 300 Pa·s or less may be obtained by the kneading step. In this specification, the viscosity refers to a viscosity which is measured with a cone-plate type viscometer at 25°C.

Examples of a viscous mixing method in the kneading step include methods in each of which a mixer, a bead mill, a ball mill, a twin screw kneader, a three-roll mill, a planetary centrifugal mixer, or the like is used. In the kneading step, an additive such as a curing agent may be added in a range in which shearing force applied to the inorganic filler is not excessively reduced.

It is preferable that the inorganic filler before viscous mixing is sufficiently dried. A temperature at which the inorganic filler is dried before the matrix polymer and the inorganic filler are combining in a viscous condition is typically 100°C or more, preferably 120°C or more, more preferably 150°C or more, further preferably 200°C or more, typically 300°C or less, and a drying time is typically 3 hours or more, preferably 5 hours or more, more preferably 8 hours or more, further preferably 12 hours or more, typically 48 hours or less, preferably 30 hours or less, more preferably 20 hours or less. In a case where the drying temperature and the drying time are within the above ranges, it is possible to sufficiently remove moisture from zeolite in an economical time.

[Diluting step]

The diluting step in accordance with an aspect of the present invention is a step of mixing, with a solvent, a mixture of a matrix polymer and a gas-selective inorganic filler. In the diluting step, in order to improve dispersibility, leveling property, and handleability, at least one selected from the group consisting of a surface modifier and a dispersion agent may be added and dilution with the solvent may be carried out in the presence of such an agent(s). The mixture has a high viscosity, and is sometimes difficult to form a membrane. However, by carrying out the diluting step, the viscosity of the mixture in which primary particles of the inorganic filler are dispersed is adjusted, and this makes it easy to carry out membrane formation. In the diluting step in a case where the kneading step is carried out, the mixture obtained in the kneading step is diluted by being mixed with a solvent.

The solvent is not particularly limited, provided that the matrix polymer and raw materials of the matrix polymer can be solved in the solvent. Examples of the solvent that can be used include toluene, hexane, ethyl acetate, methyl ethyl ketone, N-methylpyrrolidone, and the like. A solvent that can achieve high dispersibility of the inorganic filler is preferable. Most of the matrix polymer and raw materials of the matrix polymer are hydrophobic. Meanwhile, a surface of inorganic filler such as zeolite is hydrophilic. Therefore, a solvent (such as ethyl acetate or methyl ethyl ketone) having a moderate level of polarity is preferable.

A proportion of the solvent with respect to the inorganic filler varies according to an amount of the inorganic filler and a type of the polymer. It is preferable to adjust an amount of the solvent so as to achieve a viscosity with which membrane formation can be easily carried out, according to the membrane formation method.

Examples of a method for mixing a solvent with the mixture include, in addition to typical stirring and kneading,

ultrasonic disintegration and dispersion, use of a planetary centrifugal mixer, and the like. In the diluting step, an additive such as a curing agent may be added to the mixture.

[Dispersing step]

The dispersing step in accordance with an aspect of the present invention refers to a step of dispersing an inorganic filler in a matrix polymer and optionally in a solvent. Specifically, an inorganic filler is sufficiently dried. Then, a matrix polymer dissolved in a solvent or raw materials of a matrix polymer without a solvent before polymerization and curing are sufficiently mixed with the inorganic filler so that the inorganic filler is sufficiently dispersed. Then, in a case where a polymer for which a curing agent is needed is used, a curing agent is further added and mixed well to disperse the inorganic filler. At this time, after the inorganic filler is dispersed in the solvent, the matrix polymer can be added and further mixed well to disperse the inorganic filler. Examples of a method for dispersing the inorganic filler include ultrasonic disintegration and dispersion, use of a planetary centrifugal mixer, and the like, in addition to stirring using a typical mixer, a bead mill, a ball mill, or the like and kneading using a twin screw kneader, a three-roll mill, or the like. In the dispersing step, at least one selected from the group consisting of a surface modifier and a dispersion agent may be added in order to improve dispersibility, leveling property, and handleability. The dispersing step encompasses the kneading step and the diluting step.

The solvent is not particularly limited, provided that the matrix polymer and raw materials of the matrix polymer can be solved in the solvent. Examples of the solvent that can be used include toluene, hexane, ethyl acetate, methyl ethyl ketone, N-methylpyrrolidone, and the like. A solvent that can achieve high dispersibility of the inorganic filler is preferable. Most of the matrix polymer and raw materials of the matrix polymer are hydrophobic. Meanwhile, a surface of inorganic filler such as zeolite is hydrophilic. Therefore, a solvent (such as ethyl acetate or methyl ethyl ketone) having a moderate level of polarity is preferable.

[Casting step]

The casting step is a step of supporting, on a flat surface or a curved surface, a dispersion liquid which has been obtained in the dispersing step and which contains the inorganic filler, the matrix polymer, and the solvent. Examples of the flat surface or curved surface on which the dispersion liquid is supported include an inner surface or outer surface of a porous support layer in the form of hollow fiber, an upper surface of a porous support layer in the form of flat membrane, and an upper surface of a gutter layer which is formed on a porous support layer.

As an application or supporting method, application using a die coater, a blade coater, a bar coater, or a spin coater is preferable, a die coater, a blade coater, or a bar coater is more preferable, a die coater or a blade coater is particularly preferable, in a case where a porous support layer in the form of flat membrane is used.

In a case where a porous support layer in the form of hollow fiber is used, for example, membrane formation may be carried out while supporting the dispersion liquid on the support layer with a method such as impregnation, suction, or pressurization.

Membrane formation may be carried out on a gutter layer which has been prepared as necessary on a porous support layer in advance. As a method for forming a gutter layer, a method known to a person skilled in the art can be used. For example, it is possible to employ a method in which any of the foregoing substances is applied onto the porous support layer as a substance to form a gutter layer, and the substance is cured by heating.

[Curing step]

In an aspect of the present invention, a curing step of curing the matrix polymer is carried out after the solvent is removed after the casting step. In the curing step, a pressurization curing step of curing the polymer while pressurizing the organic-inorganic hybrid membrane is suitably carried out. By curing the matrix polymer while applying pressure, it is possible to prepare an organic-inorganic hybrid membrane having no voids or reduced voids even in a case where a filling amount of the inorganic filler is large.

The curing step refers to a step of curing the polymer under a predetermined curing condition after the solvent of the dispersion liquid which has been cast by application or supporting in the casting step is removed. After the casting step, the solvent is removed using a vacuum dryer, and the polymer is cured at a predetermined curing temperature for a predetermined curing time or curing the polymer while volatilizing the solvent under a nitrogen airflow using an inert oven. Thus, it is possible to obtain an organic-inorganic hybrid membrane.

The temperature condition of the vacuum dryer is changed as appropriate in accordance with a solvent used. The curing temperature and the curing time are also set to be conditions suitable for a polymer used.

In the curing step, curing of the matrix polymer while applying pressure is more suitably carried out. By curing the matrix polymer while applying pressure, it is possible to prepare an organic-inorganic hybrid membrane having no voids or

reduced voids even in a case where a filling amount of the inorganic filler is large.

In a case where a silicone rubber obtained by curing polyorganosiloxane is used as the matrix polymer, the inorganic filler is, typically, preferably mixed with polyorganosiloxane before curing. Note, however, that an aspect of the present invention is not limited to this.

A means for curing curable polyorganosiloxane is not particularly limited, and a conventionally known method can be employed. From the viewpoint of productivity, a method is preferable in which mixing of the inorganic filler and storage after mixing with the inorganic filler can be stably carried out in atmospheric air. In view of this, a type of curing by addition reaction or irradiation with ultraviolet rays, radial rays, or an electron beam is preferable. In view of easiness and the fact that it is not necessary to control the atmosphere in curing, it is particularly preferable to employ addition reaction.

In membrane formation, curing of the polymer while pressurizing the organic-inorganic hybrid membrane is suitably carried out. By curing the polymer while applying pressure, it is possible to prepare a membrane having no voids or reduced voids even in a case where a filling amount of the inorganic filler is large.

In the curing step, various pressurization methods may be employed, and a method in which pressurization is carried out while warming is preferable. As the method in which pressurization is carried out while warming, for example, it is preferable to employ a method for curing while warming and applying pressure to a membrane using a hot pressing machine, a vacuum hot pressing machine, a vacuum lamination device, a double-belt press, or the like.

A magnitude of pressure is typically 1 MPa or more, preferably 2 MPa or more, more preferably 3 MPa or more, further preferably 4 MPa or more, particularly preferably 5 MPa or more, typically 30 MPa or less, preferably 20 MPa or less, more preferably 10 MPa or less, further preferably 8 MPa or less. In a case where the pressure is within the above range, it is possible to obtain a membrane in which a filling amount of the inorganic filler is large and no voids are formed between the inorganic filler and the matrix polymer, without breaking small pores of the inorganic filler in the organic-inorganic hybrid membrane.

A heating temperature and a heating time may be determined as appropriate according to a curing condition of a matrix polymer used. A heating time while applying pressure is typically 1 minute or more, preferably 5 minutes or more, more preferably 10 minutes or more, typically 2 hours or less, preferably 1 hour or less. Within this range, it is possible to efficiently prepare a membrane having no voids or reduced voids.

[Gutter layer forming step]

The gutter layer forming step in accordance with an aspect of the present invention is a step of forming a gutter layer on the porous support layer prior to the casting step. As a method for forming a gutter layer, a method known to a person skilled in the art can be used. For example, it is possible to employ a method in which any of the foregoing substances is applied onto the porous support layer as a substance to form a gutter layer, and the substance is cured by heating.

[Variation of production method]

In an aspect of the present invention, methods for producing an organic-inorganic hybrid membrane and an organic-inorganic hybrid membrane composite are not limited to the above described embodiment. For example, in an aspect of the present invention, the casting step may be carried out by forming a sacrificial membrane on a flat surface or a curved surface, and supporting, on the sacrificial membrane, the dispersion liquid obtained in the dispersing step. The sacrificial membrane is a membrane which is soluble in a solvent that does not dissolve the organic-inorganic hybrid membrane and a substrate which functions as the flat surface or curved surface. After such a casting step and the following curing step are carried out, the resultant structure in which the substrate, the sacrificial membrane, and the organic-inorganic hybrid membrane are stacked in this order is immersed in a solvent that does not dissolve the substrate and the organic-inorganic hybrid membrane but dissolves the sacrificial membrane. Thus, the organic-inorganic hybrid membrane can be detached from the substrate without breakage of the organic-inorganic hybrid membrane. As the sacrificial membrane and the solvent that dissolves the sacrificial membrane, it is possible to use a sacrificial membrane and a solvent which are known in this technical field.

An organic-inorganic hybrid membrane composite may be produced by (i) scooping up, on the porous support membrane, the organic-inorganic hybrid membrane which has been detached from the substrate by dissolving the sacrificial membrane and which is floating in the solvent, and then (ii) drying the organic-inorganic hybrid membrane and the porous support membrane.

<Gas separation-concentration method>

The organic-inorganic hybrid membrane composite in accordance with an aspect of the present invention can separate and concentrate a gas mixture. Examples of a gas mixture used in a gas separation-concentration method in

accordance with an aspect of the present invention include a gas mixture containing at least one component selected from carbon dioxide, hydrogen, oxygen, nitrogen, methane, ethane, ethylene, propane, propylene, normal butane, isobutane, 1-butene, 2-butene, isobutene, sulfur hexafluoride, helium, carbon monoxide, nitric oxide, water, and the like. Among components of the gas mixture containing the gas, a gas component having high permeance (hereinafter sometimes referred to as gas permeance) permeates the organic-inorganic hybrid membrane and is separated and concentrated, and a gas component having low gas permeance is concentrated on the supply gas side.

Furthermore, the gas mixture more preferably contains at least two types of components among the above components. In this case, as the two types of components, a combination of a component having high gas permeance and a component having low gas permeance is preferable.

Application of gas separation in accordance with an aspect of the present invention is preferably separation and concentration of $CO_2$, separation and concentration of $H_2$, separation and concentration of oxygen, or separation and concentration of nitrogen. It is particularly preferable that the gas separation is used in separation and concentration of $CO_2$.

Examples of separation and concentration of $CO_2$ include removal of carbon dioxide from a natural gas ($CO_2/CH_4$ mixture), $CO_2$ recovery from a landfill gas ($CO_2/CH_4$ mixture), $CO_2$ recovery from an artificially fermented gas ($CO_2/CH_4$ mixture), $CO_2$ recovery from a combustion exhaust gas ($CO_2/N_2$ mixture) at a thermal power plant, and the like.

Examples of separation and concentration of hydrogen include hydrogen recovery in the petroleum refining industry, hydrogen recovery and purification ($H_2$ / CO / $CO_2$/ hydrocarbon mixture) in various reactive processes in the chemical industry, production of high-purity hydrogen for fuel cells, and the like. Hydrogen production for fuel cells is obtained by water vapor modification reaction of methane, and it is necessary to separate hydrogen from a mixed gas of hydrogen, carbon monoxide, methane, and water.

Examples of separation and concentration of oxygen include production of oxygen-enriched gas from air (such as oxygen-enriched air for medical use or burning). In addition, the gas separation is suitably used in production of nitrogen-enriched gas from air by nitrogen separation and concentration (for explosion prevention, oxidation prevention, and the like).

As a gas separation method, it is possible to use a known method. A pressure difference is provided between the gas supply side and the gas permeation side of the membrane, and a gas that is contained in a mixed gas and easily permeates is caused to pass through from the supply side to the permeation side. At this time, the mixed gas on the gas supply side may be pressurized, or the permeation side may be decompressed using a vacuum pump or the like, or both of these may be used.

A pressure difference between the gas supply side and the permeation side is preferably set to optimal pressure for a process applied, and is typically 0.01 MPa or more, preferably 0.05 MPa or more, more preferably 0.08 MPa or more, further preferably 0.1 MPa or more, typically 20 MPa or less, preferably 10 MPa or less, more preferably 5 MPa or less, further preferably 1 MPa or less, further preferably 0.5 MPa or less, particularly preferably 0.2 MPa or less.

In the gas separation-concentration method in accordance with an aspect of the present invention, a sweep gas may be used. The method in which a sweep gas is used is one in which a certain gas is caused to flow to the permeation side, and a gas that has permeated the membrane is recovered.

Pressure of the sweep gas is typically atmospheric pressure, but is not particularly limited. The pressure of the sweep gas is typically 10 MPa or less, preferably 5 MPa or less, more preferably 1 MPa or less, further preferably 0.5 MPa or less, particularly preferably 0.1 MPa or less, most preferably 0.05 MPa or less. A lower limit is typically 0.0 MPa or more.

In the gas separation method in accordance with an aspect of the present invention, a temperature of the supply gas and the membrane may be optimal temperatures for respective processes. The temperature is typically 100°C or less, preferably 80°C or less, more preferably 50°C or less, further preferably 40°C or less, and typically, -30°C or more, preferably -15°C or more, more preferably 0°C or more, further preferably 5°C or more, particularly preferably 10°C or more, most preferably 20°C or more.

<Second aspect>

The following description will discuss, as a second aspect of the present invention, an organic-inorganic hybrid gas separation membrane having both a high gas permeability and a high gas separation factor, and a relevant technique thereof.

< Organic-inorganic hybrid membrane, organic-inorganic hybrid membrane composite>

An organic-inorganic hybrid membrane in accordance with an aspect of the present invention includes a matrix polymer and a gas-selective inorganic filler, the inorganic filler containing zeolite, the zeolite including zeolite particles having an average circularity coefficient of 0.80 or more, a contained amount of the zeolite particles being 35% by mass or

more, and an air permeation amount of the organic-inorganic hybrid membrane being 10000 [L/m$^2$/h] or less.

An organic-inorganic hybrid membrane composite in accordance with an aspect of the present invention includes a porous support layer and an organic-inorganic hybrid membrane formed on the porous support layer, the organic-inorganic hybrid membrane composite having an air permeation amount of 10000 [L/m$^2$/h] or less, the organic-inorganic hybrid membrane containing a matrix polymer and a gas-selective inorganic filler, the inorganic filler containing zeolite, the zeolite including zeolite particles having an average circularity coefficient of 0.80 or more, and a contained amount of the zeolite particles in the organic-inorganic hybrid membrane being 35% by mass or more.

Note that descriptions of the organic-inorganic hybrid membrane in accordance with an aspect of the present invention below are applied also as descriptions of an organic-inorganic hybrid membrane included in the organic-inorganic hybrid membrane composite in accordance with the present invention.

In an aspect of the present invention, the organic-inorganic hybrid membrane refers to a gas separation layer and does not include a support layer, a gutter layer, a protective layer, and the like.

The organic-inorganic hybrid membrane in accordance with an aspect of the present invention may be used as it is as a self-supported membrane having no support layer. Alternatively, the organic-inorganic hybrid membrane may be used in the form of supported membrane in which the organic-inorganic hybrid membrane is formed on an inorganic porous support layer or a porous support layer made of an organic polymer or an inorganic polymer. Examples of the porous support layer made of an organic polymer or an inorganic polymer include a porous organic membrane such as a porous membrane filter and a hollow fiber membrane made of a polymer.

The organic-inorganic hybrid membrane in an aspect of the present invention may be formed on the porous support layer. A gutter layer may be provided between the porous support layer and the organic-inorganic hybrid membrane. A protective layer may be provided on a surface of the organic-inorganic hybrid membrane. A composite including a porous support layer and an organic-inorganic hybrid membrane formed on the porous support layer, and a composite further including, if any, a gutter layer and a protective layer are collectively referred to as an organic-inorganic hybrid membrane composite.

Performance of the organic-inorganic hybrid membrane and the organic-inorganic hybrid membrane composite is expressed by permeation performance of the membrane and separation performance of the membrane.

In the organic-inorganic hybrid membrane composite, it is difficult to measure performance of the organic-inorganic hybrid membrane only. The gas separation performance largely relies on the performance of the organic-inorganic hybrid membrane, and performance of the porous support layer has little influence on the gas separation performance. Therefore, the performance of the organic-inorganic hybrid membrane composite may be regarded as the performance of the organic-inorganic hybrid membrane.

The permeation performance of the organic-inorganic hybrid membrane and the organic-inorganic hybrid membrane composite is expressed by a gas permeability (hereinafter sometimes referred to as a permeability) or gas permeance (hereinafter sometimes referred to as permeance) of the organic-inorganic hybrid membrane and the organic-inorganic hybrid membrane composite.

[Permeability]

A permeability $P_A$ [Barrer] = $P_A \times$ 10-10 [cm$^3$·cm/(cm$^2$·s·cmHg)] of a gas A is obtained by (i) dividing a permeation amount per unit area at the time when the gas A permeates a membrane by a difference between a supply pressure and a permeation pressure, and (ii) multiplying a membrane thickness. The gas permeability $P_A$ is expressed by a formula (1) below.

$$(1): P_A \times 10^{-10} = N_A l/(p_2 - p_1)$$

where

$N_A$ is a permeation flux (obtained by dividing a permeation amount per unit time by a membrane area) [cm$^3$ (STP)/(cm$^2$·s)] in a steady state at the time when the gas A permeates the membrane,
l is a membrane thickness [cm],
$p_1$ is a partial pressure [cmHg] of the gas A on the permeation side, and
$p_2$ is a partial pressure [cmHg] of the gas A on the supply side.

A preferable range of the $CO_2$ permeability exhibited by the organic-inorganic hybrid membrane and the organic-inorganic hybrid membrane composite in accordance with an aspect of the present invention is typically 1000 Barrer or more, preferably 3000 Barrer or more, further preferably 5000 Barrer or more, particularly preferably 7000 Barrer or more, most preferably 10000 Barrer or more. An upper limit thereof is not particularly limited and is typically 100000000 Barrer or

less. In a case where the gas permeability is within the above range, a gas processing amount by the organic-inorganic hybrid membrane and the organic-inorganic hybrid membrane composite is sufficiently achieved, and such a membrane is usable in an actual process.

[Permeance]

Gas permeance $R_A$ [mol/(m$^2$·s·Pa)] of a gas A is obtained by dividing a permeation amout per unit area at the time when the gas A permeates a membrane by a difference between a supply pressure and a permeation pressure. The permeance $R_A$ is expressed by a formula (2) below.

$$(2):\ R_A = n_A/(p_2'-p_1')$$

where

$n_A$ is a permeation flux (obtained by dividing a permeation amount per unit time by a membrane area) [mol/(m$^2$·s)] in a steady state at the time when the gas A permeates the membrane,
$p_1$' is a partial pressure [Pa] of the gas A on the permeation side, and
$p_2$' is a partial pressure [Pa] of the gas A on the supply side.

The permeance can also be expressed with the unit [GPU]. In this specification, 1 GPU is $3.35 \times 10^{-10}$ mol/(m$^2$·s·Pa).

A preferable range of the $CO_2$ permeance exhibited by the organic-inorganic hybrid membrane and the organic-inorganic hybrid membrane composite in accordance with an aspect of the present invention is typically $5\times10^{-9}$ [mol/(m$^2$·s·Pa)] or more, preferably $1\times10^{-8}$ [mol/(m$^2$·s·Pa)] or more, more preferably $2\times10^{-8}$ [mol/(m$^2$·s·Pa)], further preferably $5\times10^{-8}$ [mol/(m$^2$·s·Pa)] or more, particularly preferably $1\times10^{-7}$ [mol/(m$^2$·s·Pa)] or more. An upper limit thereof is not particularly limited and is typically $1 \times 10^{-4}$ [mol/(m$^2$·s·Pa)] or less. In a case where the $CO_2$ permeance is within the above range, a gas processing amount by the organic-inorganic hybrid membrane is sufficient, and such a membrane is usable in an actual process.

[Separation factor]

A separation factor $\alpha_{AB}$ of a gas A to a gas B is expressed by a formula (3) below while using a permeability $P_A$ of the gas A and a permeability $P_B$ of the gas B or permeance $R_A$ of the gas A and permeance $R_B$ of the gas B.

$$(3):\ \alpha_{AB} = P_A/P_B = R_A/R_B$$

A preferable range of the separation factor exhibited by the organic-inorganic hybrid membrane and the organic-inorganic hybrid membrane composite in accordance with an aspect of the present invention is, for a separation factor of $CO_2/CH_4$, for example, typically 5 or more, preferably 7 or more, more preferably 10 or more, further preferably 14 or more, particularly preferably 17 or more, most preferably 20 or more. An upper limit thereof is not particularly limited and is typically 1000 or less. In a case where the separation factor is within the above range, a gas that has not been separated and enters the permeation side is reduced in gas separation using the organic-inorganic hybrid membrane, and it is possible to efficiently carry out separation.

A preferable range of the separation factor exhibited by the organic-inorganic hybrid membrane composite in accordance with an aspect of the present invention is, for a separation factor of $CO_2/N_2$, for example, typically 11 or more, preferably 13 or more, more preferably 15 or more, further preferably 20 or more, particularly preferably 25 or more, most preferably 30 or more. An upper limit thereof is not particularly limited and is typically 300 or less, preferably 100 or less, more preferably 70 or less. In a case where the separation factor is within the above range, a gas that has not been separated and enters the permeation side is reduced in gas separation using the organic-inorganic hybrid membrane composite, and it is possible to efficiently carry out separation.

The permeability, the permeance, and a separation factor are calculated by measuring a steady-state gas permeation flux of a membrane by a constant volume/valuable pressure method (Journal of Polymer Science: Part B: Polymer Physics, Vol. 38, 2051-2062 (2000)) using a single-component gas or a mixed gas.

[Air permeation amount]

An air permeation amount of the organic-inorganic hybrid membrane and the organic-inorganic hybrid membrane composite in accordance with an aspect of the present invention is 10000 L/($m^2 \cdot h$) or less. In a case where the air permeation amount is within the above range, the organic-inorganic hybrid membrane has no defects or reduced defects, and therefore can be suitably used as a separation membrane. From a similar viewpoint, an air permeation amount of the organic-inorganic hybrid membrane and the organic-inorganic hybrid membrane composite is preferably 5000 L/($m^2 \cdot h$) or less, more preferably 2000 L/($m^2 \cdot h$) or less, further preferably 1000 L/($m^2 \cdot h$) or less, particularly preferably 800 L/($m^2 \cdot h$) or less, further preferably 650 L/($m^2 \cdot h$) or less, most preferably 350 L/($m^2 \cdot h$) or less. The permeation amount is preferably 0.0 L/($m^2 \cdot h$) or more, and can be, for example, 20 L/($m^2 \cdot h$) or more, for example, 50 L/($m^2 \cdot h$) or more.

In a case where the air permeation amount is within the above range, a defect or a through hole is not present or influence thereof is sufficiently small. Therefore, it is possible to exhibit high separation performance.

Here, the air permeation amount is a permeation amount of air [unit: L/($m^2 \cdot h$) (0°C, equivalent to 1 atmospheric pressure) obtained in a case where, as detailed in Examples, the organic-inorganic hybrid membrane set in a module is placed under atmospheric pressure, and one side of the organic-inorganic hybrid membrane is connected to a vacuum line at 5 kPa.

In this specification, the term "an air permeation amount", when used for an organic-inorganic hybrid membrane composite in which an organic-inorganic hybrid membrane is formed on a porous support layer, means an air permeation amount of a whole organic-inorganic hybrid membrane composite, unless otherwise specified.

The air permeation amount can be adjusted by adjusting, for example, a type of the matrix polymer, a membrane thickness of the organic-inorganic hybrid membrane, a contained amount of the inorganic filler in the organic-inorganic hybrid membrane, and the like.

[Bending-unbending test]

In the organic-inorganic hybrid membrane in accordance with an aspect of the present invention, in a case where at least one of values of a gas permeability and gas permeance after a bending-unbending test (in which the membrane is bent at 180° once along a curved surface having a bending radius (radius of curvature) of 3 mm and is then unbent (returned) substantially to its original shape) is compared with a value before bending, an absolute value of a rate of change (which is an absolute value obtained as follows: (value before bending - value after bending-unbending test)/value before bending)) is preferably 30% or less, more preferably 25% or less, preferably 20% or less, more preferably 10% or less, further preferably 5% or less, particularly preferably 3% or less, most preferably 2% or less. In a case where a value of a separation factor after the bending-unbending test is compared with a value before bending, a rate of change ((value before bending - value after bending-unbending test)/value before bending) is preferably 20% or less, further preferably 10% or less, particularly preferably 5% or less, most preferably 3% or less. In the bending-unbending test, the temperature is room temperature (15°C or more and 35°C or less). The organic-inorganic hybrid membrane may be kept at a state of being bent at 180° (where two regions of the organic-inorganic hybrid membrane obtained by division by the bending extend in parallel with each other) for 5 seconds or more and 10 seconds or less. In the bending-unbending test, a time taken from the start of bending to the completion of bending at 180° is within 10 seconds, and a time taken to unbend (return) the membrane substantially to its original shape is within 10 seconds. In the bending-unbending test, the bending at 180° along the curved surface having a bending radius of 3 mm may be achieved by, for example, winding the organic-inorganic hybrid membrane 180° around a cylindrical tube having a diameter of 6 mm. In the bending-unbending test, a part of the organic-inorganic hybrid membrane where a gas permeates in a permeation test is bent along the curved surface. The substantially original shape refers to a state in which the membrane has visually returned to the original shape. In a case where the organic-inorganic hybrid membrane in accordance with an aspect of the present invention satisfies the foregoing performance, the organic-inorganic hybrid membrane can be used while being bent if necessary. As such, the organic-inorganic hybrid membrane has excellent processability, and can be processed into a spiral type module or a pleats type module without generating a crack or a pinhole in the membrane. In a case where the foregoing performance is satisfied, it means that a crack or a pinhole is not generated in the organic-inorganic hybrid membrane even if the membrane is bent at a high curvature. Therefore, membrane formation in the form of hollow fiber can be carried out without generating a crack or a pinhole in the composite.

[Membrane thickness]

In a case of a self-supported membrane, a membrane thickness of the organic-inorganic hybrid membrane in accordance with an aspect of the present invention is typically 1 pm or more, preferably 5 pm or more, more preferably 10 pm or more, typically 1000 pm or less, preferably 500 pm or less, more preferably 200 pm or less, further preferably 100 pm or less, particularly preferably 50 pm or less.

In the organic-inorganic hybrid membrane composite in which the organic-inorganic hybrid membrane is formed on the porous support layer, a membrane thickness of the organic-inorganic hybrid membrane is typically 0.05 pm or more, preferably 0.1 pm or more, more preferably 1 pm or more, further preferably 2 pm or more, typically 100 pm or less,

preferably 50 pm or less, more preferably 30 pm or less, further preferably 10 pm or less, particularly preferably 5 pm or less. In a case where a gutter layer and/or a protective layer is provided in the organic-inorganic hybrid membrane composite, it is sometimes difficult to obtain a thickness of each of the organic-inorganic hybrid membrane, the gutter layer, and the protective layer because the organic-inorganic hybrid membrane, the gutter layer, and the protective layer are integrally formed. In a case where the organic-inorganic hybrid membrane and a gutter layer and/or a protective layer are integrally formed, the gutter layer and the protective layer also contribute to gas permeation property and gas separation property. Therefore, a membrane thickness of a part (hereinafter, this part is sometimes referred to as a separation relevant layer) excluding the porous support layer in the organic-inorganic hybrid membrane composite is sometimes important. In the organic-inorganic hybrid membrane composite, a thickness of the separation relevant layer is typically 0.05 pm or more, preferably 0.1 pm or more, more preferably 1 pm or more, further preferably 2 pm or more, typically 100 pm or less, preferably 50 pm or less, more preferably 30 pm or less, further preferably 10 pm or less, particularly preferably 5 pm or less.

In a case where thicknesses of the separation relevant layers in the organic-inorganic hybrid membrane and the organic-inorganic hybrid membrane composite are within the above range, it is possible to achieve both high separation performance and high permeance by forming a defect-free membrane in which a defect or a through hole is hardly generated in the organic-inorganic hybrid membrane or the organic-inorganic hybrid membrane composite. In addition, the organic-inorganic hybrid membrane and the organic-inorganic hybrid membrane composite form a membrane having high permeation performance and durability. Moreover, it is possible to obtain a membrane that is resistant to bending and the like and has excellent processability and sufficient flexibility, and the membrane can be formed into a module without generating a crack or a pinhole in the membrane.

[Measurement of membrane thickness]

Measurement of a membrane thickness can be carried out in a manner similar to the measurement of the membrane thickness described above in the first aspect.

[Matrix polymer]

As the matrix polymer, the matrix polymer described above in the first aspect can be used also in the present aspect.

[Inorganic filler]

The gas-selective inorganic filler used in an aspect of the present invention is an inorganic compound that has gas selectivity achieved by a molecular sieve effect and/or adsorption selectivity, with which a certain type of gas is allowed to pass through but another type of gas is not allowed to pass through or permeates at a remarkably low permeability rate. One type of those inorganic fillers may be used alone, or two or more types of such inorganic fillers may be used in combination. Alternatively, the inorganic filler may be used in combination with an inorganic compound having no gas selectivity.

Specific examples of the gas-selective inorganic filler include zeolite, metal organic frameworks (hereinafter sometimes referred to as MOF), and porous coordination polymers (hereinafter sometimes referred to as PCP). The gas-selective inorganic filler used in an aspect of the present invention preferably contains at least one selected from the group consisting of zeolite, MOF, and PCP, and desirably contains at least zeolite.

Examples of MOF used in an aspect of the present invention include a metal organic framework containing zinc ions which are coordinately bound to triazolate and/or oxalate, and a zeolitic imidazolate framework-8 (ZIF-8).

As an inorganic compound other than the gas-selective inorganic filler, it is possible to contain silica, $\alpha$-alumina, $\gamma$-alumina, zirconia, titania, yttria, silicon nitride, boron nitride, silicon carbide, and the like. By adding such inorganic compounds in addition to the gas-selective inorganic filler, membrane formation may be carried out more easily and physical properties of the organic-inorganic hybrid membrane other than the gas permeation property may be improved.

The inorganic filler used in an aspect of the present invention contains zeolite, and the zeolite has, in a case where elements (T elements) which constitute a framework and are not oxygen are all Si, a framework density (hereinafter sometimes referred to as $FD_{Si}$) of typically 16.0 T/1000 $Å^3$ or less, preferably 15.8 T/1000 $Å^3$ or less, more preferably 15.5 T/1000 $Å^3$ or less, further preferably 15.3 T/1000 $Å^3$ or less, particularly preferably 15.2 T/1000 $Å^3$ or less, most preferably 15.1 T/ 1000 $Å^3$ or less, and typically 10 T/ 1000 $Å^3$ or more, preferably 11 T/1000 $Å^3$ or more, more preferably 12 T/1000 $Å^3$ or more.

Here, the framework density (T/1000 $Å^3$) in a case where T elements are all Si means the number of elements which constitute the framework and are not oxygen, i.e., the number of Si per 1000 $Å^3$ of zeolite. This value is determined according to a structure of zeolite. A relation between the framework density and the structure of zeolite is indicated in a

zeolite structure database (https://asia.iza-structure.org/IZA-SC/ftc_table.php). As such, smaller $FD_{Si}$ indicates that more spaces exist in the structure of zeolite.

In a case where zeolite is used in the organic-inorganic hybrid membrane, the matrix polymer sometimes blocks the surfaces of small pores of zeolite or the inside of small pores. In a case where $FD_{Si}$ is within the above range, there are many spaces inside zeolite. Therefore, even if some of the spaces are blocked, it is possible to ensure a gas flow path, and an effect of mixture with zeolite is more likely to be exerted effectively. Thus, a high permeability and high separation performance tend to be exhibited. Moreover, in a case where $FD_{Si}$ is within the above range, a framework of zeolite has sufficient strength. Therefore, zeolite tends to be hardly broken and to be stable, and such a tendency is preferable.

In an aspect of the present invention, a preferable structure of zeolite is typically AEI, AFR, AFS, AFT, AFV, AFX, AFY, AST, AVL, *BEA, BEC, BOZ, BPH, CHA, -CLO, CON, DFO, EAB, EMT, ETR, *-EWT, FAU, GME, -IFT, -IFU, IFW, IRN, IRR, -IRY, ISV, ITE, *-ITN, ITT, -ITV, IWR, IWS, IWV, JSR, JST, KFI, LEV, LTA, MEI, MWW, NPO, NPT, OBW, OSO, PAU, POS, PUN, PWN, RHO, RWY, SAO, SAS, SAV, SBE, SBS, SBT, SFO, SFW, SOV, *-SVY, -SYT, THO, TSC, UFI, USI, UTL, VFI, preferably AEI, AFR, AFS, AFT, AFV, AFX, AFY, AST, AVL, *BEA, BEC, BOZ, BPH, CHA, -CLO, CON, DFO, EMT, ETR, *-EWT, FAU, GME, -IFT, -IFU, IFW, IRN, IRR, -IRY, ISV, ITE, ITT, -ITV, IWR, IWS, IWV, JSR, JST, KFI, LTA, MEI, NPT, OBW, OSO, POS, PUN, PWN, RHO, RWY, SAO, SAS, SAV, SBE, SBS, SBT, SFO, SFW, SOV, *-SVY, -SYT, THO, TSC, UFI, UTL, VFI, more preferably AEI, AFR, AFS, AFT, AFX, AFY, *BEA, BEC, BOZ, BPH, CHA, -CLO, DFO, EMT, ETR, *-EWT, FAU, GME, -IFT, - IFU, IRN, IRR, -IRY, ISV, ITT, -ITV, IWS, IWV, JSR, JST, KFI, LTA, MEI, NPT, OBW, OSO, POS, PUN, RHO, RWY, SAO, SAS, SAV, SBE, SBS, SBT, SFO, SFW, SOV, -SYT, TSC, UFI, VFI, further preferably AEI, AFS, AFT, AFX, AFY, BEC, BOZ, BPH, CHA, -CLO, DFO, EMT, *-EWT, FAU, GME, -IFT, -IFU, IRR, - IRY, ISV, ITT, IWS, IWV, JSR, JST, KFI, LTA, MEI, NPT, OBW, OSO, PUN, RHO, RWY, SAO, SAS, SAV, SBE, SBS, SBT, SFW, SOV, -SYT, TSC, VFI, further preferably AEI, AFX, CHA, EMT, FAU, GME, KFI, LTA, MEI, NPT, RHO, VFI, particularly preferably AEI, AFX, CHA, FAU, most preferably CHA. In a case where the structure of zeolite is the above structure, there are many spaces inside zeolite. Therefore, the matrix polymer does not completely block the small pores, and it is possible to obtain an organic-inorganic hybrid membrane which exhibits high permeation-separation performance.

Zeolite that is mainly used in an aspect of the present invention is not particularly limited, and is preferably zeolite having a 12 or less-membered oxygen ring, more preferably zeolite having a 10 or less-membered oxygen ring, most preferably zeolite having an 8 or less-membered oxygen ring. Typically, zeolite having a 6 or more-membered oxygen ring is preferable, and zeolite having an 8 or more-membered oxygen ring is more preferable.

Here, a value of n of zeolite having an n-membered oxygen ring indicates a value with which the oxygen number is greatest among small pores constituted by oxygen and T elements (which are not oxygen among elements constituting the framework) that form the zeolite framework. For example, in a case where there are small pores having a 12-membered oxygen ring and an 8-membered oxygen ring as in MOR-type zeolite, such zeolite is regarded as zeolite having a 12-membered oxygen ring.

Examples of zeolite having a 12 or less-membered oxygen ring include AEI, AFR, AFS, AFT, AFV, AFX, AFY, AST, AVL, *BEA, BEC, BOZ, BPH, CHA, CON, DFO, EAB, EMT, FAU, GME, IFW, IRN, ISV, ITE, *-ITN, IWR, IWS, IWV, JSR, JST, KFI, LEV, LTA, MEI, MWW, NPO, NPT, OBW, PAU, POS, PUN, PWN, RHO, RWY, SAO, SAS, SAV, SBE, SBS, SBT, SFO, SFW, SOV, THO, TSC, UFI, and USI. Examples of zeolite having a 10 or less-membered oxygen ring include AEI, AFT, AFV, AFX, AST, AVL, BOZ, CHA, EAB, IFW, IRN, ITE, JST, KFI, LEV, LTA, MWW, NPT, OBW, PAU, PWN, RHO, SAS, SAV, SFW, THO, TSC, and UFI. Examples of zeolite having an 8 or less-membered oxygen ring include AEI, AFT, AFV, AFX, AST, AVL, CHA, EAB, IRN, ITE, KFI, LEV, LTA, NPT, PAU, PWN, RHO, SAS, SAV, SFW, THO, TSC, and UFI.

The n-membered oxygen ring structure determines a size of small pores in zeolite. In a case where the n-membered oxygen ring structure is within the above range, zeolite is more likely to exert high gas separation performance. Furthermore, in a case where such zeolite is used in an organic-inorganic hybrid membrane, it is possible to easily bring about an effect of achieving gas separation performance which is higher than that of the matrix polymer.

Examples of zeolite mainly used in an aspect of the present invention include aluminosilicate, aluminophosphate (AlPO), silicoaluminophosphate (SAPO), metalloaluminophosphate (MeAPO), metallo-silicoaluminophosphate (MeAPSO). Aluminosilicate and silicoaluminophosphate (SAPO) are preferable. Aluminosilicate is particularly preferable in terms of durability of zeolite.

An $SiO_2/Al_2O_3$ molar ratio of aluminosilicate is typically 7 or more, preferably 8 or more, more preferably 10 or more, further preferably 12 or more, particularly preferably 15 or more, most preferably 20 or more. An upper limit is typically 2000 or less, preferably 1000 or less, more preferably 500 or less, further preferably 100 or less, particularly preferably 50 or less. In a case where $FD_{Si}$ is within the foregoing range, a lower limit of the $SiO_2/Al_2O_3$ molar ratio of aluminosilicate may be lower, and is typically 0.5 or more, preferably 1 or more, more preferably 3 or more, further preferably 8 or more, further preferably 10 or more, further preferably 12 or more, particularly preferably 15 or more, most preferably 20 or more. An upper limit is typically 2000 or less, preferably 1000 or less, more preferably 500 or less, further preferably 100 or less, particularly preferably 50 or less. In a case where the $SiO_2/Al_2O_3$ molar ratio is within the above range, durability of zeolite is high, and durability of gas separation-permeation performance of the organic-inorganic hybrid membrane tends to be satisfactory. In a case where the $SiO_2/Al_2O_3$ molar ratio is within the above range, hygroscopicity of

zeolite is not excessively high. Therefore, such an $SiO_2/Al_2O_3$ molar ratio is preferable because it is not necessary to carry out pretreatment before using the organic-inorganic hybrid membrane or it is sufficient to carry out heating at a low temperature for a short time. Furthermore, an actual gas separation process would hardly be influenced by moisture in an actual gas. Therefore, merely brief pretreatment would be needed for a gas that is introduced into the organic-inorganic hybrid membrane in the gas separation process, and such brief pretreatment is economical.

The $SiO_2/Al_2O_3$ molar ratio is obtained by X-ray fluorescence analysis (XRF) after a calibration curve is prepared in advance by ICP analysis and XRF. Specifically, the following process is carried out.

A zeolite sample is dissolved in a hydrochloric acid aqueous solution by heating, and then contained amounts (% by mass) of silicon atoms and aluminum atoms are obtained by ICP analysis. Then, a calibration curve of fluorescent X-ray intensity of the analyzed element and an atomic concentration of the analyzed element in the reference sample is prepared. From this calibration curve, contained amounts (% by mass) of silicon atoms and aluminum atoms in the zeolite sample are obtained by XRF.

In an aspect of the present invention, two types of inorganic fillers having different average particle diameters can be used. In a case where two types of inorganic fillers having different average particle diameters are used, the inorganic filler contained in the organic-inorganic hybrid membrane has a particle size distribution having at least two peaks, and a local minimum value exists in the particle size distribution. Hereinafter, zeolite particles having particle diameters larger than the local minimum value of the particle size distribution are referred to as "larger particles," and zeolite particles having particle diameters smaller than the local minimum value of the particle size distribution are referred to as "smaller particles".

[Particle size distribution]

The particle size distribution in an aspect of the present invention is a volume-based particle size distribution, unless otherwise specified. A method for measuring the particle size distribution conforms to the measurement method described above in the first aspect.

In a case where the particle size distribution of the inorganic filler contained in the organic-inorganic hybrid membrane in an aspect of the present invention has at least two peaks, a peak of a greater particle diameter is in a particle diameter between (i) typically 1.5 pm or more, preferably 4 pm or more and (ii) typically 20 pm or less, preferably 15 pm or less, more preferably 10 pm or less, and a peak of a smaller particle diameter is in a particle diameter between (i) typically 0.1 pm or more, preferably 0.2 pm or more and (ii) typically 1 pm or less. By having particle size distributions within those ranges, it is possible to improve a filling factor of the inorganic filler in the organic-inorganic hybrid membrane. Therefore, an organic-inorganic hybrid membrane can be obtained in which performance of the inorganic filler is sufficiently exerted and which has higher separation performance and permeation performance.

An average particle diameter of larger particles of the inorganic filler used in an aspect of the present invention is preferably 1 pm or more, further preferably 4 pm or more, particularly preferably 5 pm or more, typically 100 pm or less, preferably 50 pm or less, more preferably 20 pm or less, further preferably 15 pm or less, particularly preferably 10 pm or less.

An average particle diameter of smaller particles is preferably 0.05 pm or more, preferably 0.1 pm or more, more preferably 0.5 pm or more.

In a case where the average particle diameters of the larger particles and the smaller particles of the inorganic filler are within those ranges, dispersibility of the inorganic filler is satisfactory, it is easy to mix the inorganic filler with the matrix polymer at an arbitrary proportion, and a path is easily formed through which the gas permeates the inorganic filler. Therefore, an effect of improving separation performance and permeation performance by the inorganic filler is more likely to be brought about, and it tends to be easy to obtain an organic-inorganic hybrid membrane that is excellent in both separation performance and permeation performance. Within such a range, the inorganic filler is easily dispersed in the matrix polymer.

In an aspect in which the particle size distribution of the inorganic filler has two peaks, in a case where a particle diameter of a peak of a smaller particle diameter is set to 1, a particle diameter of a peak of a greater particle diameter is typically 1.5 or more, preferably 2.0 or more, more preferably 5.0 or more, further preferably 7.0 or more, typically 100 or less, preferably 50 or less, further preferably 20 or less, particularly preferably 15 or less. In a case where the particle diameter ratio is within the above range, spaces in the inorganic filler are least when the inorganic filler is mixed with the matrix polymer, and it is possible to improve a filling proportion of the inorganic filler. In an aspect in which the particle size distribution of the inorganic filler has two or more peaks, two peaks among the two or more peaks preferably satisfy the above described relation of the particle diameter ratio.

In an aspect in which two types of inorganic fillers having different average particle diameters are used in an aspect of the present invention, in a case where a smaller average particle diameter is set to 1, a greater average particle diameter is typically 1.5 or more, preferably 2.0 or more, more preferably 5.0 or more, further preferably 7.0 or more, typically 100 or less, preferably 50 or less, further preferably 20 or less, particularly preferably 15 or less. In a case where

two types of inorganic fillers having different average particle diameters are used and the greater average particle diameter with respect to the smaller average particle diameter is within the above range, the inorganic filler having the smaller average particle diameter can efficiently fill gaps between the inorganic filler particles having the larger average particle diameter, and it is possible to improve a filling factor of the inorganic filler in the organic-inorganic hybrid membrane. Therefore, an organic-inorganic hybrid membrane can be obtained in which performance of the inorganic filler is sufficiently exerted and which has higher separation performance and permeation performance.

In an aspect in which two or more types of inorganic fillers having different average particle diameters are used, average particle diameters of two of the two or more types of inorganic fillers preferably satisfy the above described relation of the particle diameter ratio.

In an aspect in which two types of inorganic fillers having different average particle diameters are used in an aspect of the present invention, in a case where a mass of smaller particles is set to 1, a mass of larger particles is not particularly limited and is, for example, preferably 3 or more, more preferably 4 or more, further preferably 4.5 or more. Typically, 10 or less is preferable, and 8 or less is preferable, and 6 or less is more preferable. In a case where the mass ratio is within the above range, voids between larger particles are filled with the smaller particles, and this makes it possible to improve a filling factor of the inorganic filler. Note that a mass ratio between larger particles and smaller particles can be calculated from areas of peaks in the particle size distribution of the inorganic filler.

[Method for measuring average particle diameter]

Measurement of an average particle diameter can be carried out in a manner similar to the measurement of the average particle diameter described above in the first aspect.

In a case where the inorganic filler used in an aspect of the present invention has the particle diameter falling within the foregoing range, the inorganic filler may be secondary particles formed by aggregation of small crystal particles or may be primary particles that are crystal particles existing alone. The primary particles are particularly preferable because a gap called a grain boundary is hardly generated between crystals, and therefore a defect (called a void) is hardly caused between a polymer and particles when an organic-inorganic hybrid membrane is formed, and thus a high separation factor tends to be exhibited.

In an aspect of the present invention, in a case where a gas-selective inorganic filler other than zeolite particles having an average circularity coefficient of 0.80 or more is also used, a mass proportion of the entire gas-selective inorganic filler including the zeolite particles relative to a total mass of the organic-inorganic hybrid membrane is typically 35% by mass or more, preferably 37% by mass or more, more preferably 42% by mass or more, further preferably 48% by mass or more, further preferably 52% by mass or more, further preferably 57% by mass or more, particularly preferably 62% by mass or more, further preferably 65% by mass or more, more preferably 70% by mass or more, further preferably 75% by mass or more, most preferably 80% by mass or more. The proportion is typically 99% by mass or less, preferably 95% by mass or less, more preferably 90% by mass or less. In a case where the mass proportion of the inorganic filler is within the above range, the organic-inorganic hybrid membrane is a membrane having excellent processability while maintaining flexible property, and tends to be a membrane exhibiting high separation performance and permeation performance.

In an aspect of the present invention, a contained amount of the zeolite particles having an average circularity coefficient of 0.80 or more relative to the organic-inorganic hybrid membrane is typically 35% by mass or more, preferably 37% by mass or more, more preferably 42% by mass or more, further preferably 48% by mass or more, further preferably 52% by mass or more, further preferably 57% by mass or more, particularly preferably 62% by mass or more, further preferably 65% by mass or more, more preferably 70% by mass or more, further preferably 75% by mass or more, most preferably 80% by mass or more. The proportion is typically 99% by mass or less, preferably 95% by mass or less, more preferably 90% by mass or less. In a case where the contained amount of the gas-selective inorganic filler relative to the organic-inorganic hybrid membrane is within the above range, the organic-inorganic hybrid membrane is a composite having excellent processability while maintaining flexible property, and tends to be a composite exhibiting high separation performance and permeation performance.

The proportion of the inorganic filler in the organic-inorganic hybrid membrane can be measured using the measurement method described above in the first aspect.

In an aspect of the present invention, in a case where the organic-inorganic hybrid membrane contains also an inorganic filler having no gas selectivity, a proportion of a mass (i.e., a total mass of the gas-selective inorganic filler and the inorganic filler having no gas selectivity) of the inorganic filler relative to the total mass of the organic-inorganic hybrid membrane is not particularly limited and is, for example, 35% by mass or more, preferably 37% by mass or more, more preferably 42% by mass or more, further preferably 48% by mass or more, further preferably 52% by mass or more, further preferably 57% by mass or more, particularly preferably 62% by mass or more, further preferably 65% by mass or more, more preferably 70% by mass or more, further preferably 75% by mass or more, most preferably 80% by mass or more. The proportion is typically 99% by mass or less, preferably 95% by mass or less, more preferably 90% by mass or less. In a

case where the mass proportion of the inorganic filler is within the above range, the organic-inorganic hybrid membrane is a membrane having excellent processability while maintaining flexible property, and tends to be a membrane exhibiting high separation performance and permeation performance.

In an aspect of the present invention, a filling proportion of zeolite with respect to the organic-inorganic hybrid membrane is, in terms of volume fraction, typically 20 vol% or more, more preferably 30 vol% or more, further preferably 40 vol% or more, further preferably 50 vol% or more, further preferably 60 vol% or more, particularly preferably 65 vol% or more, most preferably 70 vol% or more. The proportion is typically 99 vol% or less, preferably 95 vol% or less, more preferably 90 vol% or less, further preferably 85 vol% or less, particularly preferably 80 vol% or less. In a case where the volume fraction of zeolite with respect to the volume of the organic-inorganic hybrid membrane is within the above range, the organic-inorganic hybrid membrane is a membrane having excellent processability while maintaining flexible property, and tends to be a membrane exhibiting high separation performance and permeation performance.

The volume fraction of zeolite relative to the organic-inorganic hybrid membrane can be measured in a manner similar to the method described above in the first aspect.

In an aspect of the present invention, in a case where zeolite and an inorganic filler other than zeolite are used in combination, a proportion of a mass of the inorganic filler other than zeolite relative to a mass of zeolite is typically 30% or less, preferably 20% or less, more preferably 10% or less, further preferably 5% or less. A lower limit thereof is not particularly limited and is typically 0.1% or more. In a case where the mass percentage of the inorganic filler other than zeolite is within the above range, the obtained organic-inorganic hybrid membrane is a membrane having excellent processability while maintaining flexible property, and tends to be a membrane exhibiting high separation performance and permeation performance.

The shape of the inorganic filler used in an aspect of the present invention is not particularly limited, and the shape of the inorganic filler is a shape which has an average circularity coefficient of preferably 0.80 or more, more preferably 0.90 or more, typically 1.0 or less. In a case where the average circularity coefficient is within the above range, fluidity of particles is high. This makes it possible to improve a filling factor of particles, and it is particularly possible to improve the filling factor when membrane formation and curing are carried out under pressurization. The circularity coefficient here is expressed by $4\pi S/L^2$, where S represents an area of two-dimensional projection image of a particle of an inorganic filler used, and L represents a circumferential length of the particle. In a case where the particle is a true sphere, the circularity coefficient is 1.0, and the value is larger as the shape is closer to a true sphere. Therefore, a shape having an average circularity coefficient of 0.80 or more is, for example, a spherical shape or a rugby ball shape. A specific method for calculating the average circularity coefficient here is as follows.

[Method for calculating average circularity coefficient]

The average circularity coefficient can be measured in a manner similar to the method described above in the first aspect.

In an aspect of the present invention, in a case where a particle size distribution of the inorganic filler contained in the organic-inorganic hybrid membrane has at least two peaks, from the viewpoint of further enhancing the filling factor of zeolite particles, an average circularity coefficient of larger particles is more preferably 0.80 or more, and particularly preferably 0.90 or more. In this case, the shape of the smaller particles is not particularly limited, and the particle shape is preferably a spherical shape, a rugby ball shape, a cubic shape, a rectangular parallelepiped shape, a hexagonal prism shape, more preferably a spherical shape and a cubic shape, most preferably a spherical shape. An average circularity coefficient of the smaller particles is not particularly limited and is preferably 0.80 or more. In a case where the shape of the inorganic filler is any of those shapes, it is possible to increase a filling amount of the inorganic filler, and it is possible to obtain an organic-inorganic hybrid membrane having high separation property and permeation property. As the circularity coefficient approaches 1, the shape of particles is closer to a sphere. The circularity coefficient is 1.0 when a particle is a true sphere, and the value is larger as the shape is closer to the true sphere.

The inorganic filler having the above shape can be obtained by controlling a synthesis method or can be obtained by physically grinding synthesized powder.

A surface of the inorganic filler used in an aspect of the present invention may be modified. Surface modification of the inorganic filler can be carried out in a manner similar to the method described above in the first aspect.

The zeolite used in an aspect of the present invention may be optionally subjected to ion exchange. Ion exchange can be carried out in a manner similar to the method described above in the first aspect.

[Support layer]

The organic-inorganic hybrid membrane in accordance with an aspect of the present invention may be a self-supported membrane or may be formed on a support layer. The support layer is suitably a porous support layer, from the viewpoint of not impairing the permeation performance of the organic-inorganic hybrid membrane. As the porous support

layer, it is possible to use one similar to the porous support layer described above in the first aspect.

[Penetration of matrix polymer into porous support layer and measurement thereof]

A part of the matrix polymer constituting the organic-inorganic hybrid membrane may penetrate into the porous support layer. A preferable degree of penetration and a measurement method thereof conform to the numerical value range and the method described above in the first aspect.

[Gutter layer]

The organic-inorganic hybrid membrane in an aspect of the present invention may be formed on the porous support layer. Alternatively, in a case of being formed above the porous support layer, the organic-inorganic hybrid membrane may be formed on a gutter layer that is formed on the porous support layer. In a case where the organic-inorganic hybrid membrane is formed on the porous support layer via the gutter layer, it is possible to avoid or reduce defects in the organic-inorganic hybrid membrane which are caused because, when the organic-inorganic hybrid membrane is formed, the matrix polymer and a solvent used in membrane formation excessively penetrate into the porous support membrane. Furthermore, the matrix polymer and the solvent used in membrane formation do not excessively penetrate into the porous support membrane. Therefore, it is possible to form a thinner organic-inorganic hybrid membrane without defect.

Components and a thickness of the gutter layer can be similar to the components and the thickness described above in the first aspect.

[Protective layer]

In an aspect of the present invention, a protective layer may be formed on the organic-inorganic hybrid membrane, which is a separation layer, for use in separation.

Components and a thickness of the protective layer can be similar to the components and the thickness described above in the first aspect.

<Gas separation membrane module>

In a case where the organic-inorganic hybrid membrane in accordance with an aspect of the present invention is used in industrial gas separation, the organic-inorganic hybrid membrane is preferably used in a form of module as a membrane combined with a support layer. Examples of the module include a spiral type, a hollow fiber type, a pleats type, a tubular type, a plate-and-frame type, and the like, and the spiral type (spiral wound type or SW type) or the hollow fiber type is preferable.

<Method for producing organic-inorganic hybrid membrane and organic-inorganic hybrid membrane composite>

A method for producing an organic-inorganic hybrid membrane and an organic-inorganic hybrid membrane composite in accordance with an aspect of the present invention includes: a dispersing step of dispersing an inorganic filler in a matrix polymer and optionally in a solvent; a casting step of supporting, on a flat surface or curved surface, a dispersion liquid in which the inorganic filler has been dispersed in the matrix polymer and optionally in the solvent; and a curing step of removing the solvent in the cast dispersion liquid and curing the polymer. As a prestep of the dispersing step, it is possible to further include a kneading step of combining a matrix polymer and a gas-selective inorganic filler in a viscous condition, and a diluting step of diluting, with a solvent, a mixture obtained in the kneading step. The curing step of curing the polymer may further include a step of curing the matrix polymer under pressurization. In the step of curing the matrix polymer under pressurization, it is preferable to carry out warming in order to promote curing of the polymer. In an aspect in which an organic-inorganic hybrid membrane is formed on a porous support layer, the method for producing an organic-inorganic hybrid membrane in accordance with an aspect of the present invention may further include a gutter layer forming step of forming a gutter layer on the porous support layer prior to the casting step, and may further include a step of forming a protective layer prior to or after the curing step.

As a method for forming a gutter layer, a method known to a person skilled in the art can be used. For example, it is possible to employ a method in which any of the foregoing substances is applied onto the porous support layer as a substance to form a gutter layer, and the substance is cured by heating.

In a case where an organic-inorganic hybrid membrane in an aspect in which a particle size distribution of the inorganic filler has at least two peaks is produced, two types of zeolite particles may be mixed, the two types having respective particle diameters of peaks corresponding to the two peaks, in the volume-based particle size distribution. The

particle diameters of peaks, average particle diameters, shapes, and average circularity coefficients of the zeolite particles are more preferably those corresponding to the foregoing preferable particle diameters of peaks, average particle diameters, shapes, and average circularity coefficients of larger particles and smaller particles. Masses of the larger zeolite particles and the smaller zeolite particles more preferably satisfy the mass ratio of the larger particles and the smaller particles described above.

[Kneading step]

The kneading step in accordance with an aspect of the present invention is a step of combining a matrix polymer and a gas-selective inorganic filler in a viscous condition. In the viscous mixing, in order to improve dispersibility, leveling property, and handleability, at least one selected from the group consisting of a surface modifier and a dispersion agent may be added and kneaded with the matrix polymer and the inorganic filler. In this specification, the term "viscous mixing" has a meaning that is generally understood by a person skilled in the art. For example, the term "viscous mixing" means, but not limited to, operation to knead a matrix polymer and an inorganic filler under a condition in which at least a part of the matrix polymer is not dissolved in a solvent.

In a case where viscous mixing is carried out in the kneading step, high shearing force is applied to the inorganic filler, and aggregated secondary particles are dispersed as primary particles. Therefore, it is possible to improve dispersibility of the inorganic filler. Conventionally, in a case where a composition containing a polymer and particles is produced by viscous mixing, a large amount of the polymer is adsorbed on the particle surface, and thus the particles are coated. Therefore, properties (e.g., electrical conductivity, heat transfer property, and the like) which are derived from the particles are sometimes not exerted in the composition. However, in an aspect of the present invention, the matrix polymer has a certain degree of gas permeation performance. Therefore, even in a state in which the inorganic filler particles are coated in the organic-inorganic hybrid membrane, the gas permeation performance and separation performance derived from the inorganic filler are sufficiently exerted.

In the kneading step, a mixing ratio of the matrix polymer and the inorganic filler can be adjusted as appropriate, and is preferably adjusted to achieve the foregoing preferable contained amount of the inorganic filler.

In the kneading step, the mixing ratio of the matrix polymer and the inorganic filler may be adjusted such that a viscosity of a resultant mixture falls within an intended numerical value range. By adjusting the viscosity of the resultant mixture, it is possible to adjust shearing force applied to the inorganic filler in the kneading step, and dispersibility of the inorganic filler can be further improved. For example, by the kneading step, a mixture may be obtained which has a viscosity of preferably 30 Pa·s or more, more preferably 40 Pa·s or more, further preferably 50 Pa·s or more. Note that an upper limit value of the viscosity of the resultant mixture is not particularly limited from the viewpoint of applying high shearing force to the inorganic filler. For example, from the viewpoint of reducing a load applied to a device that is used in the kneading step, a mixture having a viscosity of preferably 500 Pa·s or less, more preferably 300 Pa·s or less may be obtained by the kneading step. In this specification, the viscosity refers to a viscosity which is measured with a cone-plate type viscometer at 25°C.

Examples of a viscous mixing method in the kneading step include methods in each of which a planetary centrifugal mixer or the like is used. In the kneading step, an additive such as a curing agent may be added in a range in which shearing force applied to the inorganic filler is not excessively reduced.

It is preferable that the inorganic filler before viscous mixing is sufficiently dried. A temperature at which the inorganic filler is dried before the matrix polymer and the inorganic filler are combined in a viscous condition is typically 100°C or more, preferably 120°C or more, more preferably 150°C or more, further preferably 200°C or more, typically 300°C or less, and a drying time is typically 3 hours or more, preferably 5 hours or more, more preferably 8 hours or more, further preferably 12 hours or more, typically 48 hours or less, preferably 30 hours or less, more preferably 20 hours or less. In a case where the drying temperature and the drying time are within the above ranges, it is possible to sufficiently remove moisture from zeolite in an economical time.

[Diluting step]

The diluting step in accordance with an aspect of the present invention is a step of mixing, with a solvent, a mixture of a matrix polymer and a gas-selective inorganic filler. In the diluting step, in order to improve dispersibility, leveling property, and handleability, at least one selected from the group consisting of a surface modifier and a dispersion agent may be added and dilution with the solvent may be carried out in the presence of such an agent(s). The mixture has a high viscosity, and is sometimes difficult to form a membrane. However, by carrying out the diluting step, the viscosity of the mixture in which primary particles of the inorganic filler are dispersed is adjusted, and this makes it easy to carry out membrane formation. In an aspect in which the kneading step is carried out, a step of mixing a solvent with a mixture obtained in the kneading step is also an aspect of the diluting step.

The solvent is not particularly limited, provided that the matrix polymer and raw materials of the matrix polymer

can be solved in the solvent. Examples of the solvent that can be used include toluene, hexane, ethyl acetate, methyl ethyl ketone, N-methylpyrrolidone, and the like. A solvent that can achieve high dispersibility of the inorganic filler is preferable. Most of the matrix polymer and raw materials of the matrix polymer are hydrophobic. Meanwhile, a surface of inorganic filler such as zeolite is hydrophilic. Therefore, a solvent (such as ethyl acetate or methyl ethyl ketone) having a moderate level of polarity is preferable.

A proportion of the solvent with respect to the inorganic filler varies according to an amount of the inorganic filler and a type of the polymer. It is preferable to adjust an amount of the solvent so as to achieve a viscosity with which membrane formation can be easily carried out, according to the membrane formation method.

Examples of a method for mixing a solvent with the mixture include, in addition to typical stirring and kneading, ultrasonic disintegration and dispersion, use of a planetary centrifugal mixer, and the like. In the diluting step, an additive such as a curing agent may be added to the mixture.

[Dispersing step]

The dispersing step in accordance with an aspect of the present invention refers to a step of dispersing an inorganic filler in a matrix polymer and optionally in a solvent. Specifically, an inorganic filler is sufficiently dried. Then, a matrix polymer dissolved in a solvent or raw materials of a matrix polymer without a solvent before polymerization and curing are sufficiently mixed with the inorganic filler so that the inorganic filler is sufficiently dispersed. Then, in a case where a polymer for which a curing agent is needed is used, a curing agent is further added and mixed well to disperse the inorganic filler. At this time, after the inorganic filler is dispersed in the solvent, the matrix polymer can be added and further mixed well to disperse the inorganic filler. Examples of a method for dispersing the inorganic filler include ultrasonic disintegration and dispersion, use of a planetary centrifugal mixer, and the like, in addition to stirring using a typical mixer, a bead mill, a ball mill, or the like and kneading using a twin screw kneader, a three-roll mill, or the like. In the dispersing step, at least one selected from the group consisting of a surface modifier and a dispersion agent may be added in order to improve dispersibility, leveling property, and handleability. The dispersing step encompasses the kneading step and the diluting step.

The solvent is not particularly limited, provided that the matrix polymer and raw materials of the matrix polymer can be solved in the solvent. Examples of the solvent that can be used include toluene, hexane, ethyl acetate, methyl ethyl ketone, N-methylpyrrolidone, and the like. A solvent that can achieve high dispersibility of the inorganic filler is preferable. Most of the matrix polymer and raw materials of the matrix polymer are hydrophobic. Meanwhile, a surface of inorganic filler such as zeolite is hydrophilic. Therefore, a solvent (such as ethyl acetate or methyl ethyl ketone) having a moderate level of polarity is preferable.

[Casting step]

The casting step in accordance with an aspect of the present invention is a step of supporting, on a flat surface or a curved surface, the dispersion liquid obtained in the dispersing step. Examples of the flat surface and the curved surface include an inner surface of a container such as a petri dish, an upper surface of a release film, an upper surface of a flat and smooth plate such as a glass plate which has been subjected to release treatment as necessary, an inner surface or outer surface of the porous support layer, an upper surface of a gutter layer formed on a porous support layer, and the like.

For example, the dispersion liquid may be cast by being applied or supported onto a Teflon (registered trademark) petri dish, a release film, a flat and smooth plate such as a glass plate which has been subjected to release treatment as necessary, a porous support layer (on which a gutter layer may be formed), by a die coater, a blade coater, a bar coater, a spin coater, immersion, immersion and suction, or the like.

For example, in a case where a porous support layer in the form of flat membrane is used, membrane formation is carried out with a constant thickness on a support layer using a blade coater, a die coater, a bar coater, or a spin coater. Membrane formation may be carried out on a gutter layer which has been prepared as necessary on a porous support layer in advance. As a method for forming a gutter layer, a method known to a person skilled in the art can be used. For example, it is possible to employ a method in which any of the foregoing substances is applied onto the porous support layer as a substance to form a gutter layer, and the substance is cured by heating. Alternatively, membrane formation can be carried out while supporting the dispersion liquid on the support layer with a method such as impregnation, suction, or pressurization.

In a case where a porous support layer in the form of hollow fiber is used, membrane formation is carried out while supporting the dispersion liquid on the support layer with a method such as immersion, impregnation, suction, or pressurization. Membrane formation may be carried out on a gutter layer which has been prepared as necessary on a porous support layer in advance. As a method for forming a gutter layer, a method known to a person skilled in the art can be used. For example, it is possible to employ a method in which any of the foregoing substances is applied onto the porous support layer as a substance to form a gutter layer, and the substance is cured by heating.

[Curing step]

The curing step in accordance with an aspect of the present invention refers to a step of curing the polymer under a predetermined curing condition after the solvent of the dispersion liquid which has been applied, supported, or cast in the casting step is removed. After the casting step, the solvent is removed using a vacuum dryer, and the polymer is cured at a predetermined curing temperature for a predetermined curing time or curing the polymer while volatilizing the solvent under a nitrogen airflow using an inert oven. Thus, it is possible to obtain an organic-inorganic hybrid membrane.
The temperature condition of the vacuum dryer is changed as appropriate in accordance with a solvent used. The curing temperature and the curing time are also set to be conditions suitable for a polymer used.
In the curing step, curing of the matrix polymer while applying pressure is more suitably carried out. By curing the matrix polymer while applying pressure, it is possible to prepare an organic-inorganic hybrid membrane having no voids or reduced voids even in a case where a filling amount of the inorganic filler is large.
In a case where a silicone rubber obtained by curing polyorganosiloxane is used as the matrix polymer, the inorganic filler is, typically, preferably mixed with polyorganosiloxane before curing. Note, however, that an aspect of the present invention is not limited to this.
A means for curing curable polyorganosiloxane is not particularly limited, and a conventionally known method can be employed. From the viewpoint of productivity, a method is preferable in which mixing of the inorganic filler and storage after mixing with the inorganic filler can be stably carried out in atmospheric air. In view of this, a type of curing by addition reaction or irradiation with ultraviolet rays, radial rays, or an electron beam is preferable. In view of easiness and the fact that it is not necessary to control the atmosphere in curing, it is particularly preferable to employ addition reaction.
In membrane formation, curing of the polymer while pressurizing the organic-inorganic hybrid membrane is suitably carried out. By curing the polymer while applying pressure, it is possible to prepare a membrane having no voids or reduced voids even in a case where a filling amount of the inorganic filler is large.
In the curing step, various pressurization methods may be employed, and a method in which pressurization is carried out while warming is preferable. As the method in which pressurization is carried out while warming, for example, it is preferable to employ a method for curing while warming and applying pressure to a membrane using a hot pressing machine, a vacuum hot pressing machine, a vacuum lamination device, a double-belt press, or the like.
A magnitude of pressure is typically 1 MPa or more, preferably 2 MPa or more, more preferably 3 MPa or more, further preferably 4 MPa or more, particularly preferably 5 MPa or more, typically 30 MPa or less, preferably 20 MPa or less, more preferably 10 MPa or less, further preferably 8 MPa or less. In a case where the pressure is within the above range, it is possible to obtain a membrane in which a filling amount of the inorganic filler is large and no voids are formed between the inorganic filler and the matrix polymer, without breaking small pores of the inorganic filler in the organic-inorganic hybrid membrane.
A heating temperature and a heating time may be determined as appropriate according to a curing condition of a matrix polymer used. A heating time while applying pressure is typically 1 minute or more, preferably 5 minutes or more, more preferably 10 minutes or more, typically 2 hours or less, preferably 1 hour or less. Within this range, it is possible to efficiently prepare a membrane having no voids or reduced voids.

[Gutter layer forming step]

The gutter layer forming step in accordance with an aspect of the present invention is a step of forming a gutter layer on the porous support layer prior to the casting step. As a method for forming a gutter layer, a method known to a person skilled in the art can be used. For example, it is possible to employ a method in which any of the foregoing substances is applied onto the porous support layer as a substance to form a gutter layer, and the substance is cured by heating.

[Variation of production method]

In an aspect of the present invention, methods for producing an organic-inorganic hybrid membrane and an organic-inorganic hybrid membrane composite are not limited to the above described embodiment. For example, in an aspect of the present invention, the casting step may be carried out by forming a sacrificial membrane on a flat surface or a curved surface, and supporting, on the sacrificial membrane, the dispersion liquid obtained in the dispersing step. Formation of the sacrificial membrane can be carried out in a manner similar to the method described above in the first aspect.

<Gas separation-concentration method>

The organic-inorganic hybrid membrane in accordance with an aspect of the present invention can separate and

concentrate a gas mixture. A gas separation-concentration method using the organic-inorganic hybrid membrane in accordance with the second aspect can be carried out in a manner similar to the gas separation-concentration method described above in the first aspect.

<Third aspect>

The following description will discuss, as a third aspect of the present invention, a new method for producing an organic-inorganic hybrid membrane having an excellent filling factor of inorganic filler.

< Organic-inorganic hybrid membrane, organic-inorganic hybrid membrane composite>

For better understanding of an aspect of the present invention, first, a non-limiting configuration of an organic-inorganic hybrid membrane and an organic-inorganic hybrid membrane composite will be described which are produced by a method for producing an organic-inorganic hybrid membrane and an organic-inorganic hybrid membrane composite in accordance with an aspect of the present invention. A configuration of a method for producing an organic-inorganic hybrid membrane and an organic-inorganic hybrid membrane composite in accordance with an aspect of the present invention will be described later with reference to a configuration of an organic-inorganic hybrid membrane and an organic-inorganic hybrid membrane composite. However, the configuration of the organic-inorganic hybrid membrane and the organic-inorganic hybrid membrane composite described first is not intended to limit the configuration of a method for producing an organic-inorganic hybrid membrane and an organic-inorganic hybrid membrane composite in accordance with an aspect of the present invention. Note that a method for producing an organic-inorganic hybrid membrane and an organic-inorganic hybrid membrane composite in accordance with an aspect of the present invention is specified only by the scope of the accompanying claims.

An organic-inorganic hybrid membrane and an organic-inorganic hybrid membrane composite in accordance with an aspect of the present invention contain, for example, a matrix polymer having a glass transition temperature of 15°C or less and a $CO_2$ permeability of 200 Barrer or more at 35°C and zeolite as an inorganic filler, a contained amount of the inorganic filler relative to the organic-inorganic hybrid membrane being 35% by mass or more, and a framework density in a case where all T elements of the zeolite are silicon being 15.5 T/ 1000 Å or less.

An organic-inorganic hybrid membrane and an organic-inorganic hybrid membrane composite in accordance with another aspect of the present invention contain, for example, a matrix polymer having a glass transition temperature of 15°C or less and a $CO_2$ permeability of 200 Barrer or more at 35°C and zeolite as an inorganic filler, a contained amount of the inorganic filler relative to the organic-inorganic hybrid membrane being 35% by mass or more, and an $SiO_2/Al_2O_3$ molar ratio of the zeolite being 7 or more.

In an aspect of the present invention, the organic-inorganic hybrid membrane refers to a gas separation layer and does not include a support layer, a gutter layer, a protective layer, and the like.

The organic-inorganic hybrid membrane in accordance with an aspect of the present invention may be used as it is as a self-supported membrane having no support layer. Alternatively, the organic-inorganic hybrid membrane may be used in the form of supported membrane in which the organic-inorganic hybrid membrane is formed on an inorganic porous support layer or a porous support layer made of an organic polymer or an inorganic polymer. Examples of the porous support layer made of an organic polymer or an inorganic polymer include a porous organic membrane such as a porous membrane filter and a hollow fiber membrane made of a polymer.

A gutter layer may be provided between the porous support layer and the organic-inorganic hybrid membrane. A protective layer may be provided on a surface of the organic-inorganic hybrid membrane. A composite including a porous support layer and an organic-inorganic hybrid membrane formed on the porous support layer, and a composite further including, if any, a gutter layer and a protective layer are collectively referred to as an organic-inorganic hybrid membrane composite.

Performance of the organic-inorganic hybrid membrane and the organic-inorganic hybrid membrane composite is expressed by permeation performance of the membrane and separation performance of the membrane. The permeation performance of the membrane and the separation performance of the membrane in an aspect of the present invention conform to those described above in the second aspect.

[Bending-unbending test]

In the organic-inorganic hybrid membrane in accordance with an aspect of the present invention, in a case where at least one of values of a gas permeability and gas permeance after a bending-unbending test (in which the membrane is bent at 180° once along a curved surface having a bending radius (radius of curvature) of 3 mm and is then unbent (returned) substantially to its original shape) is compared with a value before bending, an absolute value of a rate of change (which is an absolute value obtained as follows: (value before bending - value after bending-unbending test)/value before

bending) is preferably 30% or less, more preferably 25% or less, preferably 20% or less, more preferably 10% or less, further preferably 5% or less, particularly preferably 3% or less, most preferably 2% or less. The condition of the bending-unbending test conforms to the condition described above in the second aspect.

[Membrane thickness]

In a case of a self-supported membrane, a membrane thickness of the organic-inorganic hybrid membrane in accordance with an aspect of the present invention is typically 1 pm or more, preferably 5 pm or more, more preferably 10 pm or more, typically 1000 pm or less, preferably 500 pm or less, more preferably 200 pm or less, further preferably 100 pm or less, particularly preferably 50 pm or less.

In the organic-inorganic hybrid membrane composite in which the organic-inorganic hybrid membrane is formed on the porous support layer, a membrane thickness of the organic-inorganic hybrid membrane is typically 0.05 pm or more, preferably 0.1 pm or more, more preferably 1 pm or more, further preferably 2 pm or more, typically 100 pm or less, preferably 50 pm or less, more preferably 30 pm or less, further preferably 10 pm or less, particularly preferably 5 pm or less. In a case where a gutter layer and/or a protective layer is provided in the organic-inorganic hybrid membrane composite, it is sometimes difficult to obtain a thickness of each of the organic-inorganic hybrid membrane, the gutter layer, and the protective layer because the organic-inorganic hybrid membrane, the gutter layer, and the protective layer are integrally formed. In a case where the organic-inorganic hybrid membrane and a gutter layer and/or a protective layer are integrally formed, the gutter layer and the protective layer also contribute to gas permeation property and gas separation property. Therefore, a membrane thickness of a part (hereinafter, this part is sometimes referred to as a separation relevant layer) excluding the porous support layer in the organic-inorganic hybrid membrane composite is sometimes important. In the organic-inorganic hybrid membrane composite, a thickness of the separation relevant layer is typically 0.05 pm or more, preferably 0.1 pm or more, more preferably 1 pm or more, further preferably 2 pm or more, typically 100 pm or less, preferably 50 pm or less, more preferably 30 pm or less, further preferably 10 pm or less, particularly preferably 5 pm or less.

In a case where thicknesses of the organic-inorganic hybrid membrane and the separation relevant layer in the organic-inorganic hybrid membrane composite are within the above range, it is possible to achieve both high separation performance and high permeance by forming a defect-free membrane in which a defect or a through hole is hardly generated in the organic-inorganic hybrid membrane or the organic-inorganic hybrid membrane composite. In addition, the organic-inorganic hybrid membrane and the organic-inorganic hybrid membrane composite form a membrane having high permeation performance and durability. It is possible to obtain a membrane that is resistant to bending and the like and has excellent processability and sufficient flexibility, and the membrane can be formed into a module without generating a crack or a pinhole in the membrane.

[Measurement of membrane thickness]

Measurement of a membrane thickness can be carried out in a manner similar to the measurement of the membrane thickness described above in the first aspect.

[Matrix polymer]

As the matrix polymer, the matrix polymer described above in the first aspect can be used also in the present aspect.

[Inorganic filler]

The gas-selective inorganic filler used in an aspect of the present invention is an inorganic compound that has gas selectivity achieved by a molecular sieve effect and/or adsorption selectivity, with which a certain type of gas is allowed to pass through but another type of gas is not allowed to pass through or permeates at a remarkably low permeability rate. One type of those inorganic fillers may be used alone, or two or more types of such inorganic fillers may be used in combination. Alternatively, the inorganic filler may be used in combination with an inorganic compound having no gas selectivity.

Specific examples of the gas-selective inorganic filler include zeolite, metal organic frameworks (hereinafter sometimes referred to as MOF), and porous coordination polymers (hereinafter sometimes referred to as PCP). The gas-selective inorganic filler used in an aspect of the present invention preferably contains at least one selected from the group consisting of zeolite, MOF, and PCP, and desirably contains at least zeolite.

Examples of MOF used in an aspect of the present invention include a metal organic framework containing zinc ions which are coordinately bound to triazolate and/or oxalate, and a zeolitic imidazolate framework-8 (ZIF-8).

As an inorganic compound other than the gas-selective inorganic filler, it is possible to contain silica, $\alpha$-alumina, $\gamma$-alumina, zirconia, titania, yttria, silicon nitride, boron nitride, silicon carbide, and the like. By adding such inorganic compounds in addition to the gas-selective inorganic filler, membrane formation may be carried out more easily and physical properties of the organic-inorganic hybrid membrane other than the gas permeation property may be improved.

The inorganic filler used in an aspect of the present invention contains zeolite, and the zeolite has, in a case where elements (T elements) which constitute a framework and are not oxygen are all Si, a framework density (hereinafter sometimes referred to as $FD_{si}$) of typically 16.0 T/ 1000 $Å^3$ or less, preferably 15.8 T/ 1000 $Å^3$ or less, more preferably 15.5 T/ 1000 $Å^3$ or less, further preferably 15.3 T/ 1000 $Å^3$ or less, particularly preferably 15.2 T/ 1000 $Å^3$ or less, most preferably 15.1 T/ 1000 $Å^3$ or less, and typically 10 T/ 1000 $Å^3$ or more, preferably 11 T/ 1000 $Å^3$ or more, more preferably 12 T/ 1000 $Å^3$ or more.

Here, the framework density (T 1000 $Å^3$) in a case where T elements are all Si means the number of elements which constitute the framework and are not oxygen, i.e., the number of Si per 1000 $Å^3$ of zeolite. This value is determined according to a structure of zeolite. A relation between the framework density and the structure of zeolite is indicated in a zeolite structure database (https://asia.iza-structure.org/IZA-SC/ftc_table.php). As such, smaller $FD_{si}$ indicates that more spaces exist in the structure of zeolite.

In a case where zeolite is used in the organic-inorganic hybrid membrane, the matrix polymer sometimes blocks the surfaces of small pores of zeolite or the inside of small pores. In a case where $FD_{si}$ is within the above range, there are many spaces inside zeolite. Therefore, even if some of the spaces are blocked, it is possible to ensure a gas flow path, and an effect of mixture with zeolite is more likely to be exerted effectively. Thus, a high gas permeability and high separation performance tend to be exhibited. Moreover, in a case where $FD_{si}$ is within the above range, a framework of zeolite has sufficient strength. Therefore, zeolite tends to be hardly broken and to be stable, and such a tendency is preferable.

In an aspect of the present invention, a preferable structure of zeolite is typically AEI, AFR, AFS, AFT, AFV, AFX, AFY, AST, AVL, *BEA, BEC, BOZ, BPH, CHA, -CLO, CON, DFO, EAB, EMT, ETR, *-EWT, FAU, GME, -IFT, -IFU, IFW, IRN, IRR, -IRY, ISV, ITE, *-ITN, ITT, -ITV, IWR, IWS, IWV, JSR, JST, KFI, LEV, LTA, MEI, MWW, NPO, NPT, OBW, OSO, PAU, POS, PUN, PWN, RHO, RWY, SAO, SAS, SAV, SBE, SBS, SBT, SFO, SFW, SOV, *-SVY, -SYT, THO, TSC, UFI, USI, UTL, VFI, preferably AEI, AFR, AFS, AFT, AFV, AFX, AFY, AST, AVL, *BEA, BEC, BOZ, BPH, CHA, -CLO, CON, DFO, EMT, ETR, *-EWT, FAU, GME, -IFT, -IFU, IFW, IRN, IRR, -IRY, ISV, ITE, ITT, -ITV, IWR, IWS, IWV, JSR, JST, KFI, LTA, MEI, NPT, OBW, OSO, POS, PUN, PWN, RHO, RWY, SAO, SAS, SAV, SBE, SBS, SBT, SFO, SFW, SOV, *-SVY, -SYT, THO, TSC, UFI, UTL, VFI, more preferably AEI, AFR, AFS, AFT, AFX, AFY, *BEA, BEC, BOZ, BPH, CHA, -CLO, DFO, EMT, ETR, *-EWT, FAU, GME, -IFT, - IFU, IRN, IRR, -IRY, ISV, ITT, -ITV, IWS, IWV, JSR, JST, KFI, LTA, MEI, NPT, OBW, OSO, POS, PUN, RHO, RWY, SAO, SAS, SAV, SBE, SBS, SBT, SFO, SFW, SOV, -SYT, TSC, UFI, VFI, further preferably AEI, AFS, AFT, AFX, AFY, BEC, BOZ, BPH, CHA, -CLO, DFO, EMT, *-EWT, FAU, GME, -IFT, -IFU, IRR, - IRY, ISV, ITT, IWS, IWV, JSR, JST, KFI, LTA, MEI, NPT, OBW, OSO, PUN, RHO, RWY, SAO, SAS, SAV, SBE, SBS, SBT, SFW, SOV, -SYT, TSC, VFI, further preferably AEI, AFX, CHA, EMT, FAU, GME, KFI, LTA, MEI, NPT, RHO, VFI, particularly preferably AEI, AFX, CHA, FAU, most preferably CHA. In a case where the structure of zeolite is the above structure, there are many spaces inside zeolite. Therefore, the matrix polymer does not completely block the small pores, and it is possible to obtain an organic-inorganic hybrid membrane which exhibits high permeation-separation performance.

Zeolite that is mainly used in an aspect of the present invention is not particularly limited, and is preferably zeolite having a 12 or less-membered oxygen ring, more preferably zeolite having a 10 or less-membered oxygen ring, most preferably zeolite having an 8 or less-membered oxygen ring. Typically, zeolite having a 6 or more-membered oxygen ring is preferable, and zeolite having an 8 or more-membered oxygen ring is more preferable.

Here, a value of n of zeolite having an n-membered oxygen ring indicates a value with which the oxygen number is greatest among small pores constituted by oxygen and T elements (which are not oxygen among elements constituting the framework) that form the zeolite framework. For example, in a case where there are small pores having a 12-membered oxygen ring and an 8-membered oxygen ring as in MOR-type zeolite, such zeolite is regarded as zeolite having a 12-membered oxygen ring.

Examples of zeolite having a 12 or less-membered oxygen ring include AEI, AFR, AFS, AFT, AFV, AFX, AFY, AST, AVL, *BEA, BEC, BOZ, BPH, CHA, CON, DFO, EAB, EMT, FAU, GME, IFW, IRN, ISV, ITE, *-ITN, IWR, IWS, IWV, JSR, JST, KFI, LEV, LTA, MEI, MWW, NPO, NPT, OBW, PAU, POS, PUN, PWN, RHO, RWY, SAO, SAS, SAV, SBE, SBS, SBT, SFO, SFW, SOV, THO, TSC, UFI, and USI. Examples of zeolite having a 10 or less-membered oxygen ring include AEI, AFT, AFV, AFX, AST, AVL, BOZ, CHA, EAB, IFW, IRN, ITE, JST, KFI, LEV, LTA, MWW, NPT, OBW, PAU, PWN, RHO, SAS, SAV, SFW, THO, TSC, and UFI. Examples of zeolite having an 8 or less-membered oxygen ring include AEI, AFT, AFV, AFX, AST, AVL, CHA, EAB, IRN, ITE, KFI, LEV, LTA, NPT, PAU, PWN, RHO, SAS, SAV, SFW, THO, TSC, and UFI.

The n-membered oxygen ring structure determines a size of small pores in zeolite. In a case where the n-membered oxygen ring structure is within the above range, zeolite is more likely to exert high gas separation performance. Furthermore, in a case where such zeolite is used in an organic-inorganic hybrid membrane, it is possible to easily bring about an effect of achieving gas separation performance which is higher than that of the matrix polymer.

Examples of zeolite mainly used in an aspect of the present invention include aluminosilicate, aluminophosphate

(AlPO), silicoaluminophosphate (SAPO), metallo-aluminophosphate (MeAPO), metallo-silicoaluminophosphate (MeAPSO). Aluminosilicate and silicoaluminophosphate (SAPO) are preferable. Aluminosilicate is particularly preferable in terms of durability of zeolite.

An $SiO_2/Al_2O_3$ molar ratio of aluminosilicate is typically 7 or more, preferably 8 or more, more preferably 10 or more, further preferably 12 or more, particularly preferably 15 or more, most preferably 20 or more. An upper limit is typically 2000 or less, preferably 1000 or less, more preferably 500 or less, further preferably 100 or less, particularly preferably 50 or less. In a case where $FD_{si}$ is within the foregoing range, a lower limit of the $SiO_2/Al_2O_3$ molar ratio of aluminosilicate may be lower, and is typically 0.5 or more, preferably 1 or more, more preferably 3 or more, further preferably 8 or more, further preferably 10 or more, further preferably 12 or more, particularly preferably 15 or more, most preferably 20 or more. An upper limit is typically 2000 or less, preferably 1000 or less, more preferably 500 or less, further preferably 100 or less, particularly preferably 50 or less. In a case where the $SiO_2/Al_2O_3$ molar ratio is within the above range, durability of zeolite is high, and durability of gas separation-permeation performance of the organic-inorganic hybrid membrane tends to be satisfactory. In a case where the $SiO_2/Al_2O_3$ molar ratio is within the above range, hygroscopicity of zeolite is not excessively high. Therefore, such an $SiO_2/Al_2O_3$ molar ratio is preferable because it is not necessary to carry out pretreatment before using the organic-inorganic hybrid membrane or it is sufficient to carry out heating at a low temperature for a short time. Furthermore, an actual gas separation process would hardly be influenced by moisture in an actual gas. Therefore, merely brief pretreatment would be needed for a gas that is introduced into the organic-inorganic hybrid membrane in the gas separation process, and such brief pretreatment is economical.

The $SiO_2/Al_2O_3$ molar ratio is obtained by X-ray fluorescence analysis (XRF) after a calibration curve is prepared in advance by ICP analysis and XRF. Specifically, the following process is carried out.

A zeolite sample is dissolved in a hydrochloric acid aqueous solution by heating, and then contained amounts (% by mass) of silicon atoms and aluminum atoms are obtained by ICP analysis. Then, a calibration curve of fluorescent X-ray intensity of the analyzed element and an atomic concentration of the analyzed element in the reference sample is prepared. From this calibration curve, contained amounts (% by mass) of silicon atoms and aluminum atoms in the zeolite sample are obtained by XRF.

An average particle diameter of the inorganic filler used in an aspect of the present invention is typically 0.05 pm or more, preferably 0.1 pm or more, more preferably 0.5 pm or more, further preferably 1 pm or more, further preferably 5 pm or more, particularly preferably 7 pm or more, typically 100 pm or less, preferably 50 pm or less, more preferably 20 pm or less, further preferably 15 pm or less, particularly preferably 10 pm or less. In a case where the average particle diameter of the inorganic filler is within this range, dispersibility of the inorganic filler is satisfactory, it is easy to mix the inorganic filler with the matrix polymer at an arbitrary proportion, and a path is easily formed through which the gas permeates the inorganic filler. Therefore, an effect of improving separation performance and permeation performance by the inorganic filler is more likely to be brought about, and it tends to be easy to obtain an organic-inorganic hybrid membrane that is excellent in both separation performance and permeation performance.

[Method for measuring average particle diameter]

Measurement of an average particle diameter can be carried out in a manner similar to the measurement of the average particle diameter described above in the first aspect.

In a case where the inorganic filler used in an aspect of the present invention has the particle diameter falling within the foregoing range, the inorganic filler may be secondary particles formed by aggregation of small crystal particles or may be primary particles that are crystal particles existing alone. The primary particles are particularly preferable because a gap called a grain boundary is hardly generated between crystals, and therefore a defect (called a void) is hardly caused between a polymer and particles when an organic-inorganic hybrid membrane is formed, and thus a high separation factor tends to be exhibited.

In a case where two types of inorganic fillers having different average particle diameters are used in an aspect of the present invention, a ratio of average particle diameter, which is expressed as a value of [average particle diameter of larger particles/average particle diameter of smaller particles] is typically 1.5 or more, preferably 3 or more, more preferably 5 or more, typically 100 or less, preferably 50 or less, further preferably 20 or less, particularly preferably 15 or less. In a case where the particle diameter ratio is within the above range, spaces in the inorganic filler are least when the inorganic filler is mixed with the matrix polymer, and it is possible to improve a filling proportion of the inorganic filler. In a case where inorganic fillers with three or more types of average particle diameters are used, two of those average particle diameters preferably satisfy the above described particle diameter ratio.

Here, the larger particles refer to inorganic filler particles having a larger average particle diameter among the two types of inorganic fillers having different average particle diameters, and the smaller particles refer to inorganic filler particles having a smaller average particle diameter. The same applies hereinafter.

In a case where two types of inorganic fillers having different average particle diameters are used in an aspect of the present invention, the inorganic filler contained in the organic-inorganic hybrid membrane has a particle size

distribution having at least two peaks.

[Particle size distribution]

The particle size distribution in an aspect of the present invention is a volume-based particle size distribution. A method for measuring the particle size distribution conforms to the measurement method described above in the first aspect.

In a case where the particle size distribution of the inorganic filler contained in the organic-inorganic hybrid membrane in an aspect of the present invention has at least two peaks, a peak of a greater particle diameter is in a particle diameter between (i) typically 1.5 pm or more, preferably 4 pm or more and (ii) typically 20 pm or less, preferably 15 pm or less, more preferably 10 pm or less, and a peak of a smaller particle diameter is in a particle diameter between (i) typically 0.1 pm or more, preferably 0.2 pm or more and (ii) typically 1 pm or less. By having particle size distributions within those ranges, it is possible to improve a filling factor of the inorganic filler in the organic-inorganic hybrid membrane. Therefore, an organic-inorganic hybrid membrane can be obtained in which performance of the inorganic filler is sufficiently exerted and which has higher separation performance and permeation performance.

In a case where the particle size distribution of the inorganic filler contained in the organic-inorganic hybrid membrane in an aspect of the present invention has at least two peaks and a particle diameter of a peak of a smaller particle diameter is set to 1, a particle diameter of a peak of a greater particle diameter is typically 1.5 or more, preferably 2.0 or more, more preferably 5.0 or more, further preferably 7.0 or more, typically 100 or less, preferably 50 or less, further preferably 20 or less, particularly preferably 15 or less.

In a case where the value of the peak of the greater particle diameter relative to the peak of the smaller particle diameter is as described above, particles smaller than the particle diameter of the local minimum value in the volume-based particle size distribution can efficiently fill gaps between the inorganic filler particles having a particle diameter larger than the local minimum value, and it is possible to improve a filling factor of the inorganic filler in the organic-inorganic hybrid membrane. Therefore, an organic-inorganic hybrid membrane can be obtained in which performance of the inorganic filler is sufficiently exerted and which has higher separation performance and permeation performance.

In an aspect in which two types of inorganic fillers having different average particle diameters are used in an aspect of the present invention, a preferable range of particle diameter is as follows. That is, an average particle diameter of larger particles is preferably 1 pm or more, further preferably 4 pm or more, particularly preferably 5 pm or more, typically 100 pm or less, preferably 50 pm or less, more preferably 20 pm or less, further preferably 15 pm or less, particularly preferably 10 pm or less. An average particle diameter of smaller particles is preferably 0.05 pm or more, preferably 0.1 pm or more, more preferably 0.5 pm or more, and preferably 1 pm or less. By having average particle diameters within those ranges, it is possible to improve a filling factor of the inorganic filler in the organic-inorganic hybrid membrane. Therefore, an organic-inorganic hybrid membrane can be obtained in which performance of the inorganic filler is sufficiently exerted and which has higher separation performance and permeation performance. Within such a range, the inorganic filler is easily dispersed in the matrix polymer.

In an aspect in which two types of inorganic fillers having different average particle diameters are used in an aspect of the present invention, in a case where a smaller average particle diameter is set to 1, a greater average particle diameter is typically 1.5 or more, preferably 2.0 or more, more preferably 5.0 or more, further preferably 7.0 or more, typically 100 or less, preferably 50 or less, further preferably 20 or less, particularly preferably 15 or less. In a case where two types of inorganic fillers having different average particle diameters are used and the greater average particle diameter with respect to the smaller average particle diameter is within the above range, the inorganic filler having the smaller average particle diameter can efficiently fill gaps between the inorganic filler particles having the larger average particle diameter, and it is possible to improve a filling factor of the inorganic filler in the organic-inorganic hybrid membrane. Therefore, an organic-inorganic hybrid membrane can be obtained in which performance of the inorganic filler is sufficiently exerted and which has higher separation performance and permeation performance.

The average particle diameters of larger particles and smaller particles can be measured, for each of the two types of inorganic fillers used, with use of the measurement method described above in the first aspect.

In an aspect in which two types of inorganic fillers having different average particle diameters are used in an aspect of the present invention, in a case where a mass of smaller particles is set to 1, a mass of larger particles is not particularly limited and is, for example, preferably 3 or more, more preferably 4 or more, further preferably 4.5 or more. Typically, 10 or less is preferable, and 8 or less is preferable, and 6 or less is more preferable. In a case where the mass ratio is within the above range, voids between larger particles are filled with the smaller particles, and this makes it possible to improve a filling factor of the inorganic filler. Note that a mass ratio between larger particles and smaller particles can be calculated from areas of peaks in the volume-based particle size distribution of the inorganic filler.

In order to obtain an inorganic filler having at least two peaks in the particle size distribution, two types of inorganic fillers having different average particle diameters described above may be used. An average particle diameter of larger particles is preferably 1 pm or more, further preferably 4 pm or more, particularly preferably 5 pm or more, typically 100 pm

or less, preferably 50 pm or less, more preferably 20 pm or less, further preferably 15 pm or less, particularly preferably 10 pm or less.

In an aspect of the present invention, a mass proportion of a gas-selective inorganic filler relative to a total mass of the organic-inorganic hybrid membrane is typically 35% by mass or more, preferably 37% by mass or more, more preferably 42% by mass or more, further preferably 48% by mass or more, further preferably 52% by mass or more, further preferably 57% by mass or more, particularly preferably 62% by mass or more, further preferably 65% by mass or more, more preferably 70% by mass or more, further preferably 75% by mass or more, most preferably 80% by mass or more. The proportion is typically 99% by mass or less, preferably 95% by mass or less, more preferably 90% by mass or less. In a case where the mass proportion of the inorganic filler is within the above range, the organic-inorganic hybrid membrane is a membrane having excellent processability while maintaining flexible property, and tends to be a membrane exhibiting high separation performance and permeation performance.

The proportion of the inorganic filler in the organic-inorganic hybrid membrane can be measured using the measurement method described above in the first aspect.

In an aspect of the present invention, in a case where the organic-inorganic hybrid membrane contains also an inorganic filler having no gas selectivity, a proportion of a mass (i.e., a total mass of the gas-selective inorganic filler and the inorganic filler having no gas selectivity) of the inorganic filler relative to the total mass of the organic-inorganic hybrid membrane is not particularly limited and is, for example, 35% by mass or more, preferably 37% by mass or more, more preferably 42% by mass or more, further preferably 48% by mass or more, further preferably 52% by mass or more, further preferably 57% by mass or more, particularly preferably 62% by mass or more, further preferably 65% by mass or more, more preferably 70% by mass or more, further preferably 75% by mass or more, most preferably 80% by mass or more. The proportion is typically 99% by mass or less, preferably 95% by mass or less, more preferably 90% by mass or less. In a case where the mass proportion of the inorganic filler is within the above range, the organic-inorganic hybrid membrane is a membrane having excellent processability while maintaining flexible property, and tends to be a membrane exhibiting high separation performance and permeation performance.

In an aspect of the present invention, a filling proportion of zeolite with respect to the organic-inorganic hybrid membrane is, in terms of volume fraction, typically 20 vol% or more, more preferably 30 vol% or more, further preferably 40 vol% or more, further preferably 50 vol% or more, further preferably 60 vol% or more, particularly preferably 65 vol% or more, most preferably 70 vol% or more. The proportion is typically 99 vol% or less, preferably 95 vol% or less, more preferably 90 vol% or less, further preferably 85 vol% or less, particularly preferably 80 vol% or less. In a case where the volume fraction of zeolite with respect to the volume of the organic-inorganic hybrid membrane is within the above range, the organic-inorganic hybrid membrane is a membrane having excellent processability while maintaining flexible property, and tends to be a membrane exhibiting high separation performance and permeation performance.

The volume fraction of zeolite relative to the organic-inorganic hybrid membrane can be measured in a manner similar to the method described above in the first aspect.

In an aspect of the present invention, in a case where zeolite and an inorganic filler other than zeolite are used in combination, a proportion of a mass of the inorganic filler other than zeolite relative to a mass of zeolite is typically 30% or less, preferably 20% or less, more preferably 10% or less, further preferably 5% or less. A lower limit thereof is not particularly limited and is typically 0.1% or more. In a case where the mass percentage of the inorganic filler other than zeolite is within the above range, the obtained organic-inorganic hybrid membrane is a membrane having excellent processability while maintaining flexible property, and tends to be a membrane exhibiting high separation performance and permeation performance.

A shape of the inorganic filler used in an aspect of the present invention is not particularly limited, and is a particle shape of preferably a spherical shape, a cubic shape, a rectangular parallelepiped shape, a hexagonal prism shape, particularly preferably a spherical shape and a cubic shape, most preferably a spherical shape. In a case where the shape of the inorganic filler is any of those shapes, it is possible to increase a filling amount of the inorganic filler, and it is possible to obtain an organic-inorganic hybrid membrane having high separation property and permeation property.

The inorganic filler having the above shape can be obtained by controlling a synthesis method or can be obtained by physically grinding synthesized powder.

In a case where the inorganic filler has a spherical shape, fluidity of particles is high. Therefore, it is possible to improve a filling factor of particles when, in particular, membrane formation and curing are carried out under pressurization. In a case where the inorganic filler has a cubic shape, gaps between particles can be reduced by arranging the particles well. Therefore, it is possible to improve a filling factor of the inorganic filler in the organic-inorganic hybrid membrane.

The inorganic filler used in an aspect of the present invention has an average circularity coefficient of preferably 0.80 or more, particularly preferably 0.90 or more. The average circularity coefficient is typically 1.0 or less. In a case where the average circularity coefficient is within the above range, fluidity of particles is high. This makes it possible to improve a filling factor of particles, and it is particularly possible to improve the filling factor when membrane formation and curing are carried out under pressurization.

The circularity coefficient here is expressed by $4\pi S/L^2$, where S represents an area of two-dimensional

projection image of a particle of an inorganic filler used, and L represents a circumferential length of the particle. In a case where the particle is a true sphere, the circularity coefficient is 1.0, and the value is larger as the shape is closer to a true sphere. A specific method for calculating the average circularity coefficient here is as follows.

[Method for calculating average circularity coefficient]

The average circularity coefficient can be measured in a manner similar to the method described above in the first aspect.

In an aspect in which the particle size distribution of the inorganic filler contained in the organic-inorganic hybrid membrane has at least two peaks, an average circularity coefficient of particularly particles having a greater mass is preferably 0.80 or more, particularly preferably 0.90 or more, and typically 1.0 or less.

A surface of the inorganic filler used in an aspect of the present invention may be modified. Surface modification of the inorganic filler can be carried out in a manner similar to the method described above in the first aspect.

The zeolite used in an aspect of the present invention may be optionally subjected to ion exchange. Here, the ion exchange can be carried out in a manner similar to the method described above in the first aspect.

[Support layer]

The organic-inorganic hybrid membrane in accordance with an aspect of the present invention may be a self-supported membrane or may be formed on a support layer. The support layer is suitably a porous support layer, from the viewpoint of not impairing the permeation performance of the organic-inorganic hybrid membrane. As the porous support layer, it is possible to use one similar to the porous support layer described above in the first aspect.

[Penetration of matrix polymer into porous support layer and measurement thereof]

A part of the matrix polymer constituting the organic-inorganic hybrid membrane may penetrate into the porous support layer. A preferable degree of penetration and a measurement method thereof conform to the numerical value range and the method described above in the first aspect.

[Gutter layer]

The organic-inorganic hybrid membrane in an aspect of the present invention may be formed on the porous support layer. Alternatively, in a case of being formed above the porous support layer, the organic-inorganic hybrid membrane may be formed on a gutter layer that is formed on the porous support layer. In a case where the organic-inorganic hybrid membrane is formed on the porous support layer via the gutter layer, it is possible to avoid or reduce defects in the organic-inorganic hybrid membrane which are caused because, when the organic-inorganic hybrid membrane is formed, the matrix polymer and a solvent used in membrane formation excessively penetrate into the porous support membrane. Furthermore, the matrix polymer and the solvent used in membrane formation do not excessively penetrate into the porous support membrane. Therefore, it is possible to form a thinner organic-inorganic hybrid membrane without defect.

Components and a thickness of the gutter layer can be similar to the components and the thickness described above in the first aspect.

[Protective layer]

In an aspect of the present invention, a protective layer may be formed on the organic-inorganic hybrid membrane, which is a separation layer, for use in separation.

Components and a thickness of the protective layer can be similar to the components and the thickness described above in the first aspect.

<Gas separation membrane module>

In a case where the organic-inorganic hybrid membrane in accordance with an aspect of the present invention is used in industrial gas separation, the organic-inorganic hybrid membrane is preferably used in a form of module as a membrane combined with a support layer. Examples of the module include a spiral type, a hollow fiber type, a pleats type, a tubular type, a plate-and-frame type, and the like, and the spiral type (spiral wound type or SW type) or the hollow fiber type is preferable.

<Method for producing organic-inorganic hybrid membrane and organic-inorganic hybrid membrane composite>

The method for producing an organic-inorganic hybrid membrane and an organic-inorganic hybrid membrane composite in accordance with an aspect of the present invention includes a kneading step of combining a matrix polymer and a gas-selective inorganic filler in a viscous condition. The method for producing an organic-inorganic hybrid membrane and an organic-inorganic hybrid membrane composite in accordance with an aspect of the present invention may further include: a diluting step of mixing a solvent with a mixture obtained in the kneading step; a casting step of supporting, on a flat surface or a curved surface, a dispersion liquid obtained in the diluting step; and a curing step of curing the matrix polymer. In an aspect in which an organic-inorganic hybrid membrane is formed on a porous support layer, the method for producing an organic-inorganic hybrid membrane in accordance with an aspect of the present invention may further include a gutter layer forming step of forming a gutter layer on the porous support layer prior to the casting step.

[Kneading step]

The kneading step in accordance with an aspect of the present invention is a step of combining a matrix polymer and a gas-selective inorganic filler in a viscous condition. In the viscous mixing step, in order to improve dispersibility, leveling property, and handleability, at least one selected from the group consisting of a surface modifier and a dispersion agent may be added and kneaded with the matrix polymer and the inorganic filler. In this specification, the term "viscous mixing" has a meaning that is generally understood by a person skilled in the art. For example, the term "viscous mixing" means, but not limited to, operation to knead a matrix polymer and an inorganic filler under a condition in which at least a part of the matrix polymer is not dissolved in a solvent.

In a case where viscous mixing is carried out in the kneading step, high shearing force is applied to the inorganic filler, and aggregated secondary particles are dispersed as primary particles. Therefore, it is possible to improve dispersibility of the inorganic filler. Conventionally, in a case where a composition containing a polymer and particles is produced by viscous mixing, a large amount of the polymer is adsorbed on the particle surface, and thus the particles are coated. Therefore, properties (e.g., electrical conductivity, heat transfer property, and the like) which are derived from the particles are sometimes not exerted in the composition. However, in an aspect of the present invention, the matrix polymer has a certain degree of gas permeation performance. Therefore, even in a state in which the inorganic filler particles are coated in the organic-inorganic hybrid membrane, the gas permeation performance and separation performance derived from the inorganic filler are sufficiently exerted.

In the kneading step, a mixing ratio of the matrix polymer and the inorganic filler can be adjusted as appropriate, and is preferably adjusted to achieve the foregoing preferable contained amount of the inorganic filler.

In the kneading step, the mixing ratio of the matrix polymer and the inorganic filler may be adjusted such that a viscosity of a resultant mixture falls within an intended numerical value range. By adjusting the viscosity of the resultant mixture, it is possible to adjust shearing force applied to the inorganic filler in the kneading step, and dispersibility of the inorganic filler can be further improved. For example, by the kneading step, a mixture may be obtained which has a viscosity of preferably 30 Pa·s or more, more preferably 40 Pa·s or more, further preferably 50 Pa·s or more. Note that an upper limit value of the viscosity of the resultant mixture is not particularly limited from the viewpoint of applying high shearing force to the inorganic filler. For example, from the viewpoint of reducing a load applied to a device that is used in the kneading step, a mixture having a viscosity of preferably 500 Pa·s or less, more preferably 300 Pa·s or less may be obtained by the kneading step. In this specification, the viscosity refers to a viscosity which is measured with a cone-plate type viscometer at 25°C.

Examples of a viscous mixing method in the kneading step include methods in each of which a mixer, a bead mill, a ball mill, a twin screw kneader, a three-roll mill, a planetary centrifugal mixer, or the like is used. In the kneading step, an additive such as a curing agent may be added in a range in which shearing force applied to the inorganic filler is not excessively reduced.

It is preferable that the inorganic filler before viscous mixing is sufficiently dried. A temperature at which the inorganic filler is dried before the matrix polymer and the inorganic filler are combined in a viscous condition is typically 100°C or more, preferably 120°C or more, more preferably 150°C or more, further preferably 200°C or more, typically 300°C or less, and a drying time is typically 3 hours or more, preferably 5 hours or more, more preferably 8 hours or more, further preferably 12 hours or more, typically 48 hours or less, preferably 30 hours or less, more preferably 20 hours or less. In a case where the drying temperature and the drying time are within the above ranges, it is possible to sufficiently remove moisture from zeolite in an economical time.

[Diluting step]

The diluting step in accordance with an aspect of the present invention is a step of mixing, with a solvent, a mixture obtained in the kneading step. In the diluting step, in order to improve dispersibility, leveling property, and handleability, at

least one selected from the group consisting of a surface modifier and a dispersion agent may be added and dilution with the solvent may be carried out in the presence of such an agent(s). The mixture obtained in the kneading step has a high viscosity, and is sometimes difficult to form a membrane. However, by carrying out the diluting step, the viscosity of the mixture obtained in the kneading step in which primary particles of the inorganic filler are dispersed is adjusted, and this makes it easy to carry out membrane formation.

The solvent is not particularly limited, provided that the matrix polymer and raw materials of the matrix polymer can be solved in the solvent. Examples of the solvent that can be used include toluene, hexane, ethyl acetate, methyl ethyl ketone, N-methylpyrrolidone, and the like. A solvent that can achieve high dispersibility of the inorganic filler is preferable. Most of the matrix polymer and raw materials of the matrix polymer are hydrophobic. Meanwhile, a surface of inorganic filler such as zeolite is hydrophilic. Therefore, a solvent (such as ethyl acetate or methyl ethyl ketone) having a moderate level of polarity is preferable.

A proportion of the solvent with respect to the inorganic filler varies according to an amount of the inorganic filler and a type of the polymer. It is preferable to adjust an amount of the solvent so as to achieve a viscosity with which membrane formation can be easily carried out, according to the membrane formation method.

Examples of a method for mixing a solvent with the mixture include ultrasonic disintegration and dispersion, use of a planetary centrifugal mixer, and the like, in addition to typical stirring and kneading. In the diluting step, an additive such as a curing agent may be added to the mixture.

[Dispersing step]

The dispersing step in accordance with an aspect of the present invention refers to a step of dispersing an inorganic filler in a matrix polymer and optionally in a solvent. Specifically, an inorganic filler is sufficiently dried. Then, a matrix polymer dissolved in a solvent or raw materials of a matrix polymer without a solvent before polymerization and curing are sufficiently mixed with the inorganic filler so that the inorganic filler is sufficiently dispersed. Then, in a case where a polymer for which a curing agent is needed is used, a curing agent is further added and mixed well to disperse the inorganic filler. At this time, after the inorganic filler is dispersed in the solvent, the matrix polymer can be added and further mixed well to disperse the inorganic filler. Examples of a method for dispersing the inorganic filler include ultrasonic disintegration and dispersion, use of a planetary centrifugal mixer, and the like, in addition to stirring using a typical mixer, a bead mill, a ball mill, or the like and kneading using a twin screw kneader, a three-roll mill, or the like. In the dispersing step, at least one selected from the group consisting of a surface modifier and a dispersion agent may be added in order to improve dispersibility, leveling property, and handleability. The dispersing step encompasses the kneading step and the diluting step.

The solvent is not particularly limited, provided that the matrix polymer and raw materials of the matrix polymer can be solved in the solvent. Examples of the solvent that can be used include toluene, hexane, ethyl acetate, methyl ethyl ketone, N-methylpyrrolidone, and the like. A solvent that can achieve high dispersibility of the inorganic filler is preferable. Most of the matrix polymer and raw materials of the matrix polymer are hydrophobic. Meanwhile, a surface of inorganic filler such as zeolite is hydrophilic. Therefore, a solvent (such as ethyl acetate or methyl ethyl ketone) having a moderate level of polarity is preferable.

[Casting step]

The casting step in accordance with an aspect of the present invention is a step of supporting, on a flat surface or a curved surface, the dispersion liquid obtained in the dispersing step. Examples of the flat surface and the curved surface include an inner surface of a container such as a petri dish, an upper surface of a release film, an upper surface of a flat and smooth plate such as a glass plate which has been subjected to release treatment as necessary, an inner surface or outer surface of the porous support layer, and an upper surface of a gutter layer formed on the porous support layer. Examples include an inner surface or outer surface of the porous support layer, an upper surface of a gutter layer formed on the porous support layer, and the like. For example, the dispersion liquid may be cast by being applied or supported onto a Teflon (registered trademark) petri dish, a release film, a flat and smooth plate such as a glass plate which has been subjected to release treatment, a porous support layer (on which a gutter layer may be formed), by a die coater, a blade coater, a bar coater, a spin coater, immersion, immersion and suction, or the like.

For example, in a case where a porous support layer in the form of flat membrane is used, membrane formation is carried out with a constant thickness on a support layer using a blade coater, a die coater, a bar coater, or a spin coater. Membrane formation may be carried out on a gutter layer which has been prepared as necessary on a porous support layer in advance. As a method for forming a gutter layer, a method known to a person skilled in the art can be used. For example, it is possible to employ a method in which any of the foregoing substances is applied onto the porous support layer as a substance to form a gutter layer, and the substance is cured by heating. Alternatively, membrane formation can be carried out while supporting the dispersion liquid on the support layer with a method such as impregnation, suction, or

pressurization.

In a case where a porous support layer in the form of hollow fiber is used, membrane formation is carried out while supporting the dispersion liquid on the support layer with a method such as immersion, impregnation, suction, or pressurization. Membrane formation may be carried out on a gutter layer which has been prepared as necessary on a porous support layer in advance. As a method for forming a gutter layer, a method known to a person skilled in the art can be used. For example, it is possible to employ a method in which any of the foregoing substances is applied onto the porous support layer as a substance to form a gutter layer, and the substance is cured by heating.

[Curing step]

The curing step in accordance with an aspect of the present invention refers to a step of curing the polymer under a predetermined curing condition after the solvent of the dispersion liquid which has been cast by application or supporting in the casting step is removed. After the casting step, the solvent is removed using a vacuum dryer, and the polymer is cured at a predetermined curing temperature for a predetermined curing time or curing the polymer while volatilizing the solvent under a nitrogen airflow using an inert oven. Thus, it is possible to obtain an organic-inorganic hybrid membrane.

The temperature condition of the vacuum dryer is changed as appropriate in accordance with a solvent used. The curing temperature and the curing time are also set to be conditions suitable for a polymer used.

In the curing step, curing of the matrix polymer while applying pressure is more suitably carried out. By curing the matrix polymer while applying pressure, it is possible to prepare an organic-inorganic hybrid membrane having no voids or reduced voids even in a case where a filling amount of the inorganic filler is large.

In a case where a silicone rubber obtained by curing polyorganosiloxane is used as the matrix polymer, the inorganic filler is, typically, preferably mixed with polyorganosiloxane before curing. Note, however, that an aspect of the present invention is not limited to this.

A means for curing curable polyorganosiloxane is not particularly limited, and a conventionally known method can be employed. From the viewpoint of productivity, a method is preferable in which mixing of the inorganic filler and storage after mixing with the inorganic filler can be stably carried out in atmospheric air. In view of this, a type of curing by addition reaction or irradiation with ultraviolet rays, radial rays, or an electron beam is preferable. In view of easiness and the fact that it is not necessary to control the atmosphere in curing, it is particularly preferable to employ addition reaction.

In membrane formation, curing of the polymer while pressurizing the organic-inorganic hybrid membrane is suitably carried out. By curing the polymer while applying pressure, it is possible to prepare a membrane having no voids or reduced voids even in a case where a filling amount of the inorganic filler is large.

In the curing step, various pressurization methods may be employed, and a method in which pressurization is carried out while heating is preferable. As the method in which pressurization is carried out while heating, for example, it is preferable to employ a method for curing while heating and applying pressure to a membrane using a hot pressing machine, a vacuum hot pressing machine, a vacuum lamination device, or a double-belt press.

A magnitude of pressure is typically 1 MPa or more, preferably 2 MPa or more, more preferably 3 MPa or more, further preferably 4 MPa or more, particularly preferably 5 MPa or more, typically 30 MPa or less, preferably 20 MPa or less, more preferably 10 MPa or less, further preferably 8 MPa or less. In a case where the pressure is within the above range, it is possible to obtain a membrane in which a filling amount of the inorganic filler is large and no voids are formed between the inorganic filler and the matrix polymer, without breaking small pores of the inorganic filler in the organic-inorganic hybrid membrane.

A heating temperature and a heating time may be determined as appropriate according to a curing condition of a matrix polymer used. A heating time while applying pressure is typically 1 minute or more, preferably 5 minutes or more, more preferably 10 minutes or more, typically 2 hours or less, preferably 1 hour or less. Within this range, it is possible to efficiently prepare a membrane having no voids or reduced voids.

[Gutter layer forming step]

The gutter layer forming step in accordance with an aspect of the present invention is a step of forming a gutter layer on the porous support layer prior to the casting step. As a method for forming a gutter layer, a method known to a person skilled in the art can be used. For example, it is possible to employ a method in which any of the foregoing substances is applied onto the porous support layer as a substance to form a gutter layer, and the substance is cured by heating.

[Variation of production method]

In an aspect of the present invention, methods for producing an organic-inorganic hybrid membrane and an organic-inorganic hybrid membrane composite are not limited to the above described embodiment. For example, in an

aspect of the present invention, the casting step may be carried out by forming a sacrificial membrane on a flat surface or a curved surface, and supporting, on the sacrificial membrane, the dispersion liquid obtained in the dispersing step. The sacrificial membrane is a membrane which is soluble in a solvent that does not dissolve the organic-inorganic hybrid membrane and a substrate which functions as the flat surface or curved surface. After such a casting step and the following curing step are carried out, the resultant structure in which the substrate, the sacrificial membrane, and the organic-inorganic hybrid membrane are stacked in this order is immersed in a solvent that does not dissolve the substrate and the organic-inorganic hybrid membrane but dissolves the sacrificial membrane. Thus, the organic-inorganic hybrid membrane can be detached from the substrate without breakage of the organic-inorganic hybrid membrane. As the sacrificial membrane and the solvent that dissolves the sacrificial membrane, it is possible to use a sacrificial membrane and a solvent which are known in this technical field.

An organic-inorganic hybrid membrane composite may be produced by (i) scooping up, on the porous support membrane, the organic-inorganic hybrid membrane which has been detached from the substrate by dissolving the sacrificial membrane and which is floating in the solvent, and then (ii) drying the organic-inorganic hybrid membrane and the porous support membrane.

<Gas separation-concentration method>

The organic-inorganic hybrid membrane in accordance with an aspect of the present invention can separate and concentrate a gas mixture. A gas separation-concentration method using the organic-inorganic hybrid membrane in accordance with the third aspect can be carried out in a manner similar to the gas separation-concentration method described above in the first aspect.

Examples

The present invention will be further specifically described on the basis of Examples below. The present invention is not limited to Examples below, to an extent that does not exceed the gist of the present invention. In the description below, whether a sample of interest is a composite including a porous support layer and an organic-inorganic hybrid membrane or is a self-supported membrane including an organic-inorganic hybrid membrane without a porous support layer is a matter that a person skilled in the art can easily understand. Therefore, in the following description, the organic-inorganic hybrid membrane composite (sometimes abbreviated as a composite) and the organic-inorganic hybrid membrane (sometimes abbreviated as a membrane) may be understood while being exchanged according to a context.

A method for preparing a sample and a method for measuring and evaluating a sample in the present invention are as follows.

[Method for measuring powder with X-ray diffraction (XRD)]

XRD measurement was carried out based on the following conditions.

Device: D2 PHASER available from BRUKER
X-ray source: Cu-Kα ray
Output setting: 30 kV·10 mA
Divergence slit: 0.3°
Soller slit on light coming side: 2.5°
Soller slit on light receiving side: 2.5°
Opening angle of detection section: 5.69°
Ni filter: 2.5%
Position of diffraction peak: 2 θ (diffraction angle)
Measurement range: 2 θ = 5° to 50°
Scan speed: 0.05° (2 θ/sec)

[Method for measuring $SiO_2/Al_2O_3$ molar ratio]

The $SiO_2/Al_2O_3$ molar ratio was obtained by X-ray fluorescence analysis (XRF) after a calibration curve was prepared in advance by ICP analysis and XRF.

A zeolite sample was dissolved in a hydrochloric acid aqueous solution by heating, and then contained amounts (% by mass) of silicon atoms and aluminum atoms were obtained by ICP analysis. Then, a calibration curve of fluorescent X-ray intensity of the analyzed element and an atomic concentration of the analyzed element in the reference sample was prepared. From this calibration curve, contained amounts (% by mass) of silicon atoms and aluminum atoms in the zeolite

sample were obtained by XRF. ICP analysis was carried out using ULTIMA 2C available from Horiba, Ltd. Measurement of XRF was carried out using EDX-700 available from Shimadzu Corporation or an X-ray fluorescence analysis device Supermini200 available from Rigaku Corporation.

[Method for measuring average particle diameter]

A particle diameter of the inorganic filler used in the organic-inorganic hybrid membrane was obtained as follows. A sample was prepared by well dispersing synthesized powder. An image was taken using a scanning electron microscope JSM-6010LV available from JEOL Ltd. at an acceleration voltage of 10 kV. For 30 particles which had been arbitrarily selected, image analysis was carried out using image analysis type particle size distribution measurement software Mac-View available from Mountech Co., Ltd., and thus particle diameters were obtained. An arithmetic mean of the particle diameters was regarded as an average particle diameter. For secondary particles formed by aggregation of small crystal particles, the particle diameter is a secondary particle diameter.

A particle diameter of the inorganic filler in the obtained organic-inorganic hybrid membrane was obtained as follows. A cross section of the organic-inorganic hybrid membrane obtained by freeze fracture was imaged using FE-SEM Hitachi: S-4500 at an acceleration voltage of 10 kV. For 30 particles which were seen in the cross section and had been arbitrarily selected for the inorganic filler, image analysis was carried out using image analysis type particle size distribution measurement software Mac-View available from Mountech Co., Ltd., and thus particle diameters were obtained. An arithmetic mean of the particle diameters was regarded as an average particle diameter.

In any of the methods, the particle diameter is a diameter of a circle (circle equivalent diameter) having an area equal to a projected area of a particle.

[Method for measuring average circularity coefficient]

A particle diameter of the inorganic filler used in the organic-inorganic hybrid membrane was obtained as follows. A sample was prepared by well dispersing synthesized powder. An image was taken using a scanning electron microscope JSM-6010LV available from JEOL Ltd. at an acceleration voltage of 10 kV. For 30 particles which had been arbitrarily selected, image analysis was carried out using image analysis type particle size distribution measurement software Mac-View available from Mountech Co., Ltd., and thus circularity coefficients were obtained. An arithmetic mean of the circularity coefficients was regarded as an average circularity coefficient. For secondary particles formed by aggregation of small crystal particles, an average of circularity coefficients of the secondary particles was regarded as the average circularity coefficient.

The circularity coefficient here is a value expressed by $4\ \pi S/L^2$, where S represents an area of two-dimensional projection image of a particle of an inorganic filler used, and L represents a circumferential length of the particle.

[Method for measuring particle size distribution]

The particle size distribution of the inorganic filler used in the organic-inorganic hybrid membrane was measured under the following conditions.

- Device name: Laser diffraction/scattering particle size distribution measurement device LA-950 (available from Horiba, Ltd.)
- Measurement mode: Mie scattering theory
- Measurement range: 0.01 pm to 3000 pm
- Light source: Semiconductor laser (650 nm)
- Detector: Ring-shaped silicon photodiode
- Dispersing solvent: Water

A dispersion liquid in which the inorganic filler was well dispersed in water using an ultrasonic cleaner was dripped onto a flow cell filled with water, and measurement of particle size distribution was carried out within a range of proper light intensity. From the obtained volume-based particle size distribution, a particle diameter of a peak was obtained.

[Single-component gas permeation test]

A single-component gas permeation test was carried out using a device schematically illustrated in Fig. 1 and using a constant volume/valuable pressure method. The permeation side of the composite (the lower side of the composite in Fig. 1) was decompressed to 13 Pa (absolute pressure) or less, and a gas was supplied at certain constant pressure of approximately 35 kPa (G). A permeability was obtained from a rate of pressure increase on the permeation side at the time

when a differential pressure between the supply side and the permeation side of the composite was 0.1 MPa. The temperature of the constant temperature oven was set to 35°C, and a permeability of the composite at 35°C was obtained.

A gas was supplied from a gas cylinder 18. A near-side valve 17 and a valve 13 on the secondary side of a mass flow controller 5 were opened to supply the gas through the mass flow controller 5. The gas for carrying out a permeation test was held in a gas holder 3 for supply gas at approximately 35 kPa (G). Then, a valve 12 was closed and simultaneously a valve 11 was opened to supply the gas to the composite. At this time, a valve 14 was opened, and a valve 15 was closed. To ensure that the pressure of the supply gas was always constant, a constant amount of gas was supplied through the mass flow controller 5 while the valve 13 was kept open, and pressure was kept constant by a pressure relief valve 6.

A permeability was calculated based on a volume from the lower side of the composite to the valve 12, a membrane thickness, and a membrane area, as well as a pressure increase rate after a pressure increase rate measured with a pressure gage 7 became steady. For a gas holder for permeated gas, an internal capacity was measured based on an amount of water filling the gas holder. For a piping section, a volume was calculated from a pipe length and an inside diameter. From those values, a volume from the lower side of the composite to the valve 12 was calculated in advance. As the pressure gage, an absolute pressure transducer (Baratron (registered trademark) available from MKS for 0 to 10 torr (626C11TBE)) was used.

Gases used include carbon dioxide (99.9% purity, available from TOHO SANSO KOGYO Co., Ltd.), methane (99.999% purity, available from Japan Fine Products Corporation), and hydrogen (99.99% purity, available from Showa Denko Gas Products Co., Ltd.)

(Pretreatment of composite)

As a pretreatment of the composite before the gas permeation test, a composite 1 set in a separation membrane module 2 was heated in a constant temperature oven at 80°C or more for 2 hours, while both of the supply side line and the permeation side line were decompressed. After 2 hours elapsed, the temperature of the constant temperature oven was decreased to 35°C, and kept for 1 hour so as to remove water and a gas that had been dissolved in and adsorbed on the composite.

[Mixed gas permeation-separation test]

A mixed gas permeation-separation test was measured using a device schematically illustrated in Fig. 2.

(Pretreatment of membrane composite)

As a pretreatment of the membrane composite before the gas permeation-separation test, an organic-inorganic hybrid membrane composite 26 set in a separation membrane module 25 was heated at 35°C in a constant temperature oven 27 and kept for 3 hours while supplying carbon dioxide (99.9% purity, available from TOHO SANSO KOGYO Co., Ltd.) to the separation membrane module 25. Pressure on the permeation side was atmospheric pressure.

(Mixed gas permeation-separation test)

Following the pretreatment, it was confirmed that a flow rate on the permeation side of a mass flow meter 23 was stabilized. Then, carbon dioxide (99.9% purity, available from TOHO SANSO KOGYO Co., Ltd.) was supplied to the membrane using a mass flow controller 31 and a mass flow controller 32 such that a ratio between the carbon dioxide and nitrogen (99.9995% purity or more, available from Japan Fine Products Corporation) or methane (99.999% purity, available from Japan Fine Products Corporation) was approximately 1:1. At that time, the pressure on the supply side was adjusted to be 0.3 MPaG by a pressure relief valve 22. The permeation side was at atmospheric pressure. The permeated gas was introduced into a gas chromatograph 19 by a flow path selection valve 20. A composition in which the permeated gas was analyzed with the gas chromatograph 19 at the time when a flow rate of the mass flow meter 23 and an area ratio between two types of gases in the permeated gas obtained by analysis with the gas chromatograph 19 were stabilized was regarded as a composition of the permeated gas. The composition of the permeated gas was calculated from an area ratio between $CO_2$ and $CH_4$ or $CO_2$ and $N_2$, and an arithmetic mean value of analysis values for three times was employed. At that time, permeation flow rates of respective gases were calculated from the values of the mass flow meter 23, the composition obtained with the gas chromatograph 19, and calibration curves prepared in advance for the respective gases in the mass flow meter 23, and a total of the permeation flow rates was regarded as an overall permeation flow rate. Permeance of each gas was obtained from a permeation flow rate of the gas, a permeated gas composition, and a supply gas composition. A permeance ratio of $CO_2$ and $CH_4$ was determined as a separation factor $\alpha_{CO2/CH4}$, and a permeance ratio of $CO_2$ and $N_2$ was determined as a separation factor $\alpha_{CO2/N2}$.

The flow path was switched by the flow path selection valve 20, and a gas that was supplied to the separation

membrane module 25 and remained without permeation, i.e., a gas at the retentate side (hereinafter sometimes referred to as a retentate gas) was introduced into the gas chromatograph 19. The retentate gas was analyzed by gas chromatography in a similar manner to obtain a composition of the retentate gas. For the composition of the retentate gas also, an arithmetic mean value of analysis values for three times was used as a composition.

As the gas chromatograph 19, GC3210 available from GL Sciences, Inc. was used. A detector of GC3210 was TCD, and He was used as a carrier gas. A permeated gas or a retentate gas collected using a 0.5 ml sampling loop was introduced into a column by a carrier gas on-line. Each gas composition was calculated based on a calibration curve prepared in advance using a mixture gas having a known gas composition from an area ratio of peaks of $CO_2$ and $CH_4$ or $CO_2$ and $N_2$. An arithmetic mean value of analysis values for three times was used as a permeated gas composition.

In a case of a self-supported membrane, a membrane thickness was calculated from an average at a total of four locations using a digimatic standard outer micrometer (MDC-25M available from Mitsutoyo Corporation). The four locations included a center of the membrane to be measured and three locations that were slightly inner from an edge of the membrane and that had been selected at even intervals on a circumference. An area of a part where the gas permeates was considered as a membrane area.

A cross section of the organic-inorganic hybrid membrane composite obtained by freeze fracture was imaged using a scanning electron microscope. Then, a thickness which was calculated as an arithmetic mean of thicknesses at a plurality of locations of the separation relevant layer, which was a part other than the porous support layer, was regarded as the thickness. An area of a part where the gas permeates was considered as a membrane area. Acquisition conditions of a scanning electron microscope image are as follows.

- Device: FE-SEM Hitachi: S-4500
- Acceleration voltage: 10 kV
- Acquired image: Secondary electron image

[Measurement of glass transition temperature]

The glass transition temperature was measured using a differential scanning calorimeter (DSC) or a thermomechanical analyzer (TMA).

Measurement of the glass transition temperature by DSC was carried out using a differential scanning calorimeter DSC6220 (Au sensor) available from Hitachi High-Tech Science Corporation. The polymer sample (approximately 10 mg) was placed in an aluminum sample container and the container was sealed, and the temperature was raised from room temperature to 150°C at a temperature increase rate of 10°C/min under a nitrogen airflow of 50 mL/min. After the temperature was kept for 5 minutes, the sample container was taken out and placed in liquid nitrogen outside the oven for rapid cooling. Then, the temperature was raised from -150°C to 150°C again at a rate of 10°C/min. The inflection point of DSC data obtained at the second temperature rise was regarded as a glass transition temperature.

Measurement of a glass transition temperature by TMA was obtained from a change point in a thermal expansion coefficient using a thermomechanical analyzer TMA/SS6100 available from SII NanoTechnology Inc. A sample shape was 4 mm in width and 20 mm in distance between chucks. Measurement was carried out while increasing the temperature at a temperature increase rate of 10°C/min from 30°C to 325°C under a tensile load of 49 mN.

[Measurement of air permeation amount]

A porous support layer or a composite including a porous support layer and an organic-inorganic hybrid membrane was set in a module in a state of being exposed in a circular shape with a diameter of 1 cm. One end of the module was connected to a vacuum line at 5 kPa, and a flow rate of air was measured with a mass flow meter placed between the vacuum line and the module. An air permeation amount [$L/(m^2 \cdot h)$] (0°C, equivalent to 1 atmospheric pressure) was calculated. The measurement was carried out using a mass flow meter MM-2100M available from Lintec for air gas (maximum flow rate: 20 mL/min (0°C, equivalent to 1 atmospheric pressure)). For a case where a maximum flow rate was equal to or greater than that of the mass flow meter MM-2100M available from Lintec, a mass flow meter 8300 available from KOFLOC for $N_2$ gas (maximum flow rate: 500 ml/min (20°C, equivalent to 1 atmospheric pressure) was used. When setting the composite in the module, a side where the porous support layer was provided was a decompression side, i.e., a permeation side, and a side where the organic-inorganic hybrid membrane was provided was an atmospheric pressure side or a pressurization side, i.e., a gas supply side.

[Measurement of penetration of matrix polymer into porous support layer]

For the organic-inorganic hybrid membrane composite, a degree of penetration of the matrix polymer into the porous support layer was measured.

(Data acquisition method)

Freeze fracture was carried out with care to avoid deformation, and carbon sputtering (lamination: 45 nm or less) was carried out to impart electrical conductivity, and thus an organic-inorganic hybrid membrane composite was obtained. A cross section of the organic-inorganic hybrid membrane composite was imaged using a scanning electron microscope (SEM-EDS) while carrying out Si element mapping with EDS mapping measurement.

The measurement point was a region encompassing a range of approximately 5 pm from an interface between the organic-inorganic hybrid membrane and the porous support layer toward the organic-inorganic hybrid membrane in a site having no apparent defect such as peeling of membrane. The interface was visually parallel to the upper edge of a measurement image when the organic-inorganic hybrid membrane appeared at the upper part in the image. For the region, acquisition of a secondary electron image and Si element mapping (EDS mapping) were carried out.

(Measurement device for secondary electron image)

- Device: SU5000 (available from Hitachi, Ltd.)
- Detector: scintillator/photomultiplier secondary electron detector for high vacuum (Lower detector)

(Measurement condition of secondary electron image)

- Image resolution: 1280 pixels × 960 pixels
- Acceleration voltage: 6 kV
- Working distance (WD): 11±1 mm
- Spot intensity: 50
- Measurement magnification: 2000 times (observation field of view: 64 pm × 48 pm)

(EDS measurement device and measurement software)

- Device: SU5000 (available from Hitachi, Ltd.)
- Detector: XFlash 5060FlatQUAD (available from Bruker)
- Measurement software: Esprit 2.3 (available from Bruker)

(EDS measurement condition)

- Acceleration voltage: 6 kV
- Working distance (WD): 11±1 mm
- Spot intensity: 50
- Image resolution: 512 pixels × 384 pixels
- Dwell time (capture time per 1 pixel): 16 ps
- Pulse throughput: 130 kcps (per 1 element of detector; 4 elements were used for analysis)
- Accumulation time = 300 s
- EDS calibration: Calibration was carried out to satisfy 10 Kcps in a Cu-Kα ray in a case where an acceleration voltage was 15 kV and a copper standard was used.

(EDS analysis)

- Image processing software: Esprit 2.3 (available from Bruker)
- Method: Map analysis
- Map display setting

Image filter = none
Map filter = none
Result format = count (absolute scale, normalized by zero peak, full contrast range, deconvolution)

- Storage format: An image of 512 pixels × 384 pixels was extended to 533 pixels × 400 pixels and stored in a tif format.

(Data analysis method)

An obtained image was analyzed, and a degree of penetration was calculated.

- Image processing software: Esprit 2.3 (available from Bruker)
- Data processing method:

(1) Drawing of Si mapping image: For Si element (Kα ray) detection intensity obtained in a condition in which a depth of field was maximum, an image was drawn such that an 8-bit gray scale value fell within a region from 0 to 150 and a relation between Si signal intensity and luminance was linear. Maintaining such a relation between Si signal intensity and luminance was carried out by a deconvolution process and a histogram equalization process.
(2) Occupation proportion: For the Si mapping image obtained in such a manner, a region of interest (ROI) was set. Specifically, a region from the organic-inorganic hybrid membrane to the interface between the organic-inorganic hybrid membrane and the porous support layer was replaced with white (i.e., 255 of the 8-bit gray scale value). Subsequently, a luminance change of adjacent upper and lower pixels in a column of 1 pixel in width at the left edge of the measurement image was calculated, and a local maximum point of a luminance change at the uppermost side was determined. A similar process was carried out on a column of 1 pixel in width at the right edge of the measurement image. A line segment connecting the determined local maximum points at the right edge and the left edge with each other was translated by 30 pm along a direction from the interface toward the porous support layer. A part below the line segment was replaced with white (255 in the 8-bit gray scale value). Subsequently, a region not replaced with white was set as an ROI.

For the ROI, a histogram was drawn where a Y-axis indicated the number of observed pixels and an X-axis indicated an 8-bit gray scale value (0 to 254). A total number of pixels in that gradation of 20 to 254 was divided by the total number of pixels in the entire region of that gradation of 0 to 254. A value thus obtained is referred to as an occupation proportion of the matrix polymer in the ROI region, and is used as an index of a penetration degree of the matrix polymer into the porous support layer.

[Synthesis of gas-selective inorganic filler]

As a gas-selective inorganic filler, zeolite was synthesized.

(Synthesis of zeolite (Z-1))

To a container, sodium hydroxide, potassium hydroxide, N,N,N-trimethyl-1-adamantammonium hydroxide (TMADAOH) aqueous solution (available from SACHEM), aluminum hydroxide hydrate (available from Aldrich), and silica water dispersion sol, were added sequentially. The N,N,N-trimethyl-1-adamantammonium hydroxide was used as a structure directing agent (SDA). A compositional ratio of a resultant mixture was 1.0 $SiO_2$/0.033 $Al_2O_3$/0.1 NaOH/0.06 KOH/0.07 TMADAOH/20 $H_2O$. Subsequently, CHA-type zeolite powder prepared in a manner similar to that of Japanese patent application publication, Tokukai, No. 2016-104486 in an amount of 2% by mass relative to $SiO_2$ in the mixture was added to the mixture and mixed well. Subsequently, a resultant reaction mixture was placed in a pressure-resistant container, and hydrothermal synthesis was carried out for 48 hours while rotating the container at 15 rpm in an oven at 160°C. After the reaction was completed, suction filtration was carried out, and a resultant solid was washed with water. Subsequently, drying was carried out in a constant temperature oven at 100°C overnight, and then calcination at 550°C was carried out for 6 hours under air atmosphere to pyrolyze SDA. Thus, zeolite (Z-1) was obtained. Powder X-ray diffraction was carried out on the obtained zeolite (Z-1), and it was confirmed that the zeolite (Z-1) was CHA-type zeolite. The zeolite (Z-1) was 8-membered oxygen ring zeolite because the zeolite (Z-1) was CHA-type zeolite. A framework density ($FD_{Si}$) in a case where T elements are all Si was 15.1. An average particle diameter of the obtained zeolite (Z-1) was 0.6 pm as a result of SEM observation. An $SiO_2/Al_2O_3$ ratio obtained was 25.

(Synthesis of zeolite (Z-6))

To a mixture of 150 g of a 1 mol/L-NaOH aqueous solution (available from Kishida Chemical Co., Ltd.) and 90 g of a 1 mol/L-KOH aqueous solution (available from Kishida Chemical Co., Ltd.), 9.4 g of aluminum hydroxide hydrate (available from KYOWAAD) was added and stirred to be dissolved. Furthermore, 98 g of water was added and stirred, and thus a transparent solution was obtained. To the transparent solution, 88.8 g of an N,N,N-trimethyl-1-adamantammonium hydroxide (TMADAOH) aqueous solution (available from SACHEM, containing 25% by mass of TMADAOH) was added. Furthermore, 225 g of colloidal silica (SNOWTEX-40 available from NISSAN CHEMICAL INDUSTRIES, LTD.) was added. Furthermore, 1.8 g of uncalcined CHA-type zeolite synthesized in a manner similar to that in Production Example 9 of Japanese Patent Application Publication, Tokukai, No. 2016-104486 was added as a seed crystal. A resultant mixture was stirred for 2 hours and thus a reaction mixture was obtained. The TMADAOH was used as a structure directing agent (SDA).

A compositional ratio of the obtained reaction mixture was 1.0 $SiO_2$/0.033 $Al_2O_3$/0.1 NaOH/0.06 KOH/0.07 TMADAOH/20 $H_2O$, and a mass of the seed crystal was 2% by mass relative to $SiO_2$ in the reaction mixture.

A Teflon (registered trademark) inner cylinder (1 L) containing the above reaction mixture was placed in a 1-L induction stirring autoclave and sealed. Then stirring was carried out using an anchor impeller at 100 rpm, and heating at 160°C was carried out for 48 hours under autogenic pressure. After a predetermined time elapsed, the reaction mixture was left to be cooled. Then, the reaction mixture was taken out, filtered, and washed. Then the reaction mixture was dried at 100°C for 5 hours or more, and thus as-made zeolite crystals were obtained. The as-made zeolite crystals were calcined at 550°C for 6 hours under air atmosphere to pyrolyze SDA. Thus zeolite (Z-6) was obtained. Powder X-ray diffraction was carried out on the obtained zeolite (Z-6), and it was confirmed that the zeolite (Z-6) was CHA-type zeolite. The zeolite (Z-6) was 8-membered oxygen ring zeolite because the zeolite (Z-6) was CHA-type zeolite. A framework density ($FD_{Si}$) in a case where T elements are all Si was 15.1. An average particle diameter of the obtained zeolite (Z-6) was 0.7 pm as a result of SEM observation. An $SiO_2/Al_2O_3$ ratio obtained was 24. The average circularity coefficient was 0.87.

(Synthesis of zeolite (Z-7))

Zeolite was synthesized in a manner similar to Z-6, except that a pressure-resistant container having a capacity of 200 mL was used as a reaction container and the container was rotated at 15 rpm in an oven at 160°C. The zeolite was calcined to remove SDA, and thus zeolite (Z-7) was obtained. Powder X-ray diffraction was carried out on the obtained zeolite (Z-7), and it was confirmed that the zeolite (Z-7) was CHA-type zeolite. The zeolite (Z-7) was 8-membered oxygen ring zeolite because the zeolite (Z-7) was CHA-type zeolite. A framework density (FDsi) in a case where T elements are all Si was 15.1. An average particle diameter of the obtained zeolite (Z-7) was 1 pm as a result of SEM observation. An $SiO_2/Al_2O_3$ ratio obtained was 26. The average circularity coefficient was 0.94.

A modal diameter in the volume-based particle size distribution of Z-7 was 1.2 pm.

(Synthesis of zeolite (Z-8))

Zeolite was synthesized in a manner similar to Z-7, except that Z-11 before calcination was used as a seed crystal. The zeolite was calcined to remove SDA, and thus Z-8 was obtained. Powder X-ray diffraction was carried out on the obtained zeolite (Z-8), and it was confirmed that the zeolite (Z-8) was CHA-type zeolite. The zeolite (Z-8) was 8-membered oxygen ring zeolite because the zeolite (Z-8) was CHA-type zeolite. A framework density (FDsi) in a case where T elements are all Si was 15.1. An average particle diameter of the obtained zeolite (Z-8) was 0.8 pm as a result of SEM observation. An $SiO_2/Al_2O_3$ ratio obtained was 24. The average circularity coefficient was 0.92.

(Synthesis of zeolite (Z-9))

Zeolite was synthesized in a manner similar to Z-7, except that a compositional ratio of the reaction mixture was 1.0 $SiO_2$/0.033 $Al_2O_3$/0.1 NaOH/0.06 KOH/0.1 TMADAOH/15 $H_2O$ and hydrothermal synthesis was carried out in an oven at 160°C for 96 hours with rotation at 15 rpm. The zeolite was calcined to remove SDA, and thus zeolite (Z-9) was obtained. Powder X-ray diffraction was carried out on the obtained zeolite (Z-9), and it was confirmed that the zeolite (Z-9) was CHA-type zeolite. The zeolite (Z-9) was 8-membered oxygen ring zeolite because the zeolite (Z-9) was CHA-type zeolite. A framework density (FDsi) in a case where T elements are all Si was 15.1. An average particle diameter of the obtained zeolite (Z-9) was 0.2 pm as a result of SEM observation. An $SiO_2/Al_2O_3$ ratio obtained was 25. The average circularity coefficient was 0.89. A modal diameter in the volume-based particle size distribution of Z-9 was 0.31 pm.

(Synthesis of zeolite (Z-10))

Zeolite was synthesized in a manner similar to Z-7, except that a compositional ratio of the reaction mixture was 1.0 $SiO_2$/0.04 $Al_2O_3$/0.15 KOH/0.2 TMADAOH/20 $H_2O$, and hydrothermal synthesis was carried out by leaving a 200-ml pressure-resistant container containing the reaction mixture to stand still in an oven at 160°C for 96 hours. The zeolite was calcined to remove SDA, and thus zeolite (Z-10) was obtained. Powder X-ray diffraction was carried out on the obtained zeolite (Z-10), and it was confirmed that the zeolite (Z-10) was CHA-type zeolite. The zeolite (Z-10) was 8-membered oxygen ring zeolite because the zeolite (Z-10) was CHA-type zeolite. A framework density (FDsi) in a case where T elements are all Si was 15.1. An average particle diameter of the obtained zeolite (Z-10) was 5 pm as a result of SEM observation, a shape thereof was a cubic shape, and an average circularity coefficient thereof was 0.77. An $SiO_2/Al_2O_3$ ratio obtained was 20.
A modal diameter in the volume-based particle size distribution of Z-10 was 7.3 pm.

(Synthesis of zeolite (Z-11))

Zeolite was synthesized in a manner similar to Z-6, except that a compositional ratio of the reaction mixture was 1.0 $SiO_2$/0.033 $Al_2O_3$/0.1 NaOH/0.04 KOH/0.07 TMADAOH/20 $H_2O$. The zeolite was calcined to remove SDA, and thus zeolite (Z-11) was obtained. Powder X-ray diffraction was carried out on the obtained zeolite (Z- 11), and it was confirmed that the zeolite (Z-11) was CHA-type zeolite. The zeolite (Z-11) was 8-membered oxygen ring zeolite because the zeolite (Z-11) was CHA-type zeolite. A framework density ($FD_{Si}$) in a case where T elements are all Si was 15.1. An average particle diameter of the obtained zeolite (Z-11) was 2 pm as a result of SEM observation, a shape thereof was a spherical shape, and an average circularity coefficient thereof was 0.94. An $SiO_2/Al_2O_3$ ratio of the obtained zeolite (Z-11) was 26.

(Synthesis of zeolite (Z-12))

Zeolite was synthesized in a manner similar to Z-10, except that a compositional ratio of the reaction mixture was 1.0 $SiO_2$/0.033 $Al_2O_3$/0.4 TMADAOH/20 $H_2O$, and hydrothermal synthesis was carried out by leaving a 200-ml pressure-resistant container containing the reaction mixture to stand still in an oven at 160°C for 48 hours. The zeolite was calcined to remove SDA, and thus zeolite (Z-12) was obtained. Powder X-ray diffraction was carried out on the obtained zeolite (Z-12), and it was confirmed that the zeolite (Z-12) was CHA-type zeolite. The zeolite (Z-12) was 8-membered oxygen ring zeolite because the zeolite (Z-12) was CHA-type zeolite. A framework density (FDsi) in a case where T elements are all Si was 15.1. An average particle diameter of the obtained zeolite (Z-12) was 5 pm as a result of SEM observation, a shape thereof was a spherical shape, and an average circularity coefficient thereof was 0.94. An $SiO_2/Al_2O_3$ ratio of the obtained zeolite (Z-12) was 23.

(Synthesis of zeolite (Z-14))

Zeolite was synthesized in a manner similar to Z-8, except that a compositional ratio of the reaction mixture was 1.0 $SiO_2$/0.033 $Al_2O_3$/0.1 NaOH/0.06 KOH/0.07 TMADAOH/100 $H_2O$. The zeolite was calcined to remove SDA, and thus zeolite (Z-14) was obtained. Powder X-ray diffraction was carried out on the obtained zeolite (Z-14), and it was confirmed that the zeolite (Z-14) was CHA-type zeolite. The zeolite (Z-14) was 8-membered oxygen ring zeolite because the zeolite (Z-14) was CHA-type zeolite. A framework density ($FD_{Si}$) in a case where T elements are all Si was 15.1. An average particle diameter of the obtained zeolite (Z-14) was 6 pm as a result of SEM observation, a shape thereof was a rugby ball shape, and an average circularity coefficient thereof was 0.91. An $SiO_2/Al_2O_3$ ratio of the obtained zeolite (Z-14) was 25.

(Synthesis of zeolite (Z-15))

To a solution in an eggplant-shaped flask containing 100 g of weighed-out acetone and 5 g of a silane coupling agent (KBM-1083, Shin-Etsu Chemical Co., Ltd.), 15 g of dried zeolite (Z-7) was introduced, and a resultant mixture was heated to reflux in an oil bath at 55°C for 5 hours while being stirred. The mixture was subjected to suction filtration, then washed well with acetone, and then dried. Thus, zeolite (Z-15) was obtained. An average particle diameter, an $SiO_2/Al_2O_3$ ratio, and an average circularity coefficient of the obtained zeolite (Z-15) were similar to those of the zeolite (Z-7) which was a raw material.

(Synthesis of zeolite (Z-16))

To a solution in an eggplant-shaped flask containing 100 g of weighed-out acetone and 5 g of a silane coupling agent (KBM-1083, Shin-Etsu Chemical Co., Ltd.), 15 g of dried zeolite (Z-8) was introduced, and a resultant mixture was

heated to reflux in an oil bath at 55°C for 5 hours while being stirred. The mixture was subjected to suction filtration, then washed well with acetone, and then dried. Thus, zeolite (Z-16) was obtained. An average particle diameter, an $SiO_2/Al_2O_3$ ratio, and an average circularity coefficient of the obtained zeolite (Z-16) were similar to those of the zeolite (Z-8) which was a raw material.

(Synthesis of zeolite (Z-17))

To a solution in an eggplant-shaped flask containing 100 g of weighed-out acetone and 5 g of a silane coupling agent (KBM-1083, Shin-Etsu Chemical Co., Ltd.), 15 g of dried zeolite (Z-11) was introduced, and a resultant mixture was heated to reflux in an oil bath at 55°C for 5 hours while being stirred. The mixture was subjected to suction filtration, then washed well with acetone, and then dried. Thus, zeolite (Z-17) was obtained. An average particle diameter, an $SiO_2/Al_2O_3$ ratio, and an average circularity coefficient of the obtained zeolite (Z-17) were similar to those of the zeolite (Z-11) which was a raw material.

(Synthesis of zeolite (Z-18))

To a solution in an eggplant-shaped flask containing 100 g of weighed-out acetone and 5 g of a silane coupling agent (KBM-1083, Shin-Etsu Chemical Co., Ltd.), 15 g of dried zeolite (Z-14) was introduced, and a resultant mixture was heated to reflux in an oil bath at 55°C for 5 hours while being stirred. The mixture was subjected to suction filtration, then washed well with acetone, and then dried. Thus, zeolite (Z-18) was obtained. An average particle diameter, an $SiO_2/Al_2O_3$ ratio, and an average circularity coefficient of the obtained zeolite (Z-18) were similar to those of the zeolite (Z-14) which was a raw material.

(Synthesis of zeolite (Z-19))

Zeolite was synthesized in a manner similar to Z-8, except that a compositional ratio of the reaction mixture was 1.0 $SiO_2$/0.033 $Al_2O_3$/0.1 NaOH/0.06 KOH/0.07 TMADAOH/80 $H_2O$. The zeolite was calcined to remove SDA, and thus zeolite (Z-19) was obtained. Powder X-ray diffraction was carried out on the obtained zeolite (Z-19), and it was confirmed that the zeolite (Z-19) was CHA-type zeolite. The zeolite (Z-19) was 8-membered oxygen ring zeolite because the zeolite (Z-19) was CHA-type zeolite. A framework density ($FD_{Si}$) in a case where T elements are all Si was 15.1. An average particle diameter of the obtained zeolite (Z-19) was 3 pm as a result of SEM observation. An $SiO_2/Al_2O_3$ ratio obtained was 25. The average circularity coefficient was 0.91.

(Synthesis of zeolite (Z-20))

Zeolite was obtained in a manner similar to Z-7, except that Z-9 was used as a seed crystal.

Next, to a solution in an eggplant-shaped flask containing 100 g of weighed-out acetone and 5 g of a silane coupling agent (KBM-1083, Shin-Etsu Chemical Co., Ltd.), 15 g of dried zeolite was introduced, and a resultant mixture was heated to reflux in an oil bath at 55°C for 5 hours while being stirred. The mixture was subjected to suction filtration, then washed well with acetone, and then dried. Thus, zeolite (Z-20) was obtained. Powder X-ray diffraction was carried out on the obtained zeolite (Z-20), and it was confirmed that the zeolite (Z-20) was CHA-type zeolite. The zeolite (Z-20) was 8-membered oxygen ring zeolite because the zeolite (Z-20) was CHA-type zeolite. A framework density (FDsi) in a case where T elements are all Si was 15.1. An average particle diameter of the obtained zeolite (Z-20) was 0.5 pm as a result of SEM observation. An $SiO_2/Al_2O_3$ ratio obtained was 25. The average circularity coefficient was 0.92.

(Organic-inorganic hybrid membrane (M-22))

With 0.325 g of the zeolite (Z-14) which had been dried at 150°C overnight, 0.068 g of the zeolite (Z-6), 0.162 g of a silicone rubber precursor (SILPOT™ 184 Silicone Elastomer Base (available from Dow Toray Co., Ltd.)) (hereinafter sometimes referred to as a Silpot main agent), and 0.012 g of a curing agent (SILPOT™ 184 Silicone Elastomer Curing Agent, available from Dow Toray Co., Ltd.) (hereinafter sometimes referred to as a Silpot curing agent) were mixed using a planetary centrifugal mixer, Awatori Rentaro (AR-250, available from Thinky Corporation) while being stirred for 15 minutes and defoamed for 1 minute. Then, a resultant mixture was further mixed with 0.334 g of hexane (available from FUJIFILM Wako Pure Chemical Corporation) to obtain a solution, and the solution thus obtained was applied on a release film using an applicator with a gap width of 8 mil. The solvent was volatilized using a vacuum dryer, and a release film was further placed thereon to sandwich, and pressurization was carried out using a small manual hot press, IMC-180C-C available from Imoto machinery Co., Ltd. until a pressure gauge indicated 20 MPa. Then, curing was carried out under pressure while keeping 100°C for 10 minutes, and the release films were removed. Thus, an organic-inorganic hybrid

membrane (M-22) constituted by the matrix polymer (P-1), the CHA type zeolite (Z-14) and zeolite (Z-6) was obtained. A proportion of zeolite in the organic-inorganic hybrid membrane (M-22) was 69.3% by mass and, among the zeolite, a contained amount of the zeolite (Z-14) was 4.8 times greater than that of the zeolite (Z-6). A membrane thickness of the organic-inorganic hybrid membrane (M-22) was 47 pm.

When a particle size distribution of the mixture of the zeolite (Z-14) and the zeolite (Z-6) was measured, two peaks of 3.6 pm and 0.36 pm were observed in the volume-based particle size distribution.

An air permeation amount of the organic-inorganic hybrid membrane (M-22) was measured with the foregoing evaluation method and found to be 0.0 [L/(m$^2$·h)]. A $CO_2$ permeability at 35°C was 12000 Barrer, a $CH_4$ permeability was 340 Barrer, and a $CO_2/CH_4$ ideal separation factor was 34.

(Organic-inorganic hybrid membrane (M-19))

With 0.323 g of the zeolite (Z-12) which had been dried at 150°C overnight, 0.067 g of the zeolite (Z-6), 0.151 g of a Silpot main agent, and 0.024 g of a Silpot curing agent were mixed using a planetary centrifugal mixer, Awatori Rentaro (AR-250, available from Thinky Corporation) while being stirred for 15 minutes and defoamed for 1 minute. Then, a resultant mixture was further mixed with 0.34 g of hexane (available from FUJIFILM Wako Pure Chemical Corporation) to obtain a solution, and the solution thus obtained was applied on a release film using an applicator with a gap width of 8 mil. The solvent was volatilized using a vacuum dryer, and a release film was further placed thereon to sandwich, and pressurization was carried out using a small manual hot press, IMC-180C-C available from Imoto machinery Co., Ltd. until a pressure gauge indicated 20 MPa. Then, curing was carried out under pressure while keeping 100°C for 10 minutes, and the release films were removed. Thus, an organic-inorganic hybrid membrane (M-19) constituted by the matrix polymer (P-1), the CHA type zeolite (Z-12) and zeolite (Z-6) was obtained. A proportion of zeolite in the organic-inorganic hybrid membrane (M-19) was 69.0% by mass and, among the zeolite, a contained amount of the zeolite (Z-12) was 4.8 times greater than that of the zeolite (Z-6). A membrane thickness of the organic-inorganic hybrid membrane (M-19) was 53 pm. An air permeation amount of the organic-inorganic hybrid membrane (M-19) was measured with the foregoing evaluation method and found to be 0.0 [L/(m$^2$·h)]. A $CO_2$ permeability at 35°C was 12000 Barrer, a $CH_4$ permeability was 450 Barrer, and a $CO_2/CH_4$ ideal separation factor was 26.

(Organic-inorganic hybrid membrane (M-20))

With 0.323 g of the zeolite (Z-12) which had been dried at 150°C overnight, 0.067 g of the zeolite (Z-6), 0.151 g of a Silpot main agent, and 0.024 g of a Silpot curing agent were mixed using a planetary centrifugal mixer, Awatori Rentaro (AR-250, available from Thinky Corporation) while being stirred for 15 minutes and defoamed for 1 minute. Then, a resultant mixture was further mixed with 0.340 g of hexane (available from FUJIFILM Wako Pure Chemical Corporation) to obtain a solution, and the solution thus obtained was applied on a release film using an applicator with a gap width of 8 mil. The solvent was volatilized using a vacuum dryer. Then curing was carried out by heating in a circulating constant temperature oven at 80°C for 5 hours, and the release film was removed. Thus, an organic-inorganic hybrid membrane (M-20) constituted by the matrix polymer (P-1), the CHA type zeolite (Z-12) and zeolite (Z-6) was obtained. A proportion of zeolite in the organic-inorganic hybrid membrane (M-20) was 69.0% by mass and, among the zeolite, a contained amount of the zeolite (Z-12) was 4.8 times greater than that of the zeolite (Z-6). A membrane thickness of the organic-inorganic hybrid membrane (M-20) was 64.3 pm. An air permeation amount of the organic-inorganic hybrid membrane (M-20) was measured with the foregoing evaluation method and found to be 0.0 [L/(m$^2$·h)]. A $CO_2$ permeability at 35°C was 17000 Barrer, a $CH_4$ permeability was 910 Barrer, and a $CO_2/CH_4$ ideal separation factor was 19.

(Organic-inorganic hybrid membrane (M-15))

With 0.374 g of the zeolite (Z-11) which had been dried at 150°C overnight, 0.078 g of the zeolite (Z-8), 0.173 g of a Silpot main agent, and 0.020 g of a Silpot curing agent were mixed using a planetary centrifugal mixer, Awatori Rentaro (AR-250, available from Thinky Corporation) while being stirred for 15 minutes and defoamed for 1 minute. Then, a resultant mixture was further mixed with 0.38 g of methyl ethyl ketone (available from FUJIFILM Wako Pure Chemical Corporation) to obtain a solution, and the solution thus obtained was applied on a release film using an applicator with a gap width of 8 mil. The solvent was volatilized using a vacuum dryer, and a release film was further placed thereon to sandwich, and pressurization was carried out using a small manual hot press, IMC-180C-C available from Imoto machinery Co., Ltd. until a pressure gauge indicated 20 MPa. Then, curing was carried out under pressure while keeping 100°C for 10 minutes, and the release films were removed. Thus, an organic-inorganic hybrid membrane (M-15) constituted by the matrix polymer (P-1), the CHA type zeolite (Z-11) and zeolite (Z-8) was obtained. A proportion of zeolite in the organic-inorganic hybrid membrane (M-15) was 70.1% by mass and, among the zeolite, a contained amount of the zeolite (Z-11) was 4.8 times greater than that of the zeolite (Z-8). A membrane thickness of the organic-inorganic hybrid membrane (M-15) was

65 pm. An air permeation amount of the organic-inorganic hybrid membrane (M-15) was measured with the foregoing evaluation method and found to be 0.0 [L/($m^2 \cdot h$)]. A $CO_2$ permeability at 35°C was 14000 Barrer, a $CH_4$ permeability was 480 Barrer, and a $CO_2/CH_4$ ideal separation factor was 28.

(Organic-inorganic hybrid membrane (M-16))

With 0.554 g of the zeolite (Z-11) which had been dried at 150°C overnight, 0.111 g of the zeolite (Z-8), 0.245 g of a Silpot main agent, 0.025 g of a Silpot curing agent, and 0.011 g of a modified silicone oil (X-22-163B (available from Shin-Etsu Chemical Co., Ltd.)) as a dispersion agent were mixed using a planetary centrifugal mixer, Awatori Rentaro (AR-250, available from Thinky Corporation) while being stirred for 15 minutes and defoamed for 1 minute. Then, a resultant mixture was further mixed with 0.600 g of hexane (available from FUJIFILM Wako Pure Chemical Corporation) to obtain a solution, and the solution thus obtained was applied on a release film using an applicator with a gap width of 8 mil. The solvent was volatilized using a vacuum dryer, and a release film was further placed thereon to sandwich, and pressurization was carried out using a small manual hot press, IMC-180C-C available from Imoto machinery Co., Ltd. until a pressure gauge indicated 20 MPa. Then, curing was carried out under pressure while keeping 100°C for 10 minutes, and the release films were removed. Thus, an organic-inorganic hybrid membrane (M-16) constituted by the matrix polymer (P-1), the CHA type zeolite (Z-11) and zeolite (Z-8) was obtained. A proportion of zeolite in the organic-inorganic hybrid membrane (M-16) was 70.3% by mass and, among the zeolite, a contained amount of the zeolite (Z-11) was 5.0 times greater than that of the zeolite (Z-8). A membrane thickness of the organic-inorganic hybrid membrane (M-16) was 56 pm. An air permeation amount of the organic-inorganic hybrid membrane (M-16) was measured with the foregoing evaluation method and found to be 0.0 [L/($m^2 \cdot h$)]. A $CO_2$ permeability at 35°C was 13000 Barrer, a $CH_4$ permeability was 480 Barrer, and a $CO_2/CH_4$ ideal separation factor was 27.

(Organic-inorganic hybrid membrane (M-14))

With 0.319 g of the zeolite (Z-11) which had been dried at 150°C overnight, 0.068 g of the zeolite (Z-9), 0.162 g of a Silpot main agent, and 0.016 g of a Silpot curing agent were mixed using a planetary centrifugal mixer, Awatori Rentaro (AR-250, available from Thinky Corporation) while being stirred for 15 minutes and defoamed for 1 minute. Then, a resultant mixture was further mixed with 0.427 g of hexane (available from FUJIFILM Wako Pure Chemical Corporation) to obtain a solution, and the solution thus obtained was applied on a release film using an applicator with a gap width of 8 mil. The solvent was volatilized using a vacuum dryer, and a release film was further placed thereon to sandwich, and pressurization was carried out using a small manual hot press, IMC-180C-C available from Imoto machinery Co., Ltd. until a pressure gauge indicated 20 MPa. Then, curing was carried out under pressure while keeping 100°C for 10 minutes, and the release films were removed. Thus, an organic-inorganic hybrid membrane (M-14) constituted by the matrix polymer (P-1), the CHA type zeolite (Z-11) and zeolite (Z-9) was obtained. A proportion of zeolite in the organic-inorganic hybrid membrane (M-19) was 68.5% by mass and, among the zeolite, a contained amount of the zeolite (Z-11) was 4.7 times greater than that of the zeolite (Z-9). A membrane thickness of the organic-inorganic hybrid membrane (M-14) was 49 pm. An air permeation amount of the organic-inorganic hybrid membrane (M-14) was measured with the foregoing evaluation method and found to be 0.0 [L/($m^2 \cdot h$)]. A $CO_2$ permeability at 35°C was 12000 Barrer, a $CH_4$ permeability was 460 Barrer, and a $CO_2/CH_4$ ideal separation factor was 27.

(Organic-inorganic hybrid membrane (M-11))

With 0.662 g of the zeolite (Z-6) which had been dried at 150°C overnight, 0.452 g of a Silpot main agent and 0.040 g of a Silpot curing agent were mixed using a planetary centrifugal mixer, Awatori Rentaro (AR-250, available from Thinky Corporation) while being stirred for 15 minutes and defoamed for 1 minute. Then, a resultant mixture was further mixed with 0.6734 g of hexane (available from FUJIFILM Wako Pure Chemical Corporation) to obtain a solution, and the solution thus obtained was applied on a release film using an applicator with a gap width of 8 mil. The solvent was volatilized using a vacuum dryer, and a release film was further placed thereon to sandwich, and pressurization was carried out using a small manual hot press, IMC-180C-C available from Imoto machinery Co., Ltd. until a pressure gauge indicated 20 MPa. Then, curing was carried out under pressure while keeping 100°C for 10 minutes, and the release films were removed. Thus, an organic-inorganic hybrid membrane (M-11) constituted by the matrix polymer (P-1) and the CHA type zeolite (Z-6) was obtained. A proportion of zeolite in the organic-inorganic hybrid membrane (M-11) was 57.4% by mass, and a membrane thickness was 43 pm. An air permeation amount of the organic-inorganic hybrid membrane (M-11) was measured with the foregoing evaluation method and found to be 0.0 [L/($m^2 \cdot h$)]. A $CO_2$ permeability at 35°C was 11000 Barrer, a $CH_4$ permeability was 550 Barrer, and a $CO_2/CH_4$ ideal separation factor was 20.

(Organic-inorganic hybrid membrane (M-12))

With 0.662 g of the zeolite (Z-6) which had been dried at 150°C overnight, 0.452 g of a Silpot main agent and 0.040 g of a Silpot curing agent were mixed using a planetary centrifugal mixer, Awatori Rentaro (AR-250, available from Thinky Corporation) while being stirred for 15 minutes and defoamed for 1 minute. Then, a resultant mixture was further mixed with 0.6734 g of hexane (available from FUJIFILM Wako Pure Chemical Corporation) to obtain a solution, and the solution thus obtained was applied on a release film using an applicator with a gap width of 8 mil. The solvent was volatilized using a vacuum dryer. Then curing was carried out by heating in a circulating constant temperature oven at 80°C for 5 hours, and the release film was removed. Thus, an organic-inorganic hybrid membrane (M-12) constituted by the matrix polymer (P-1) and the CHA type zeolite (Z-6) was obtained. A proportion of zeolite in the organic-inorganic hybrid membrane (M-12) was 57.4% by mass, and a membrane thickness was 68 pm. An air permeation amount of the organic-inorganic hybrid membrane (M-12) was measured with the foregoing evaluation method and found to be 0.0 [L/($m^2 \cdot h$)]. A $CO_2$ permeability at 35°C was 16000 Barrer, a $CH_4$ permeability was 800 Barrer, and a $CO_2/CH_4$ ideal separation factor was 20.

(Organic-inorganic hybrid membrane (M-21))

With 0.304 g of the zeolite (Z-14) which had been dried at 150°C overnight, 0.127 g of a Silpot main agent and 0.015 g of a Silpot curing agent were mixed using a planetary centrifugal mixer, Awatori Rentaro (AR-250, available from Thinky Corporation) while being stirred for 15 minutes and defoamed for 1 minute. Then, a resultant mixture was further mixed with 0.283 g of hexane (available from FUJIFILM Wako Pure Chemical Corporation) to obtain a solution, and the solution thus obtained was applied on a release film using an applicator with a gap width of 8 mil. The solvent was volatilized using a vacuum dryer. Then curing was carried out by heating in a circulating constant temperature oven at 80°C for 5 hours, and the release film was removed. Thus, an organic-inorganic hybrid membrane (M-21) constituted by the matrix polymer (P-1) and the CHA type zeolite (Z-14) was obtained. A proportion of zeolite in the organic-inorganic hybrid membrane (M-21) was 68.2% by mass, and a membrane thickness was 50 pm. An air permeation amount of the organic-inorganic hybrid membrane (M-21) was measured with the foregoing evaluation method and found to be 0.0 [L/($m^2 \cdot h$)]. A $CO_2$ permeability at 35°C was 17000 Barrer, a $CH_4$ permeability was 510 Barrer, and a $CO_2/CH_4$ ideal separation factor was 34.

(Organic-inorganic hybrid membrane (M-13))

With 0.368 g of the zeolite (Z-11) which had been dried at 150°C overnight, 0.163 g of a Silpot main agent and 0.027 g of a Silpot curing agent were mixed using a planetary centrifugal mixer, Awatori Rentaro (AR-250, available from Thinky Corporation) while being stirred for 15 minutes and defoamed for 1 minute. Then, a resultant mixture was further mixed with 0.3705 g of hexane (available from FUJIFILM Wako Pure Chemical Corporation) to obtain a solution, and the solution thus obtained was applied on a release film using an applicator with a gap width of 8 mil. The solvent was volatilized using a vacuum dryer. Then curing was carried out by heating in a circulating constant temperature oven at 80°C for 5 hours, and the release film was removed. Thus, an organic-inorganic hybrid membrane (M-13) constituted by the matrix polymer (P-1) and the CHA type zeolite (Z-11) was obtained. A proportion of zeolite in the organic-inorganic hybrid membrane (M-13) was 65.9% by mass, and a membrane thickness was 47 pm. An air permeation amount of the organic-inorganic hybrid membrane (M-13) was measured with the foregoing evaluation method and found to be 0.0 [L/($m^2 \cdot h$)]. A $CO_2$ permeability at 35°C was 11000 Barrer, a $CH_4$ permeability was 460 Barrer, and a $CO_2/CH_4$ ideal separation factor was 24.

(Organic-inorganic hybrid membrane (M-17))

With 0.249 g of the zeolite (Z-10) (modal diameter: 7.3 pm) which had been dried at 150°C overnight, 0.052 g of the zeolite (Z-9) (modal diameter: 0.31 pm), 0.107 g of a Silpot main agent, 0.012 g of a Silpot curing agent, and 0.031 g of a modified silicone oil (X-22-163B (available from Shin-Etsu Chemical Co., Ltd.)) as a dispersion agent were mixed using a planetary centrifugal mixer, Awatori Rentaro (AR-250, available from Thinky Corporation) while being stirred for 15 minutes and defoamed for 1 minute. Then, a resultant mixture was further mixed with 0.314 g of hexane (available from FUJIFILM Wako Pure Chemical Corporation) to obtain a solution, and the solution thus obtained was applied on a release film using an applicator with a gap width of 8 mil. The solvent was volatilized using a vacuum dryer, and a release film was further placed thereon to sandwich, and pressurization was carried out using a small manual hot press, IMC-180C-C available from Imoto machinery Co., Ltd. until a pressure gauge indicated 20 MPa. Then, curing was carried out under pressure while keeping 100°C for 10 minutes, and the release films were removed. Thus, an organic-inorganic hybrid membrane (M-17) constituted by the matrix polymer (P-1), the CHA type zeolite (Z-10) and zeolite (Z-9) was obtained. A proportion of zeolite in the organic-inorganic hybrid membrane (M-17) was 66.7% by mass and, among the zeolite, a

contained amount of the zeolite (Z-10) was 4.6 times greater than that of the zeolite (Z-9). The organic-inorganic hybrid membrane (M-17) contained two types of zeolite, i.e., Z-10 having a peak at 7.3 pm in the volume-based particle size distribution and Z-9 having a peak at 0.31 pm in the volume-based particle size distribution. A membrane thickness of the organic-inorganic hybrid membrane (M-17) was 61 pm. An air permeation amount of the organic-inorganic hybrid membrane (M-17) was measured with the foregoing evaluation method and found to be 0.0 [L/($m^2 \cdot h$)]. A $CO_2$ permeability at 35°C was 13000 Barrer, a $CH_4$ permeability was 510 Barrer, and a $CO_2/CH_4$ ideal separation factor was 25.

(Organic-inorganic hybrid membrane (M-29))

To 0.83 g of the zeolite (Z-1) which had been dried at 150°C overnight, 5.405 g of hexane was added to disperse the zeolite using an ultrasonic cleaner. Subsequently, 0.509 g of a Silpot main agent was added and stirred well, and the zeolite (Z-1) was further dispersed using an ultrasonic cleaner. Subsequently, 0.05 g of a Silpot curing agent was added and mixed by stirring. A resultant mixed solution was dripped by 1.011 g onto a Teflon (registered trademark) petri dish having an inside diameter of 48 mm, and the Teflon (registered trademark) petri dish was placed in a vacuum dryer. Then, hexane was volatilized, and then the temperature was increased to 80°C and kept for 30 minutes. Subsequently, the Teflon (registered trademark) petri dish was placed in a circulating constant temperature oven, and kept at 80°C for 5 hours to cure the silicone polymer. The matrix polymer constituted by a cured product of the Silpot main agent and the Silpot curing agent is hereinafter referred to as a matrix polymer (P-1).

The membrane was peeled off from the Teflon (registered trademark) petri dish, and thus an organic-inorganic hybrid membrane (M-29) constituted by the matrix polymer (P-1) and the CHA type zeolite (Z-1) was obtained. A membrane thickness was 83 pm. A proportion of the zeolite (Z-1) relative to the total mass of the organic-inorganic hybrid membrane (M-29) was 59.8% by mass. An air permeation amount of the organic-inorganic hybrid membrane (M-29) was measured with the foregoing evaluation method and found to be $1.6 \times 10^6$ [L/($m^2 \cdot h$)]. The organic-inorganic hybrid membrane (M-29) had a defect, and no difference was seen between the $CO_2$ permeability and the $CH_4$ permeability.

(Silicone polymer/PVDF composite membrane (GL-1))

A porous PVDF membrane support layer (Immobilon (registered trademark)-P membrane available from Merck Millipore) having a pore diameter of 0.45 pm was placed on a flat and smooth plate, and a silicone polymer was applied using an applicator having a gap width of 1 mil. The obtained membrane was heated at 100°C for 30 minutes, and thus a gutter layer of the silicone polymer was formed. A composite membrane of the porous PVDF support layer and the silicone polymer is hereinafter referred to as a silicone polymer/PVDF composite membrane (GL-1). A cross section obtained by freeze fracture was observed with a scanning electron microscope, and a membrane thickness of the silicone polymer layer in the silicone polymer/PVDF composite membrane (GL-1) was 2 pm.

(Silicone polymer/PVDF composite membrane (GL-2))

A porous PVDF membrane support layer (Immobilon (registered trademark)-P membrane available from Merck Millipore) having a pore diameter of 0.45 pm was placed on a flat and smooth plate, and a silicone polymer was applied using an auto coater including an applicator having a gap width of 0.5 mil. The obtained membrane was heated at 100°C for 30 minutes, and thus a gutter layer of the silicone polymer was formed. A composite membrane of the porous PVDF support layer and the silicone polymer is hereinafter referred to as a silicone polymer/PVDF composite membrane (GL-2). A cross section obtained by freeze fracture was observed with a scanning electron microscope, and a membrane thickness of the silicone polymer layer in the silicone polymer/PVDF composite membrane (GL-2) was 1 pm.

(Organic-inorganic hybrid membrane composite (M-23))

The zeolite (Z-7) dried at 150°C overnight was weighed by 0.99 g, and mixed with 0.602 g of a silicone rubber precursor (SILPOT™ 184 Silicone Elastomer Base (available from Dow Toray Co., Ltd.), hereinafter sometimes referred to as a Silpot main agent) and 0.063 g of a curing agent (SILPOT™ 184 Silicone Elastomer Curing Agent (available from Dow Toray Co., Ltd.), hereinafter sometimes referred to as a Silpot curing agent) using Awatori Rentaro (available from Thinky Corporation) while being stirred for 14 minutes and then defoamed for 1 minute. Furthermore, 1.348 g of hexane (available from FUJIFILM Wako Pure Chemical Corporation) was added and stirred using a stirrer, and thus a mixed solution for use in membrane formation was prepared. The silicone polymer/PVDF composite membrane (GL-1) was placed on a flat and smooth plate, and the mixed solution was dripped thereon and applied using an applicator having a gap width of 5 mil. After the solvent was removed using a vacuum dryer, the matrix polymer was cured by heating in a constant temperature oven at 100°C for 30 minutes, and thus an organic-inorganic hybrid membrane composite (M-23) was obtained. The matrix polymer constituted by a cured product of the Silpot main agent and the Silpot curing agent is hereinafter referred to as a

matrix polymer (P-1). A solid content concentration of the mixed solution used in membrane formation was 55% by mass, and a contained amount of zeolite in the organic-inorganic hybrid membrane was 59.8% by mass.

A cross section obtained by freeze-fracturing M-23 was observed with a scanning electron microscope, and a part excluding the porous support layer but including the organic-inorganic hybrid membrane and the gutter layer in the organic-inorganic hybrid membrane composite (M-23), that is, the separation relevant layer had a membrane thickness of 17 pm as a result of measurement. An air permeation amount of the organic-inorganic hybrid membrane composite (M-23) was measured with the foregoing evaluation method and found to be 76 L/($m^2$·h).

The organic-inorganic hybrid membrane composite (M-23) had a $CO_2$ permeability of 7400 Barrer and a $CH_4$ permeability of 440 Barrer at 35°C, and had $CO_2$ permeance of 436 GPU at 35°C. A $CO_2$/$CH_4$ ideal separation factor was 17.

An average value of occupation proportions in three fields of view was 22%, which is an index indicating penetration of the silicone polymer into the porous support layer and is calculated according to [total Si area at luminance of 20-245/total Si area at luminance of 0-245].

(Organic-inorganic hybrid membrane composite (M-24))

The zeolite (Z-7) dried at 150°C overnight was weighed by 0.662 g, and mixed with 0.398 g of a Silpot main agent and 0.041 g of a Silpot curing agent using Awatori Rentaro (available from Thinky Corporation) while being stirred for 15 minutes and then defoamed for 1 minute. Furthermore, 0.897 g of hexane (available from FUJIFILM Wako Pure Chemical Corporation) was added and stirred using a stirrer, and thus a mixed solution for use in membrane formation was prepared. The silicone polymer/PVDF composite membrane (GL-2) was placed on a flat and smooth plate, and the mixed solution was dripped thereon and applied using an applicator having a gap width of 5 mil. The solvent was removed using a vacuum dryer, and a release film was further placed thereon, and pressurization was carried out using a small manual hot press, IMC-180C-C available from Imoto machinery Co., Ltd. until a pressure gauge indicated 10 MPa. Then, the matrix polymer was cured by heating at 100°C and keeping the state for 10 minutes, and the release film was removed. Thus, an organic-inorganic hybrid membrane composite (M-24) was obtained. A solid content concentration of the mixed solution used in membrane formation was 55% by mass, and a contained amount of zeolite in the organic-inorganic hybrid membrane was 60.1 % by mass.

A cross section obtained by freeze-fracturing M-24 was observed with a scanning electron microscope, and a part excluding the porous support layer but including the organic-inorganic hybrid membrane and the gutter layer in the organic-inorganic hybrid membrane composite (M-24), that is, the separation relevant layer had a membrane thickness of 25.5 pm as a result of measurement. An air permeation amount of the organic-inorganic hybrid membrane composite (M-24) was measured with the foregoing evaluation method and found to be 0.0 L/($m^2$·h).

The organic-inorganic hybrid membrane composite (M-24) had a $CO_2$ permeability of 6600 Barrer and a $CH_4$ permeability of 430 Barrer at 35°C, and had $CO_2$ permeance of 258 GPU at 35°C. A $CO_2$/$CH_4$ ideal separation factor was 15.

(Organic-inorganic hybrid membrane composite (M-25))

The zeolite (Z-15) dried at 120°C overnight was weighed by 0.662 g, and mixed with 0.422 g of a Silpot main agent and 0.040 g of a Silpot curing agent using Awatori Rentaro (available from Thinky Corporation) while being stirred for 15 minutes and then defoamed for 1 minute. Furthermore, 0.893 g of hexane (available from FUJIFILM Wako Pure Chemical Corporation) was added and stirred using a stirrer, and thus a mixed solution for use in membrane formation was prepared. The silicone polymer/PVDF composite membrane (GL-2) was placed on a flat and smooth plate, and the mixed solution was dripped thereon and applied using an applicator having a gap width of 4 mil. After the solvent was removed using a vacuum dryer, the matrix polymer was cured by pressurization in a manner similar to that for the organic-inorganic hybrid membrane composite (M-24), and thus an organic-inorganic hybrid membrane composite (M-25) was obtained. A solid content concentration of the mixed solution used in membrane formation was 56% by mass, and a contained amount of zeolite in the organic-inorganic hybrid membrane was 58.9% by mass.

A cross section obtained by freeze-fracturing M-25 was observed with a scanning electron microscope, and a part excluding the porous support layer but including the organic-inorganic hybrid membrane and the gutter layer in the organic-inorganic hybrid membrane composite (M-25), that is, the separation relevant layer had a membrane thickness of 24 pm as a result of measurement. An air permeation amount of the organic-inorganic hybrid membrane composite (M-25) was measured with the foregoing evaluation method and found to be 0.0 L/($m^2$·h).

The organic-inorganic hybrid membrane composite (M-25) had a $CO_2$ permeability of 7700 Barrer and a $CH_4$ permeability of 570 Barrer at 35°C, and had $CO_2$ permeance of 322 GPU at 35°C. A $CO_2$/$CH_4$ ideal separation factor was 14.

(Organic-inorganic hybrid membrane composite (M-26))

The zeolite (Z-17) dried at 120°C overnight was weighed by 0.366 g and the zeolite (Z-16) dried at 120°C overnight was weighed by 0.079 g, and those types of zeolite were mixed with 0.174 g of a Silpot main agent and 0.025 g of a Silpot curing agent using Awatori Rentaro (available from Thinky Corporation) while being stirred for 15 minutes and then defoamed for 1 minute. Furthermore, 0.445 g of hexane (available from FUJIFILM Wako Pure Chemical Corporation) was added and stirred using a stirrer, and thus a mixed solution for use in membrane formation was prepared. The silicone polymer/PVDF composite membrane (GL-2) was placed on a flat and smooth plate, and the mixed solution was dripped thereon and applied using an applicator having a gap width of 5 mil. After the solvent was removed using a vacuum dryer, the matrix polymer was cured by pressurization in a manner similar to that for the organic-inorganic hybrid membrane composite (M-24) except that the keeping time was 5 minutes, and thus an organic-inorganic hybrid membrane composite (M-26) was obtained. A solid content concentration of the mixed solution used in membrane formation was 59% by mass, and a contained amount of zeolite in the organic-inorganic hybrid membrane was 69.1% by mass. Among the zeolite, a contained amount of the zeolite (Z-17) was 4.6 times greater than that of the zeolite (Z-16).

A cross section obtained by freeze-fracturing M-26 was observed with a scanning electron microscope, and a part excluding the porous support layer but including the organic-inorganic hybrid membrane and the gutter layer in the organic-inorganic hybrid membrane composite (M-26), that is, the separation relevant layer had a membrane thickness of 28 pm as a result of measurement. An air permeation amount of the organic-inorganic hybrid membrane composite (M-26) was measured with the foregoing evaluation method and found to be 0.0 L/($m^2 \cdot h$).

The organic-inorganic hybrid membrane composite (M-26) had a $CO_2$ permeability of 8700 Barrer and a $CH_4$ permeability of 450 Barrer at 35°C, and had $CO_2$ permeance of 312 GPU at 35°C. A $CO_2/CH_4$ ideal separation factor was 20.

The permeation-separation performance for the mixed gas of $CO_2$ and $CH_4$ of the organic-inorganic hybrid membrane composite (M-26) was evaluated according to the foregoing method. In a pretreatment of the membrane composite before the gas permeation-separation test, a flow rate of carbon dioxide supplied to the separation membrane module 25 was 37 sccm, and pressure was 0.2 MPaG.

As a supply gas, a gas in which 74.7 sccm of $CO_2$ and 78.5 sccm of $CH_4$ were mixed together was supplied at 0.29 MPaG. That is, a $CO_2$ concentration in the supply gas at that time was 48.8%. A composition of the permeated gas was as follows: a $CO_2$ concentration of 91.7% and a $CH_4$ concentration of 8.3%. Moreover, a $CO_2$ concentration in the retentate gas was 48.5%, which was substantially the same as that in the supply gas, and it could be confirmed that the supply gas amount was sufficient.

$CO_2$ permeance was 8.7E-08 mol/($m^2 \cdot s \cdot Pa$) (= 260 GPU) and a permeability was 7300 Barrer in $CO_2/CH_4$ mixed gas permeation of M-26, which were calculated from a permeation amount of each permeated gas and compositions of the supply gas and the permeated gas. $CH_4$ permeance was 4.1E-09 mol/($m^2 \cdot s \cdot Pa$). A separation factor $\alpha_{CO2/CH4}$ obtained from the permeance ratio was 21. By separation of the mixed gas, the separation factor improved slightly more than the ideal separation factor obtained from the permeance ratio measured for a single gas. The permeance was slightly reduced by using the mixed gas but was almost the same level.

The permeation-separation performance for the mixed gas of $CO_2$ and $N_2$ of the organic-inorganic hybrid membrane composite (M-26) was evaluated according to the foregoing method.

The separation performance for the mixed gas of $CO_2$ and $N_2$ of the organic-inorganic hybrid membrane composite (M-26) was evaluated according to the foregoing method. In a pretreatment of the membrane composite before the gas permeation-separation test, a flow rate of carbon dioxide supplied to the separation membrane module 25 was 15 sccm, and pressure was 0.3 MPaG.

As a supply gas, a gas in which 74.7 sccm of $CO_2$ and 74.7 sccm of $N_2$ were mixed together was supplied at 0.30 MPaG. That is, a $CO_2$ concentration in the supply gas at that time was 50.0%. A composition of the permeated gas analyzed by gas chromatography was as follows: a $CO_2$ concentration of 91.4% and an $N_2$ concentration of 8.6%. Moreover, a $CO_2$ concentration in the retentate gas was 50.0%, which was the same as that in the supply gas, and it could be confirmed that the supply gas amount was sufficient.

$CO_2$ permeance was 8.5E-08 mol/($m^2 \cdot s \cdot Pa$) (= 260 GPU) and a permeability was 7100 Barrer in $CO_2/N_2$ mixed gas permeation of the organic-inorganic hybrid membrane composite (M-26), which were calculated from a permeation amount and compositions of the supply gas and the permeated gas. $N_2$ permeance was 4.5E-09 mol/($m^2 \cdot s \cdot Pa$). A separation factor $\alpha_{CO2/N2}$ obtained from the permeance ratio was 19, which was a value that exceeded an upper bound of Robeson in 2008 (Journal of Membrane Science 320 (2008) 390-400), which is regarded as upper limit performance of a polymeric membrane. Results are indicated in Table 3. Note that "A" in Table 3 indicates a mixed gas type.

(Organic-inorganic hybrid membrane composite (M-27))

The zeolite (Z-14) dried at 150°C overnight was weighed by 0.393 g and the zeolite (Z-8) dried at 150°C overnight

was weighed by 0.083 g, and those types of zeolite were mixed with 0.162 g of a Silpot main agent and 0.025 g of a Silpot curing agent using Awatori Rentaro (available from Thinky Corporation) while being stirred for 15 minutes and then defoamed for 1 minute. Furthermore, 0.400 g of hexane (available from FUJIFILM Wako Pure Chemical Corporation) was added and stirred using a stirrer, and thus a mixed solution for use in membrane formation was prepared. The silicone polymer/PVDF composite membrane (GL-2) was placed on a flat and smooth plate, and the mixed solution was dripped thereon and applied using an applicator having a gap width of 5 mil. After the solvent was removed using a vacuum dryer, the matrix polymer was cured by pressurization in a manner similar to that for the organic-inorganic hybrid membrane composite (M-24) except that the keeping time was 5 minutes, and thus an organic-inorganic hybrid membrane composite (M-27) was obtained. A solid content concentration of the mixed solution used in membrane formation was 62% by mass, and a contained amount of zeolite in the organic-inorganic hybrid membrane was 71.8% by mass. Among the zeolite, a contained amount of the zeolite (Z-14) was 4.7 times greater than that of the zeolite (Z-8).

A cross section obtained by freeze-fracturing M-27 was observed with a scanning electron microscope, and a part excluding the porous support layer but including the organic-inorganic hybrid membrane and the gutter layer in the organic-inorganic hybrid membrane composite (M-27), that is, the separation relevant layer had a membrane thickness of 36 pm as a result of measurement. An air permeation amount of the organic-inorganic hybrid membrane composite (M-27) was measured with the foregoing evaluation method and found to be 0.0 L/($m^2 \cdot h$).

The organic-inorganic hybrid membrane composite (M-27) had a $CO_2$ permeability of 12000 Barrer and a $CH_4$ permeability of 440 Barrer at 35°C, and had $CO_2$ permeance of 322 GPU at 35°C. A $CO_2/CH_4$ ideal separation factor was 26.

(Organic-inorganic hybrid membrane composite (M-28))

The zeolite (Z-15) dried at 120°C overnight was weighed by 1.005 g, and mixed with 0.607 g of a Silpot main agent and 0.06 g of a Silpot curing agent using Awatori Rentaro (available from Thinky Corporation) while being stirred for 14 minutes and then defoamed for 1 minute. Furthermore, 1.35 g of hexane (available from FUJIFILM Wako Pure Chemical Corporation) was added and stirred using a stirrer, and thus a mixed solution for use in membrane formation was prepared. The silicone polymer/PVDF composite membrane (GL-1) was attached onto a flat and smooth plate, and placed on a sample stage of a spin coater (Mikasa Co. Ltd., 1H-DX2). The mixed solution was dripped thereon and applied by rotation at 3000 rpm for 30 seconds. After the solvent was removed using a vacuum dryer, the matrix polymer was cured by heating in a constant temperature oven at 100°C for 30 minutes, and thus an organic-inorganic hybrid membrane composite (M-28) was obtained. A solid content concentration of the mixed solution used in membrane formation was 55% by mass, and a contained amount of zeolite in the organic-inorganic hybrid membrane was 60.1 % by mass.

A cross section obtained by freeze-fracturing M-28 was observed with a scanning electron microscope, and a part excluding the porous support layer but including the organic-inorganic hybrid membrane and the gutter layer in the organic-inorganic hybrid membrane composite (M-28), that is, the separation relevant layer had a membrane thickness of 17 pm as a result of measurement. An air permeation amount of the organic-inorganic hybrid membrane composite (M-28) was measured with the foregoing evaluation method and found to be 76 Lj($m^2 \cdot h$).

The organic-inorganic hybrid membrane composite (M-28) had a $CO_2$ permeability of 6400 Barrer and a $CH_4$ permeability of 470 Barrer at 35°C, and had $CO_2$ permeance of 377 GPU at 35°C. A $CO_2/CH_4$ ideal separation factor was 14.

(Organic-inorganic hybrid membrane (M-7))

With 0.126 g of the zeolite (Z-1) which had been dried at 150°C overnight, 2.73 g of hexane was mixed so as to disperse the zeolite using an ultrasonic cleaner. Subsequently, 0.505 g of a Silpot main agent was added and stirred well, and the zeolite (Z-1) was further dispersed using an ultrasonic cleaner. Subsequently, 0.053 g of a Silpot curing agent was added and mixed by stirring. The mixed solution was dripped by 1.0 g onto a Teflon (registered trademark) petri dish having an inside diameter of 30 mm, and the petri dish was placed in a vacuum dryer. Then, hexane was volatilized, and then the temperature was increased to 80°C and kept for 30 minutes. Subsequently, the petri dish was placed in a circulating constant temperature oven, and kept at 80°C for 5 hours to cure the matrix polymer. The cured membrane was peeled off from the petri dish, and thus an organic-inorganic hybrid membrane (M-7) constituted by the matrix polymer (P-1) and the CHA type zeolite (Z-1) was obtained. A proportion of zeolite in the organic-inorganic hybrid membrane (M-7) was 18.4% by mass. A membrane thickness was 96.3 pm, which was calculated from an average at a total of four locations using a digimatic standard outer micrometer (MDC-25M available from Mitsutoyo Corporation). The four locations included a center of the membrane to be measured and three locations that were slightly inner from an edge of the membrane and that had been selected at even intervals on a circumference. An air permeation amount of the organic-inorganic hybrid membrane (M-7) was measured with the foregoing evaluation method and found to be 0.0 L/($m^2 \cdot h$).

A $CO_2$ permeability was 3600 Barrer and a $CH_4$ permeability was 650 Barrer at 35°C, and $CO_2$ permeance was

37 GPU at 35°C. A $CO_2/CH_4$ separation factor was 5.5.

(Organic-inorganic hybrid membrane composite (M-31))

With 0.725 g of the zeolite (Z-17) which had been dried at 150°C overnight, 1.223 g of hexane was mixed so as to disperse the zeolite using an ultrasonic cleaner. Subsequently, 0.994 g of a Silpot main agent was added and stirred well, and the zeolite (Z-17) was further dispersed using an ultrasonic cleaner. Subsequently, 0.102 g of a Silpot curing agent was added and mixed by stirring. The silicone polymer/PVDF composite membrane (GL-2) was placed on a flat and smooth plate, and the mixed solution was dripped thereon and applied using an applicator having a gap width of 3 mil. After the solvent was removed using a vacuum dryer, the matrix polymer was cured by heating in a constant temperature oven at 100°C for 30 minutes, and thus an organic-inorganic hybrid membrane composite (M-31) was obtained. A solid content concentration of the mixed solution used in membrane formation was 60% by mass, and a contained amount of zeolite in the organic-inorganic hybrid membrane was 39.8% by mass.

A cross section of M-31 was observed with a scanning electron microscope, and a part excluding the porous support layer but including the organic-inorganic hybrid membrane and the gutter layer in the organic-inorganic hybrid membrane composite (M-31) had a membrane thickness of 10 pm as a result of measurement. An air permeation amount of the organic-inorganic hybrid membrane composite (M-31) was measured with the foregoing evaluation method, and found to be $7.4 \times 10^4$ L/($m^2 \cdot h$) or more, and no difference was found between the $CO_2$ permeability and the $CH_4$ permeability.

(Organic-inorganic hybrid membrane composite (M-32))

The zeolite (Z-18) dried at 120°C overnight was weighed by 0.387 g and zeolite (Z-15A) dried at 120°C overnight was weighed by 0.081 g, and those types of zeolite were mixed with 0.227 g of a Silpot main agent and 0.026 g of a Silpot curing agent using Awatori Rentaro (available from Thinky Corporation) while being stirred for 15 minutes and then defoamed for 1 minute. Furthermore, 0.392 g of hexane (available from FUJIFILM Wako Pure Chemical Corporation) was added and stirred using a stirrer, and thus a mixed solution for use in membrane formation was prepared. The silicone polymer/PVDF composite membrane (GL-2) was placed on a flat and smooth plate, and the mixed solution was dripped thereon and applied using an applicator having a gap width of 2 mil. After the solvent was removed using a vacuum dryer, the matrix polymer was cured by pressurization in a manner similar to that for the organic-inorganic hybrid membrane composite (M-24), and thus an organic-inorganic hybrid membrane composite (M-32) was obtained. A solid content concentration of the mixed solution used in membrane formation was 64% by mass, and a contained amount of zeolite in the organic-inorganic hybrid membrane was 64.9% by mass. Among the zeolite, a contained amount of the zeolite (Z-18) was 4.8 times greater than that of the zeolite (Z- 15A).

A cross section obtained by freeze-fracturing M-32 was observed with a scanning electron microscope, and a part excluding the porous support layer but including the organic-inorganic hybrid membrane and the gutter layer in the organic-inorganic hybrid membrane composite (M-32), that is, the separation relevant layer had a membrane thickness of 13 pm as a result of measurement. An air permeation amount of the organic-inorganic hybrid membrane composite (M-32) was measured with the foregoing evaluation method and found to be 76 L/($m^2 \cdot h$).

The organic-inorganic hybrid membrane composite (M-32) had a $CO_2$ permeability of 9600 Barrer and a $CH_4$ permeability of 420 Barrer at 35°C, and had $CO_2$ permeance of 737 GPU at 35°C. A $CO_2/CH_4$ ideal separation factor was 23.

(Organic-inorganic hybrid membrane composite (M-33))

The zeolite (Z-19) dried at 120°C overnight was weighed by 0.379 g and zeolite (Z-15A) dried at 120°C overnight was weighed by 0.078 g, and those types of zeolite were mixed with 0.190 g of a Silpot main agent and 0.026 g of a Silpot curing agent using Awatori Rentaro (available from Thinky Corporation) while being stirred for 15 minutes and then defoamed for 1 minute. Furthermore, 0.381 g of hexane (available from FUJIFILM Wako Pure Chemical Corporation) was added and stirred using a stirrer, and thus a mixed solution for use in membrane formation was prepared. The silicone polymer/PVDF composite membrane (GL-2) was placed on a flat and smooth plate, and the mixed solution was dripped thereon and applied using an applicator having a gap width of 2 mil. After the solvent was removed using a vacuum dryer, the matrix polymer was cured by pressurization in a manner similar to that for the organic-inorganic hybrid membrane composite (M-24), and thus an organic-inorganic hybrid membrane composite (M-33) was obtained. A solid content concentration of the mixed solution used in membrane formation was 63% by mass, and a contained amount of zeolite in the organic-inorganic hybrid membrane was 67.9% by mass. Among the zeolite, a contained amount of the zeolite (Z-19) was 4.9 times greater than that of the zeolite (Z- 15A).

A cross section obtained by freeze-fracturing M-33 was observed with a scanning electron microscope, and a

part excluding the porous support layer but including the organic-inorganic hybrid membrane and the gutter layer in the organic-inorganic hybrid membrane composite (M-33), that is, the separation relevant layer had a membrane thickness of 9 pm as a result of measurement. An air permeation amount of the organic-inorganic hybrid membrane composite (M-33) was measured with the foregoing evaluation method and found to be $1.5 \times 10^2$ L/(m$^2$·h).

The organic-inorganic hybrid membrane composite (M-33) had a $CO_2$ permeability of 100000 Barrer and a $CH_4$ permeability of 770 Barrer at 35°C, and had $CO_2$ permeance of 1140 GPU at 35°C. A $CO_2/CH_4$ ideal separation factor was 13.

(Organic-inorganic hybrid membrane composite (M-34))

The zeolite (Z-14) dried at 120°C overnight was weighed by 0.387 g and zeolite (Z-15) dried at 120°C overnight was weighed by 0.079 g, and those types of zeolite were mixed with 0.171 g of a Silpot main agent and 0.015 g of a Silpot curing agent using Awatori Rentaro (available from Thinky Corporation) while being stirred for 15 minutes and then defoamed for 1 minute. Furthermore, 0.381 g of hexane (available from FUJIFILM Wako Pure Chemical Corporation) was added and stirred using a stirrer, and thus a mixed solution for use in membrane formation was prepared. The silicone polymer/PVDF composite membrane (GL-2) was placed on a flat and smooth plate, and the mixed solution was dripped thereon and applied using an applicator having a gap width of 2 mil. After the solvent was removed using a vacuum dryer, the matrix polymer was cured by pressurization in a manner similar to that for the organic-inorganic hybrid membrane composite (M-24), and thus an organic-inorganic hybrid membrane composite (M-34) was obtained. A solid content concentration of the mixed solution used in membrane formation was 63% by mass, and a contained amount of zeolite in the organic-inorganic hybrid membrane was 71.5% by mass. Among the zeolite, a contained amount of the zeolite (Z-14) was 4.9 times greater than that of the zeolite (Z-15).

A cross section obtained by freeze-fracturing M-34 was observed with a scanning electron microscope, and a part excluding the porous support layer but including the organic-inorganic hybrid membrane and the gutter layer in the organic-inorganic hybrid membrane composite (M-34), that is, the separation relevant layer had a membrane thickness of 10 pm as a result of measurement. An air permeation amount of the organic-inorganic hybrid membrane composite (M-34) was measured with the foregoing evaluation method and found to be $1.5 \times 10^2$ L/(m$^2$·h).

The organic-inorganic hybrid membrane composite (M-34) had a $CO_2$ permeability of 11000 Barrer and a $CH_4$ permeability of 680 Barrer at 35°C, and had $CO_2$ permeance of 1100 GPU at 35°C. A $CO_2/CH_4$ ideal separation factor was 16.

An average value of occupation proportions in three fields of view was 24%, which is an index indicating penetration of the silicone polymer into the porous support layer and is calculated according to [total Si area at luminance of 20-245/total Si area at luminance of 0-245].

(Organic-inorganic hybrid membrane composite (M-35))

Poly(sodium 4-styrene sulfonate) (available from Sigma Aldrich) was weighed by 2.26 g and water was weighed by 12.76 g, and those were mixed by stirring, and thus a mixed solution was prepared. A glass plate was placed on a sample stage of a spin coater (Mikasa Co. Ltd., 1H-DX2). The mixed solution was dripped thereon and rotated at 3000 rpm for 40 seconds. Thus, a sacrificial layer was applied. The glass plate with the sacrificial layer was placed in a dryer at 100°C, and dried for 5 minutes. Subsequently, the zeolite (Z-15) dried at 120°C overnight was weighed by 0.329 g, and mixed with 0.216 g of a Silpot main agent and 0.022 g of a Silpot curing agent using Awatori Rentaro (available from Thinky Corporation) while being stirred for 14 minutes and then defoamed for 1 minute. Furthermore, 0.825 g of hexane (available from FUJIFILM Wako Pure Chemical Corporation) was added and stirred using a stirrer, and thus a mixed solution for use in membrane formation was prepared.

The glass plate to which the sacrificial layer had been applied was placed on a sample stage of a spin coater. The mixed solution for use in membrane formation was dripped thereon and applied by rotation at 4000 rpm for 40 seconds. After the solvent was removed using a vacuum dryer, the matrix polymer was cured by heating in a constant temperature oven at 100°C for 30 minutes. The glass plate was placed in a tray filled with water to dissolve the sacrificial layer, and an organic-inorganic hybrid layer floating on the water surface was scooped up using a porous support layer (GL-3) (porous PVDF membrane support layer having a pore diameter of 0.45 pm (Immobilon (registered trademark)-? membrane available from Merck Millipore)). The layers were dried with a dryer at 100°C for 10 minutes, and thus an organic-inorganic hybrid membrane composite (M-35) was obtained. A solid content concentration of the mixed solution used in membrane formation was 41% by mass, and a contained amount of zeolite in the organic-inorganic hybrid membrane was 58.0% by mass.

A cross section obtained by freeze-fracturing M-35 was observed with a scanning electron microscope, and a part excluding the porous support layer from the organic-inorganic hybrid membrane composite (M-35), that is, the organic-inorganic hybrid membrane had a membrane thickness of 6 pm as a result of measurement. An air permeation

amount of the organic-inorganic hybrid membrane composite (M-35) was measured with the foregoing evaluation method and found to be $3.1 \times 10^2$ L/($m^2 \cdot h$).

The organic-inorganic hybrid membrane composite (M-35) had a $CO_2$ permeability of 6300 Barrer and a $CH_4$ permeability of 440 Barrer at 35°C, and had $CO_2$ permeance of 1050 GPU at 35°C. A $CO_2/CH_4$ ideal separation factor was 14.

(Silicone polymer membrane (M-1))

Using a stirrer, 5.4 g of hexane (available from FUJIFILM Wako Pure Chemical Corporation) and 1.04 g of a Silpot main agent were mixed until uniformity was achieved. Then, 0.10 g of a Silpot curing agent was added and mixed well. A resultant mixed solution was dripped by 1.0 g onto a Teflon (registered trademark) petri dish having an inside diameter of 30 mm, and the Teflon (registered trademark) petri dish was placed in a vacuum dryer to volatilize hexane. Then the temperature was increased to 80°C and kept for 30 minutes. Subsequently, the Teflon (registered trademark) petri dish was placed in a circulating constant temperature oven, and kept at 80°C for 5 hours to cure the matrix polymer (P-1). The membrane was peeled off from the Teflon (registered trademark) petri dish, and thus a silicone polymer membrane (M-1) was obtained. A membrane thickness was 135 pm. A glass transition temperature of the silicone polymer membrane (M-1) was measured using DSC and found to be -126°C.

A $CO_2$ permeability of the silicone polymer membrane (M-1) at 35°C was 2500 Barrer, and a $CH_4$ permeability at 35°C was 800 Barrer. A $CO_2/CH_4$ separation factor of the silicone polymer membrane (M-1) was 3.1.

Results for the respective samples are indicated in Table 1 and Table 2.

[Table 1]

| Sample No. | Porous support layer No. | Matrix polymer | | | | inorganic filler | | | | | | |
|---|---|---|---|---|---|---|---|---|---|---|---|---|
| | | No. | Tg (°C) | Permeability (Barrer) | | Larger particles | | | | | | |
| | | | | $CO_2$ | $CH_4$ | No. | Structure | Particle diameter (μm) | Shape | Circularity coefficient | $FD_{Si}$ (T/1000 Å$^3$) | $SiO_2/Al_2O_3$ molar ratio |
| M-22 | - | P-1 | -126 | 2500 | 800 | Z-14 | CHA | 6 | Rugby ball shape | 0.91 | 15.1 | 25 |
| M-19 | - | P-1 | -126 | 2500 | 800 | Z-12 | CHA | 5 | Spherical shape | 0.94 | 15.1 | 23 |
| M-20 | - | P-1 | -126 | 2500 | 800 | Z-12 | CHA | 5 | Spherical shape | 0.94 | 15.1 | 23 |
| M-15 | - | P-1 | -126 | 2500 | 800 | Z-11 | CHA | 2 | Spherical shape | 0.94 | 15.1 | 26 |
| M-16 | - | P-1 | -126 | 2500 | 800 | Z-11 | CHA | 2 | Spherical shape | 0.94 | 15.1 | 26 |
| M-14 | - | P-1 | -126 | 2500 | 800 | Z-11 | CHA | 2 | Spherical shape | 0.94 | 15.1 | 26 |
| M-11 | - | P-1 | -126 | 2500 | 800 | - | - | - | - | - | - | - |
| M-12 | - | P-1 | -126 | 2500 | 800 | - | - | - | - | - | - | - |
| M-21 | - | P-1 | -126 | 2500 | 800 | Z-14 | CHA | 6 | Rugby ball shape | 0.91 | 15.1 | 25 |
| M-13 | - | P-1 | -126 | 2500 | 800 | Z-11 | CHA | 2 | Spherical shape | 0.94 | 15.1 | 26 |
| M-17 | - | P-1 | -126 | 2500 | 800 | Z-10 | CHA | 5 | Cubic shape | 0.77 | 15.1 | 20 |
| M-29 | - | P-1 | -126 | 2500 | 800 | - | - | - | - | - | - | - |
| GL-1 | GL-1 | - | - | - | - | - | - | - | - | - | - | - |
| GL-2 | GL-2 | - | - | - | - | - | - | - | - | - | - | - |
| M-23 | GL-1 | P-1 | -126 | 2500 | 800 | - | - | - | - | - | - | - |
| M-24 | GL-2 | P-1 | -126 | 2500 | 800 | - | - | - | - | - | - | - |
| M-25 | GL-2 | P-1 | -126 | 2500 | 800 | - | - | - | - | - | - | - |
| M-26 | GL-2 | P-1 | -126 | 2500 | 800 | Z-17 | CHA | 2 | Spherical shape | 0.94 | 15.1 | 26 |
| M-27 | GL-2 | P-1 | -126 | 2500 | 800 | Z-14 | CHA | 6 | Rugby ball shape | 0.91 | 15.1 | 25 |
| M-28 | GL-1 | P-1 | -126 | 2500 | 800 | - | - | - | - | - | - | - |
| M-7 | - | P-1 | -126 | 2500 | 800 | - | - | - | - | - | - | - |
| M-31 | GL-2 | P-1 | -126 | 2500 | 800 | Z-17 | CHA | 2 | Spherical shape | 0.94 | 15.1 | 26 |

(continued)

| Sample No. | Porous support layer No. | Matrix polymer | | | | inorganic filler | | | | | | |
|---|---|---|---|---|---|---|---|---|---|---|---|---|
| | | No. | Tg (°C) | Permeability (Barrer) | | Larger particles | | | | | | |
| | | | | $CO_2$ | $CH_4$ | No. | Structure | Particle diameter (μm) | Shape | Circularity coefficient | $FD_{Si}$ (T/1000 Å$^3$) | $SiO_2/Al_2O_3$ molar ratio |
| M-32 | GL-2 | P-1 | -126 | 2500 | 800 | Z-18 | CHA | 6 | Rugby ball shape | 0.91 | 15.1 | 25 |
| M-33 | GL-2 | P-1 | -126 | 2500 | 800 | Z-19 | CHA | 3 | Rugby ball shape | 0.91 | 15.1 | 25 |
| M-34 | GL-2 | P-1 | -126 | 2500 | 800 | Z-14 | CHA | 6 | Rugby ball shape | 0.91 | 15.1 | 25 |
| M-35 | GL-3 | P-1 | -126 | 2500 | 800 | - | - | - | - | - | - | - |
| M-1 | - | P-1 | -126 | 2500 | 800 | - | - | - | - | - | - | - |

Continued from Table 1

| Sample No. | Inorganic filler | | | | | | |
|---|---|---|---|---|---|---|---|
| | Smaller particles | | | | | | Mixing ratio (Mass percentage of smaller particles)* |
| | No. | Structure | Particle diameter (μm) | Circularity coefficient | $FD_{Si}$ (T/1000 Å$^3$) | $SiO_2/Al_2O_3$ molar ratio | |
| M-22 | Z-6 | CHA | 0.7 | 0.87 | 15.1 | 24 | 17 |
| M-19 | Z-6 | CHA | 0.7 | 0.87 | 15.1 | 24 | 17 |
| M-20 | Z-6 | CHA | 0.7 | 0.87 | 15.1 | 24 | 17 |
| M-15 | Z-8 | CHA | 0.8 | 0.92 | 15.1 | 24 | 17 |
| M-16 | Z-8 | CHA | 0.8 | 0.92 | 15.1 | 24 | 17 |
| M-14 | Z-9 | CHA | 0.2 | 0.89 | 15.1 | 25 | 18 |
| M-11 | Z-6 | CHA | 0.7 | 0.87 | 15.1 | 24 | - |
| M-12 | Z-6 | CHA | 0.7 | 0.87 | 15.1 | 24 | - |
| M-21 | - | - | - | - | - | - | - |
| M-13 | - | - | - | - | - | - | - |
| M-17 | Z-9 | CHA | 0.2 | 0.89 | 15.1 | 25 | 18 |
| M-29 | Z-1 | CHA | 0.6 | 0.87 | 15.1 | 25 | - |
| GL-1 | - | - | - | - | - | - | - |
| GL-2 | - | - | - | - | - | - | - |
| M-23 | Z-7 | CHA | 1 | 0.94 | 15.1 | 26 | - |
| M-24 | Z-7 | CHA | 1 | 0.94 | 15.1 | 26 | - |
| M-25 | Z-15 | CHA | 1 | 0.94 | 15.1 | 26 | - |
| M-26 | Z-16 | CHA | 0.8 | 0.92 | 15.1 | 24 | 18 |
| M-27 | Z-8 | CHA | 0.8 | 0.92 | 15.1 | 24 | 17 |
| M-28 | Z-15 | CHA | 1 | 0.94 | 15.1 | 26 | - |
| M-7 | Z-1 | CHA | 0.6 | 0.87 | 15.1 | 25 | - |
| M-31 | - | - | - | - | - | - | - |
| M-32 | Z-20 | CHA | 0.5 | 0.92 | 15.1 | 25 | 17 |
| M-33 | Z-20 | CHA | 0.5 | 0.92 | 15.1 | 25 | 17 |
| M-34 | Z-15 | CHA | 1 | 0.94 | 15.1 | 26 | 17 |
| M-35 | Z-15 | CHA | 1 | 0.94 | 15.1 | 26 | - |
| M-1 | - | - | - | - | - | - | - |
| *; The mixing ratio (mass percentage of smaller particles) is a mass proportion of smaller particles relative to a total mass of an inorganic filler in an organic-inorganic hybrid membrane. | | | | | | | |

[Table 2]

| Sample No. | Mixing method | Organic-inorganic hybrid membrane | | | | | | |
|---|---|---|---|---|---|---|---|---|
| | | Zeolite /membrane mass (% by mass) | Membrane thickness (μm) | Permeability (Barrer) | | Ideal separation factor | Permeance (GPU) | Air permeation amount (L/(m2•h)) |
| | | | | $CO_2$ | $CH_4$ | $CO_2/CH_4$ | | |
| M-22 | Viscous mixing | 69.3 | 47 | 12000 | 340 | 34 | 252 | 0.0 |
| M-19 | Viscous mixing | 69.0 | 53 | 12000 | 450 | 26 | 225 | 0.0 |
| M-20 | Viscous mixing | 69.0 | 64.3 | 17000 | 910 | 19 | 265 | 0.0 |
| M-15 | Viscous mixing | 70.1 | 65 | 14000 | 480 | 28 | 210 | 0.0 |
| M-16 | Viscous mixing | 70.3 | 56 | 13000 | 480 | 27 | 231 | 0.0 |
| M-14 | Viscous mixing | 68.5 | 49 | 12000 | 460 | 27 | 252 | 0.0 |
| M-11 | Viscous mixing | 57.4 | 43 | 11000 | 550 | 20 | 254 | 0.0 |
| M-12 | Viscous mixing | 57.4 | 68 | 16000 | 800 | 20 | 231 | 0.0 |
| M-21 | Viscous mixing | 68.2 | 50 | 17000 | 510 | 34 | 342 | 0.0 |
| M-13 | Viscous mixing | 65.9 | 47 | 11000 | 460 | 24 | 238 | 0.0 |
| M-17 | Viscous mixing | 66.7 | 61 | 13000 | 510 | 25 | 210 | 0.0 |
| M-29 | Mixing by stirring | 59.8 | 83 | - | - | - | - | 1600000 |
| GL-1 | - | - | - | - | - | - | - | 36000 |
| GL-2 | - | - | - | - | - | - | - | - |
| M-23 | Viscous mixing | 59.8 | 17 | 7400 | 440 | 17 | 436 | 76 |
| M-24 | Viscous mixing | 60.1 | 25.5 | 6600 | 430 | 15 | 258 | 0.0 |
| M-25 | Viscous mixing | 58.9 | 24 | 7700 | 570 | 14 | 322 | 0.0 |
| M-26 | Viscous mixing | 69.1 | 28 | 8700 | 450 | 20 | 312 | 0.0 |
| M-27 | Viscous mixing | 71.8 | 36 | 12000 | 440 | 26 | 322 | 0.0 |
| M-28 | Viscous mixing | 60.1 | 17 | 6400 | 470 | 14 | 377 | 76 |
| M-7 | Mixing by stirring | 18.4 | 96.3 | 3600 | 650 | 5.5 | 37 | 0.0 |
| M-31 | Mixing by stirring | 39.8 | 10 | - | - | - | - | >74000 |

(continued)

| Sample No. | Mixing method | Organic-inorganic hybrid membrane | | | | | | | |
|---|---|---|---|---|---|---|---|---|---|
| | | Zeolite /membrane mass (% by mass) | Membrane thickness ($\mu$m) | Permeability (Barrer) | | Ideal separation factor | Permeance (GPU) | Air permeation amount (L/(m2•h)) |
| | | | | $CO_2$ | $CH_4$ | $CO_2/CH_4$ | | |
| M-32 | Viscous mixing | 64.9 | 13 | 9600 | 420 | 23 | 737 | 76 |
| M-33 | Viscous mixing | 67.9 | 9 | 10000 | 770 | 13 | 1140 | 150 |
| M-34 | Viscous mixing | 71.5 | 10 | 11000 | 680 | 16 | 1100 | 150 |
| M-35 | Viscous mixing | 58.0 | 6 | 6300 | 440 | 14 | 1050 | 310 |
| M-1 | - | 0 | 135 | 2500 | 800 | 3.1 | - | - |

[Table 3]

| Mixed gas A | Supply gas $CO_2$ concentration [%] | $CO_2$ concentration of permeated gas [%] | $CO_2$ Permeance [GPU] | $CO_2$ Permeability [Barrer] | Separation factor $\alpha_A$ [-] |
|---|---|---|---|---|---|
| $CO_2/CH_4$ | 48.8 | 91.7 | 260 | 7300 | 21 |
| $CO_2/N_2$ | 50.0 | 91.4 | 260 | 7100 | 19 |

As shown in Table 1 and Table 2, from the results of the samples No. M-23 through 28 and M-32 through35, it has been found that an organic-inorganic hybrid membrane composite including a porous support layer and an organic-inorganic hybrid membrane which is formed on the porous support layer, the organic-inorganic hybrid membrane composite having An air permeation amount of 10000 L/($m^2 \cdot h$) or less, the organic-inorganic hybrid membrane containing a matrix polymer and a gas-selective inorganic filler, a contained amount of the gas-selective inorganic filler relative to the organic-inorganic hybrid membrane being 35% by mass or more, the gas-selective inorganic filler containing zeolite, a framework density in a case where all T elements of the zeolite are silicon being 16.0 T/1000 $Å^3$ or less, and a membrane thickness of the organic-inorganic hybrid membrane being 0.05 pm or more and 50 pm or less, brings about an effect from the viewpoint of providing an organic-inorganic hybrid membrane composite having excellent permeance. Similarly, from the results of the samples No. M-23 through 28 and M-32 through 35, it has been found that an organic-inorganic hybrid membrane composite including a porous support layer and an organic-inorganic hybrid membrane which is formed on the porous support layer, the organic-inorganic hybrid membrane composite having An air permeation amount of 10000 L/($m^2 \cdot h$) or less, the organic-inorganic hybrid membrane containing a matrix polymer and a gas-selective inorganic filler, a contained amount of the gas-selective inorganic filler relative to the organic-inorganic hybrid membrane being 35% by mass or more, the gas-selective inorganic filler containing zeolite, an $SiO_2/Al_2O_3$ molar ratio of the zeolite being 7 or more, and a membrane thickness of the organic-inorganic hybrid membrane being 0.05 pm or more and 50 pm or less, brings about an effect from the viewpoint of providing an organic-inorganic hybrid membrane composite having excellent permeance.

As shown in Table 3, from the result of the mixed gas permeation-separation test of the sample No. M-26, it has been indicated that, in separation of the mixed gas also, a satisfactory separation factor and a satisfactory permeability are achieved, and performance exceeding the Robeson upper bound is exerted.

Meanwhile, as shown in Table 1 and Table 2, $CO_2$ permeance is inferior in the sample No. M-7 because the sample is a self-supported membrane and has a large membrane thickness. In the sample No. M-31, a thin membrane is formed on the porous support layer. However, there are defects in which the air permeation amount is large and no separation performance is imparted. Therefore, no difference was seen between the $CO_2$ permeability and the $CH_4$ permeability, and no separation performance was exhibited. Therefore, in order to realize an organic-inorganic hybrid membrane composite having high permeance and separation performance, it is effective that a thin membrane of the organic-inorganic hybrid membrane having a higher zeolite filling amount is formed on the porous support layer and an air permeation amount is 10000 L/($m^2 \cdot h$) (0°C, equivalent to 1 atmospheric pressure) or less.

The silicone polymer/PVDF composite membrane (sample No. GL-1) which has no organic-inorganic hybrid membrane and is constituted by a porous support layer and a gutter layer exhibited an extremely large air permeation amount. From this, it can be seen that a low air permeation amount of each of the organic-inorganic hybrid membrane composites in the samples No. M-23 through 28 and M-32 through 35 has been derived from a low air permeation amount of the organic-inorganic hybrid membrane.

As indicated in Table 1 and Table 2, from the results of the samples No. M-11 through 16, M-19 through 28, and M-32 through 35, it has been found that an organic-inorganic hybrid membrane containing a matrix polymer and a gas-selective inorganic filler, the inorganic filler containing zeolite, the zeolite including zeolite particles having an average circularity coefficient of 0.80 or more, a contained amount of the zeolite particles being 35% by mass or more, and an air permeation amount of the organic-inorganic hybrid membrane being 10000 [L/m$^2$/h] or less, brings about an effect from the viewpoint of providing an organic-inorganic hybrid gas separation membrane having both a high permeability and a high separation factor. Moreover, from the results of the samples No. M-11 through 16, M-19 through 28, and M-32 through 35, it has been found that an organic-inorganic hybrid membrane composite including a porous support layer and an organic-inorganic hybrid membrane formed on the porous support layer, the organic-inorganic hybrid membrane composite having an air permeation amount of 10000 [L/m$^2$/h] or less, the organic-inorganic hybrid membrane containing a matrix polymer and a gas-selective inorganic filler, the inorganic filler containing zeolite, the zeolite including zeolite particles having an average circularity coefficient of 0.80 or more, and a contained amount of the zeolite particles in the organic-inorganic hybrid membrane being 35% by mass or more, brings about an effect from the viewpoint of providing an organic-inorganic hybrid gas separation membrane composite having both a high permeability and a high separation factor.

As shown in Table 1 and Table 2, from the results of the samples No. M-11 through 16, M-19 through 28, and M-32 through 35, the production method of an organic-inorganic hybrid membrane, including: a kneading step of combining a matrix polymer and a gas-selective inorganic filler in a viscous condition; a diluting step of mixing a solvent with a mixture obtained in the kneading step; a casting step of supporting, on a flat surface or a curved surface, a dispersion liquid obtained in the diluting step; and a curing step of curing the matrix polymer exhibits an effect from the viewpoint of providing a method for producing an organic-inorganic hybrid membrane having an excellent filling factor of the inorganic filler, and the organic-inorganic hybrid membrane produced by the above production method exhibited a large contained amount of zeolite, and also exhibited a high permeability and a high ideal separation factor for $CO_2$ even in a thin membrane having a membrane thickness of 100 pm or less. That is, it has been indicated that, in a case where membrane formation is carried out by a production method including a viscous mixing step, it is possible to obtain a defect-free organic-inorganic hybrid membrane having a high permeability and a high ideal separation factor in a form of thin membrane even while having a high filling factor.

On the other hand, as shown in Table 1 and Table 2, in the sample No. M-29, a zeolite filling amount is equivalent to or less than the samples No. M-11 through 16, M-19 through 28, and M-32 through 35. Nevertheless, an air permeation amount of the membrane is large and a defect is present. Thus, a defect-free membrane is not formed. This has indicated that the organic-inorganic hybrid membrane which is produced by not carrying out viscous mixing of the matrix polymer and zeolite but by stirring and mixing the matrix polymer, zeolite, and the solvent in a conventional method is more likely to generate a defect and to have a lower separation factor.

Furthermore, the organic-inorganic hybrid membranes of the samples No. M-11 through 16, M-19 through 28, and M-32 through 35 produced by the production method including the viscous mixing step had satisfactory membrane formation property and tended to be excellent in permeability. From these results, it seems that it is possible to stably obtain an organic-inorganic hybrid membrane having excellent permeation performance by the production method including the viscous mixing step.

(Organic-inorganic hybrid membrane composite (M-23A): bending-unbending test)

Using a method similar to that for the organic-inorganic hybrid membrane composite (M-23), an organic-inorganic hybrid membrane composite (M-23A) was obtained, and two samples each having a circular shape with a diameter of 21 mm were cut out.

For one of the samples, an air permeation amount was measured with the foregoing evaluation method as it was, i.e., prior to the bending-unbending test, and the air permeation amount was 76 L/(m$^2$·h).

For the other one of the samples, in an air-conditioned room, at room temperature, a bending-unbending test was carried out in which a part where a gas permeates in the permeation test was bent along a curved surface (i.e., a side surface of a tube having a diameter of 6 mm) having a bending radius (radius of curvature) of 3 mm over a period of 5 seconds until the part was 180°, that is, two regions of M-23A obtained by division by the bending were in a state in which the two regions were parallel to each other. After the state was kept for 10 seconds, the sample was unbent over 3 seconds to return the sample substantially to its original shape. Then, an air permeation amount was measured with the foregoing evaluation method and found to be 76 L/(m$^2$·h).

Rates of change in values of a $CO_2$ permeability, a $CH_4$ permeability, and $CO_2$ permeance after bending and

unbending were 19%, 21%, and 13%, respectively, as compared with values before bending. Absolute values of the rates of change in values of the $CO_2$ permeability, the $CH_4$ permeability, and the $CO_2$ permeance were 19%, 21%, and 13%, respectively. A rate of change in a value of a $CO_2/CH_4$ ideal separation factor was less than 1%. In a case where a predetermined rate of change is satisfied in the bending-unbending test, it can be said that processability is excellent, and it is easy to carry out processing of a module. Moreover, it is also easy to carry out membrane formation in the form of hollow fiber.

Industrial Applicability

An aspect of the present invention can be used in any industrial field. The organic-inorganic hybrid membrane composite, the gas separation membrane module, and the gas separation method in accordance with an aspect of the present invention can be suitably used in $CO_2$ separation and recovery such as removal of carbon dioxide from a natural gas, $CO_2$ recovery from a landfill gas, $CO_2$ recovery ($CO_2/N_2$ mixture) from a combustion exhaust gas at a thermal power plant or the like, recovery and purification of hydrogen in various reaction processes in the petroleum refining industry and the chemical industry, production of an oxygen-enriched gas, and the like.

Reference Signs List

1: Organic-inorganic hybrid membrane composite
2: Separation membrane module
3: Gas holder for keeping supply gas warm
4: Pressure gage
5: Mass flow controller
6: Pressure relief valve
7: Baratron pressure gage
8: Gas holder for permeated gas
9: Liquid nitrogen trap
10: Vacuum pump
11, 12, 13, 14, 15: Valve
16: Constant temperature oven
17: Valve (near-side valve)
18: Gas cylinder
19: Gas chromatograph
20: Flow path selection valve
21: Purge (exhaust gas) line
22: Pressure relief valve
23: Mass flow meter
24, 28: Pressure gage
25: Separation membrane module
26: Organic-inorganic hybrid membrane composite
27: Constant temperature oven
29, 30: Valve
31, 32: Mass flow controller
33, 34: Near-side valve
35, 36: Gas cylinder

## Claims

**1.** An organic-inorganic hybrid membrane composite, comprising:

a porous support layer; and
an organic-inorganic hybrid membrane which is formed on the porous support layer,
said organic-inorganic hybrid membrane composite having an air permeation amount of 10000 L/($m^2 \cdot h$) or less,
the organic-inorganic hybrid membrane containing a matrix polymer and a gas-selective inorganic filler,
a contained amount of the gas-selective inorganic filler relative to the organic-inorganic hybrid membrane being

35% by mass or more,
the gas-selective inorganic filler containing zeolite,
a framework density in a case where all T elements of the zeolite are silicon being 16.0 T/1000 Å$^3$ or less, and
a membrane thickness of the organic-inorganic hybrid membrane being 0.05 pm or more and 50 pm or less.

**2.** The organic-inorganic hybrid membrane composite as set forth in claim 1, wherein:
an $SiO_2/Al_2O_3$ molar ratio of the zeolite is 7 or more.

**3.** An organic-inorganic hybrid membrane composite, comprising:

a porous support layer; and
an organic-inorganic hybrid membrane which is formed on the porous support layer,
said organic-inorganic hybrid membrane composite having an air permeation amount of 10000 L/($m^2 \cdot h$) or less,
the organic-inorganic hybrid membrane containing a matrix polymer and a gas-selective inorganic filler,
a contained amount of the gas-selective inorganic filler relative to the organic-inorganic hybrid membrane being 35% by mass or more,
the gas-selective inorganic filler containing zeolite,
an $SiO_2/Al_2O_3$ molar ratio of the zeolite being 7 or more, and
a membrane thickness of the organic-inorganic hybrid membrane being 0.05 pm or more and 50 pm or less.

**4.** The organic-inorganic hybrid membrane composite as set forth in any one of claims 1 through 3, further comprising:
a gutter layer which is disposed between the organic-inorganic hybrid membrane and the porous support layer.

**5.** A gas separation-concentration method which uses an organic-inorganic hybrid membrane composite recited in any one of claims 1 through 3.

**6.** A gas separation membrane module which uses an organic-inorganic hybrid membrane composite recited in any one of claims 1 through 3.

**7.** A method for producing an organic-inorganic hybrid membrane composite recited in any one of claims 1 through 3, said method comprising:

a casting step of applying, to the porous support layer, a dispersion liquid containing the matrix polymer and the gas-selective inorganic filler; and
a curing step of curing the matrix polymer to form the organic-inorganic hybrid membrane on the porous support layer.

**8.** The method as set forth in claim 7, further comprising:
a gutter layer forming step of forming a gutter layer on the porous support layer prior to the curing step.

**9.** The method as set forth in claim 7, further comprising:
a kneading step of combining the matrix polymer and the gas-selective inorganic filler in a viscous condition prior to the curing step.

**10.** An organic-inorganic hybrid membrane, comprising:

a matrix polymer; and
a gas-selective inorganic filler,
the inorganic filler containing zeolite,
the zeolite including zeolite particles having an average circularity coefficient of 0.80 or more,
a contained amount of the zeolite particles being 35% by mass or more, and
an air permeation amount of said organic-inorganic hybrid membrane being 10000 [L/$m^2$/h] or less.

**11.** The organic-inorganic hybrid membrane as set forth in claim 10, wherein:

the inorganic filler has a particle size distribution having at least two peaks; and
an average circularity coefficient of zeolite particles which constitute a peak of a greater particle diameter among the two peaks is 0.80 or more.

**12.** The organic-inorganic hybrid membrane as set forth in claim 11, wherein:

the peak of the greater particle diameter among the two peaks is between particle diameters of 1.5 pm or more and 20 pm or less; and
a peak of a smaller particle diameter among the two peaks is between particle diameters of 0.1 pm or more and 1 pm or less.

**13.** The organic-inorganic hybrid membrane as set forth in claim 11 or 12, wherein:
in a case where a mass of zeolite particles constituting a peak of a smaller particle diameter is set to 1, a mass of zeolite particles constituting the peak of the greater particle diameter among the two peaks is 3 or more.

**14.** The organic-inorganic hybrid membrane as set forth in claim 11 or 12, wherein:
in a case where a particle diameter of a peak of a smaller particle diameter is set to 1, a particle diameter of the peak of the greater particle diameter is 1.5 or more.

**15.** The organic-inorganic hybrid membrane as set forth in claim 10 or 11, wherein:
the matrix polymer has a glass transition temperature of 15°C or less and has a $CO_2$ permeability of 200 Barrer or more at 35°C.

**16.** An organic-inorganic hybrid membrane composite, comprising:

a porous support layer; and
an organic-inorganic hybrid membrane which is formed on the porous support layer,
said organic-inorganic hybrid membrane composite having an air permeation amount of 10000 [$L/m^2/h$] or less,
the organic-inorganic hybrid membrane containing a matrix polymer and a gas-selective inorganic filler,
the inorganic filler containing zeolite,
the zeolite including zeolite particles having an average circularity coefficient of 0.80 or more, and
a contained amount of the zeolite particles in the organic-inorganic hybrid membrane being 35% by mass or more.

**17.** The organic-inorganic hybrid membrane composite as set forth in claim 16, wherein:

the inorganic filler has a particle size distribution having at least two peaks; and
an average circularity coefficient of zeolite particles which constitute a peak of a greater particle diameter among the two peaks is 0.80 or more.

**18.** A gas separation-concentration method which uses an organic-inorganic hybrid membrane recited in claim 10 or 11 or an organic-inorganic hybrid membrane composite recited in claim 16 or 17.

**19.** A gas separation membrane module which uses an organic-inorganic hybrid membrane recited in claim 10 or 11 or an organic-inorganic hybrid membrane composite recited in claim 16 or 17.

**20.** A method for producing an organic-inorganic hybrid membrane recited in claim 10 or 11, said method comprising:
a curing step of curing the matrix polymer while pressurizing a dispersion liquid containing the matrix polymer and the inorganic filler.

**21.** The method as set forth in claim 20, wherein:
in the curing step, pressurization is carried out while warming.

**22.** The method as set forth in claim 20, wherein:

as the inorganic filler, two types of zeolite particles having different average particle diameters are used; and
an average circularity coefficient of zeolite particles having a greater average particle diameter among the two types of zeolite particles is 0.80 or more.

**23.** The method as set forth in claim 22, wherein:
in a case where a mass of zeolite particles having a smaller average particle diameter is set to 1, a mass of the zeolite particles having the greater average particle diameter among the two types of zeolite particles is 3 or more.

**24.** The method as set forth in claim 22, wherein:
in a case where a smaller average particle diameter is set to 1, the greater average particle diameter is 1.5 or more.

**25.** The method as set forth in claim 20, further comprising:
a kneading step of combining the matrix polymer and the inorganic filler in a viscous condition.

**26.** A method for producing an organic-inorganic hybrid membrane, said method comprising:
a kneading step of combining a matrix polymer and a gas-selective inorganic filler in a viscous condition.

**27.** The method as set forth in claim 26, further comprising:
a curing step of curing the matrix polymer under pressurization.

**28.** The method as set forth in claim 27, wherein:
the pressurization in the curing step is carried out while heating.

**29.** The method as set forth in any one of claims 26 through 28, wherein:
by the kneading step, a mixture is obtained which has a viscosity of 30 Pa·s or more and 500 Pa·s or less.

**30.** The method as set forth in any one of claims 26 through 28, wherein:
the matrix polymer has a glass transition temperature of 15°C or less and has a $CO_2$ permeability of 200 Barrer or more at 35°C.

**31.** The method as set forth in any one of claims 26 through 28, wherein:
the inorganic filler contains at least zeolite.

**32.** The method as set forth in claim 31, wherein:
an $SiO_2/Al_2O_3$ molar ratio of the zeolite is 7 or more.

FIG. 1

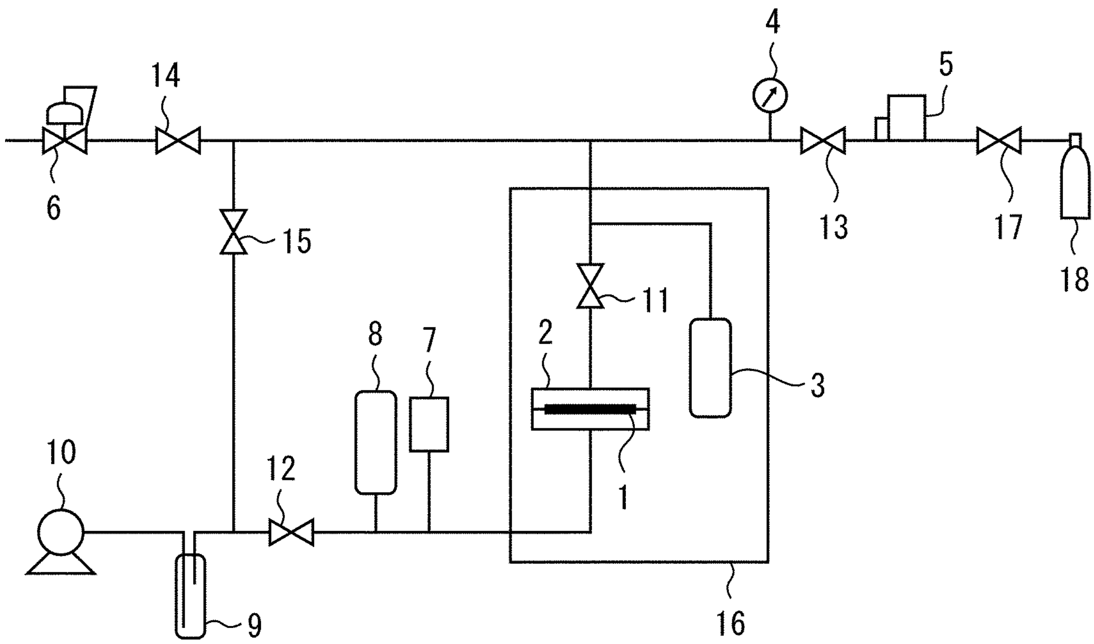

FIG. 2

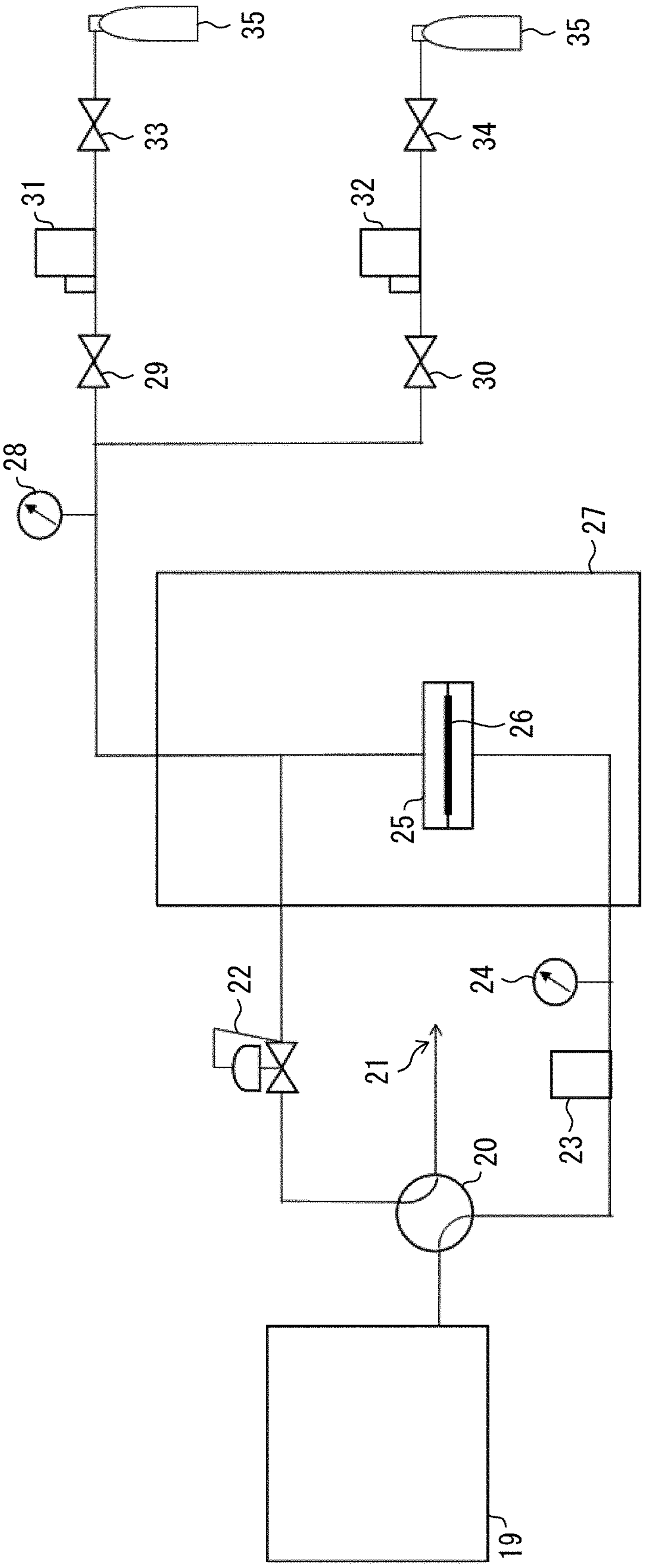

**TRANSLATION**

## INTERNATIONAL SEARCH REPORT

International application No.
**PCT/JP2023/012193**

**A. CLASSIFICATION OF SUBJECT MATTER**

***B01D 67/00***(2006.01)i; ***B01D 69/00***(2006.01)i; ***B01D 69/02***(2006.01)i; ***B01D 69/10***(2006.01)i; ***B01D 69/12***(2006.01)i; ***B01D 71/02***(2006.01)i; ***B01D 71/06***(2006.01)i; ***B32B 5/18***(2006.01)i; ***B32B 27/20***(2006.01)i; ***C01B 39/40***(2006.01)i; ***C01B 39/46***(2006.01)i; ***C01B 39/48***(2006.01)i; ***C08J 5/22***(2006.01)i; ***B01D 53/22***(2006.01)i
FI: B01D67/00; B01D53/22; B01D69/02; B01D69/10; B01D69/12; C08J5/22 101; C01B39/40; B32B5/18; B32B27/20 Z; B01D69/00; C01B39/48; C01B39/46; C08J5/22 CEZ; B01D71/02 500; B01D71/06

According to International Patent Classification (IPC) or to both national classification and IPC

**B. FIELDS SEARCHED**

Minimum documentation searched (classification system followed by classification symbols)

B01D67/00; B01D69/00; B01D69/02; B01D69/10; B01D69/12; B01D71/02; B01D71/06; B32B5/18; B32B27/20; C01B39/40; C01B39/46; C01B39/48; C08J5/22; B01D53/22

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y<br>A | JP 2019-537506 A (KYOTO UNIVERSITY) 26 December 2019 (2019-12-26)<br>claims, paragraphs [0016]-[0017], [0023]-[0026], examples | 1-9, 26, 29-32<br>10-25, 27-28 |
| Y<br>A | JP 2019-202314 A (MITSUBISHI CHEM CORP) 28 November 2019 (2019-11-28)<br>claims, paragraphs [0023], [0031], [0044] | 1-9<br>10-25 |
| Y | WO 2019/188962 A1 (NGK INSULATORS, LTD.) 03 October 2019 (2019-10-03)<br>paragraphs [0011]-[0013], fig. 1 | 4, 8 |
| Y | JP 2000-348713 A (MATSUSHITA ELECTRIC IND CO LTD) 15 December 2000 (2000-12-15)<br>claims, paragraphs [0005]-[0006] | 9, 26, 29-32 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **18 May 2023** | **30 May 2023** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (January 2015)

TRANSLATION

**INTERNATIONAL SEARCH REPORT**

International application No.
**PCT/JP2023/012193**

**C. DOCUMENTS CONSIDERED TO BE RELEVANT**

| Category* | Citation of document, with indication, where appropriate, of the relevant passages | Relevant to claim No. |
|---|---|---|
| Y<br>A | JP 2008-520432 A (CHEVRON U.S.A. INC.) 19 June 2008 (2008-06-19)<br>claims, paragraphs [0039]-[0040] | 26, 29-32<br>27-28 |
| Y<br>A | JP 2007-520334 A (CHEVRON U.S.A. INC.) 26 July 2007 (2007-07-26)<br>claims, paragraphs [0040]-[0041] | 26, 29-32<br>27-28 |
| A | JP 2018-130719 A (MITSUBISHI CHEM CORP) 23 August 2018 (2018-08-23) | 1-32 |
| A | US 6248682 B1 (WORCESTER POLYTECHNIC INSTITUTE) 19 June 2001 (2001-06-19) | 1-32 |
| P, X | JP 2022-151869 A (MITSUBISHI CHEM CORP) 07 October 2022 (2022-10-07)<br>claims, paragraphs [0027], [0031]-[0033], examples | 1-32 |

Form PCT/ISA/210 (second sheet) (January 2015)

**TRANSLATION**

**INTERNATIONAL SEARCH REPORT**

International application No.
**PCT/JP2023/012193**

**Box No. III Observations where unity of invention is lacking (Continuation of item 3 of first sheet)**

This International Searching Authority found multiple inventions in this international application, as follows:

(Invention 1) Claims 1-2 and 4-6

Claim 1 has the technical feature of an "organic-inorganic hybrid film complex," wherein "the framework density is at most 16.0 T/1,000Å$^3$ when all T elements of zeolite are silicon," and claim 1 and claims 2 and 4-6 dependent on claim 1 are classified as invention 1.

(Invention 2) Claim 3

Claim 3 shares, with claim 1, the common technical feature of an "organic-inorganic hybrid film complex," comprising a "porous support layer, and an organic-inorganic hybrid film formed on the porous support layer, wherein the amount of air permeated is at most 10,000 L/(m$^2$·h), the organic-inorganic hybrid film includes a matrix resin and a gas-selective inorganic filler, the content of the gas-selective inorganic filler to the organic-inorganic hybrid film is 35 mass% or more, and the gas-selective inorganic filler contains zeolite, and the film thickness of the organic-inorganic hybrid film is 0.05 μm to 50 μm." However, said technical feature does not make a contribution over the prior art in light of the disclosure (claims, paragraphs [0016], [0017], [0023]-[0026], examples) of JP 2019-537506, and thus cannot be said to be a special technical feature. Furthermore, there are no other same or corresponding special technical features between claim 3 and claim 1. Also, claim 3 is not dependent on claim 1. In addition, claim 3 is not substantially identical or equivalent to any of the claims classified as invention 1. Therefore, claim 3 cannot be classified as invention 1.

In addition, claim 3 has the special technical feature in that "zeolite has a molar ratio of $SiO_2/Al_2O_3$ of at least 7," and is thus classified as invention 2.

(Invention 3) Claims 7-9

Claim 7 is a "method for producing an organic-inorganic hybrid film complex," and is an invention different in category from claims 1 and 3, and there are no other same or corresponding special technical features between claim 7 and claims 1 and 3. In addition, claim 7 is not substantially identical or similarly closely related to any of the claims classified as inventions 1 and 3. Therefore, claim 7 cannot be classified as either invention 1 or 2.

In addition, claim 7 and claims 8-9 dependent on claim 7 have the special technical feature of comprising a "casting step of applying a dispersion containing the matrix resin and a gas-selective inorganic filler on the porous support layer, and a curing step of curing the matrix resin and forming the organic-inorganic hybrid film on the porous support layer," and are thus classified as invention 3.

(Invention 4) Claims 10-19

Claim 10 shares, with claims 1 and 3, the common technical feature of an "organic-inorganic hybrid film complex," comprising a "matrix resin and a gas-selective inorganic filler, wherein the inorganic filler contains zeolite, the content of the zeolite particles is 35 mass% or more, and the amount of air permeated is at most 10,000 [L/m$^2$/h]." However, said technical feature does not make a contribution over the prior art in light of the disclosure (claims, paragraphs [0016], [0017], [0024]-[0026], examples) of JP 2019-537506, and thus cannot be said to be a special technical feature. Furthermore, claim 10 is different in category from claim 7. Also, there are no other same or corresponding special technical features between claim 10 and claims 1 and 3. In addition, claim 10 is not dependent on claims 1 and 3. Furthermore, claim 10 is not substantially identical or similarly closely related to any of the claims classified as inventions 1-3. Thus, claim 10 cannot be classified as inventions 1-3.

In addition, claim 10 has the special technical feature in that "zeolite includes zeolite particles having an average circularity coefficient of at least 0.80," and thus claim 10, claims 11-15 dependent on claim 10, and claims 16-19 having the same special technical feature are classified as invention 4.

(Invention 5) Claims 20-25

Claim 20 is a "method for producing an organic-inorganic hybrid film complex," and is an invention different in category from claims 1, 3, and 10, and there are no other same or corresponding special technical features between claim 20 and claims 1, 3, 7, and 10. Furthermore, claim 20 is not substantially identical or similarly closely related to any of the claims classified as inventions 1-4. Thus, claim 20 cannot be classified as inventions 1-4.

In addition, claim 20 and claims 21-25 dependent on claim 20 have the special technical feature of "comprising a curing step of curing the matrix resin while pressurizing the matrix resin and a dispersion containing the inorganic filler," and are thus classified as invention 5.

(Invention 6) Claims 26-32

Form PCT/ISA/210 (continuation of first sheet) (January 2015)

**TRANSLATION**

**INTERNATIONAL SEARCH REPORT**

International application No.
**PCT/JP2023/012193**

**Box No. III Observations where unity of invention is lacking (Continuation of item 3 of first sheet)**

Claim 26 is a "method for producing an organic-inorganic hybrid film complex," and is an invention different in category from claims 1, 3, and 10, and there are no other same or corresponding special technical features between claim 26 and claims 1, 3, 7, 10, and 20. In addition, claim 26 is not dependent on claims 1, 3, 7, 10, and 20. Furthermore, claim 26 is not substantially identical or similarly closely related to any of the claims classified as inventions 1-5. Thus, claim 26 cannot be classified as inventions 1-5.

In addition, claim 26 has the special technical feature of a "method for producing an organic-inorganic hybrid film complex" comprising "a kneading step of solid-kneading a matrix resin and a gas-selective inorganic filler," and thus claim 26 and claims 27-32 dependent on claim 26 are classified as invention 6.

1. ☑ As all required additional search fees were timely paid by the applicant, this international search report covers all searchable claims.

2. ☐ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**

☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☑ No protest accompanied the payment of additional search fees.

TRANSLATION

**INTERNATIONAL SEARCH REPORT**
**Information on patent family members**

International application No.
**PCT/JP2023/012193**

| Patent document cited in search report | Publication date (day/month/year) | Patent family member(s) | Publication date (day/month/year) |
|---|---|---|---|
| JP 2019-537506 A | 26 December 2019 | US 2019/0321787 A1<br>claims, paragraphs [0039]-[0040], [0048]-[0049], examples<br>WO 2018/084264 A1 | |
| JP 2019-202314 A | 28 November 2019 | (Family: none) | |
| WO 2019/188962 A1 | 03 October 2019 | US 2020/0368695 A1<br>paragraphs [0013]-[0015], fig. 1<br>EP 3778002 A1<br>CN 111886067 A | |
| JP 2000-348713 A | 15 December 2000 | (Family: none) | |
| JP 2008-520432 A | 19 June 2008 | US 2006/0107830 A1<br>claims, paragraphs [0039]-[0040]<br>WO 2006/055817 A2<br>CN 101084052 A | |
| JP 2007-520334 A | 26 July 2007 | US 2005/0139066 A1<br>claims, paragraphs [0045]-[0047]<br>GB 2437371 A<br>WO 2005/065112 A2<br>CN 1898008 A | |
| JP 2018-130719 A | 23 August 2018 | (Family: none) | |
| US 6248682 B1 | 19 June 2001 | DE 19853971 A1 | |
| JP 2022-151869 A | 07 October 2022 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2017066364 A
- JP 2016104486 A

### Non-patent literature cited in the description


- *Progress in Materials Science*, 2019, vol. 102, 222-295
- *Journal of Molecular Structure*, 2005, vol. 739, 87-98
- *Journal of Polymer Science: Part B: Polymer Physics*, 2000, vol. 38, 2051-2062
- **ROBESON**. *Journal of Membrane Science*, 2008, vol. 320, 390-400